# EUROPEAN PATENT APPLICATION

(11) **EP 1 511 342 A1**
(43) Date of publication of application: **02.03.2005**
(21) Application number: 03730844.2
(22) Date of filing: 05.06.2003
(51) Int. Cl.: H04Q 7/38

(54) **SERVER, MOBILE COMMUNICATION SYSTEM, POSITIONAL INFORMATION MANAGING METHOD, RADIO BASE STATION, MOBILE STATION, METHOD FOR CALLING IN MOBILE COMMUNICATION SYSTEM, AND MOBILE COMMUNICATION METHOD**

(30) Priority: 05.06.2002 JP 2002164816; 12.06.2002 JP 2002171977
(71) Applicant: NTT DoCoMo, Inc., Tokyo 100-6150 (JP)
(72) Inventor: MOTEGI, Masayuki, NTT DoCoMo, Inc., Chioyda-ku, Tokyo 100-6150 (JP); KAYAMA, Hidetoshi, NTT DoCoMo, Inc., Chiyoda-ku, Tokyo 100-6150 (JP); UMEDA, Narumi, NTT DoCoMo, Inc., Chiyoda-ku, Tokyo 100-6150 (JP)
(74) Representative: GROSSE BOCKHORNI SCHUMACHER
(86) International application number: PCT/JP2003/007141
(87) International publication number: WO 2003/105519

(57) **Abstract**

An object is to implement smooth execution of management of location information of a mobile station according to states of the mobile station varying with time. Based on a notification of transition into a sleep state from the mobile station, transmitted upon a timeout of a sleep state determination timer with neither packet transmission nor reception at the mobile station, it is determined that the mobile station has moved into the sleep state, and control processing in the link layer is executed (S12) (the control processing in the link layer carried out when the mobile station moves between cells). Thereafter, based on a notification of transition into an idle state from the mobile station, which is transmitted upon a timeout of an idle state determination timer with neither packet transmission nor reception at the mobile station, it is determined that the mobile station has moved into the idle state, and control processing in the network layer is executed (S14) (the control processing in the network layer carried out when the mobile station changes its location registration area). In this way, the control processings are executed based on the states of the mobile station according to durations in which neither packet transmission nor reception is conducted at the mobile station.

## Description

### Technical Field

The present invention relates to a server, a mobile communication system, a location information managing method, a base station, a mobile station, and a paging method and a mobile communication method in the mobile communication system.

### Background Art

Assuming a packet communication model like Web browsing, the packet communication model involves two durations, a duration in which a mobile station continuously downloads packets and a duration in which the mobile station is in a state of browsing pages after the download (page browsing duration). Noting this characteristic, a technique of effecting battery saving based on intermittent reception for the mobile station to intermittently receive a control signal from a base station in the page browsing duration is suggested in "IN2001-198 Adaptive battery saving control system in multimedia radio packet communication (The Institute of Electronics, Information and Communication Engineers and Information Networks Group, published March, 2002)". In this technique, a "battery saving mode" is newly defined as a state of implementing battery saving at the mobile station in the page browsing duration.

On the other hand, delays permitted for respective packets are prescribed according to communication forms of packet communications. For this reason, the timing for the mobile station to move into the battery saving mode and the period of intermittent reception of the control signal at the mobile station are set according to the permitted delays thus prescribed.

In the conventional technology described above, however, there are generally two standby states, the battery saving mode and the idle mode. If these were mounted on the conventional mobile communication system, which generally had only two states of a communication state and a standby state, the standby state including only one kind, a location information managing server was allowed only to manage the location information of the mobile station (management of movement) in either of the communication state and the standby state.

Even if the location information managing server is able to implement a configuration for management of location information of the mobile station in a plurality of different standby states in an identical layer, the location information managing server would have to doubly manage location registration areas in correspondence to the plurality of standby states, which would place an excessive load on the location information managing server.

The present invention has been accomplished in order to solve the above problem and an object of the present invention is to provide a server, a mobile communication system, a location information managing method, a base station, a mobile station, and a paging method and a mobile communication method in the mobile communication system that can implement smooth execution of management of location information of the mobile station in a plurality of states of the mobile station varying with time.

### Disclosure of the Invention

In order to achieve the above object, a server according to the present invention is a server, together with a plurality of mobile stations and with a plurality of base stations connected to a network, constituting a mobile communication system, being connected to the network, and being configured to manage a paging area formed by a collection of cells established by the base stations and location information of the mobile stations, the server comprising: determining means for determining as a state of a mobile station as mentioned, a state according to a duration in which neither packet transmission nor reception is conducted between the mobile station and a base station within the cell established thereby, out of a plurality of states including a sleep state or an idle state; and setting means for setting for the mobile station both or either of a paging period of the mobile station and a reception timing of intermittent reception by the mobile station, according to the state acquired by the determination.

A mobile communication system according to the present invention is a mobile communication system comprising a plurality of mobile stations, a plurality of base stations connected to a network, and a server connected to the network and configured to manage a paging area formed by a collection of cells established by the base stations and location information of the mobile stations, wherein the server comprises: determining means for determining as a state of a mobile station as mentioned, a state according to a duration in which neither packet transmission nor reception is conducted between the mobile station and a base station within the cell established thereby, out of a plurality of states including a sleep state or an idle state; and setting means for setting for the mobile station both or either of a paging period of the mobile station and a reception timing of intermittent reception by the mobile station, according to the state acquired by the determination.

Furthermore, a location information managing method according to the present invention is a location information managing method in a server, together with a plurality of mobile stations and with a plurality of base stations connected to a network, constituting a mobile communication system, being connected to the network, and being configured to manage a paging area formed by a collection of cells established by the base stations and location information of the mobile stations, the location information managing method comprising the steps of: determining as a state of a mobile station as mentioned, a state according to a duration in which neither packet transmission nor reception is conducted between the mobile station and a base station within the cell established thereby, out of a plurality of states including a sleep state or an idle state; and setting for the mobile station both or either of a paging period of the mobile station and a reception timing of intermittent reception by the mobile station, according to the state acquired by the determination.

According to these aspects of the invention, the server determines as a state of a mobile station, a state according to a duration in which neither packet transmission nor reception is conducted between the mobile station and the base station in the cell, out of the plurality of states including the sleep state or the idle state, and sets for the mobile station both or either of the paging period of the mobile station and the reception timing of intermittent reception by the mobile station, according to the state acquired by the determination. Therefore, it is feasible to smoothly execute the management of location information of the mobile stations, according to the plurality of states of the mobile stations varying with time.

The above server is preferably configured as follows: the server further comprises measuring-retaining means for measuring both or either of the number of mobile stations located in each paging area and having moved into the said state, and paging traffics at respective reception timings of a paging channel in each paging area as mentioned, and for retaining measurement values thus measured, wherein, where the determining means determines that a state of a mobile station is the sleep state, the setting means sets for the mobile station both or either of the paging period of the mobile station and the reception timing of intermittent reception by the mobile station, according to the retained measurement values.

Furthermore, the above server is preferably configured as follows: it further comprises area change detecting means for detecting a change of a location registration area on which a mobile station is under location registration; and paging group assignment controlling means for, when the area change detecting means detects a change of the location registration area of the mobile station, selecting one paging group out of a plurality of paging groups categorized by respective timings of receiving a paging signal for the mobile stations, based on predetermined information, and for assigning the mobile station the selected paging group.

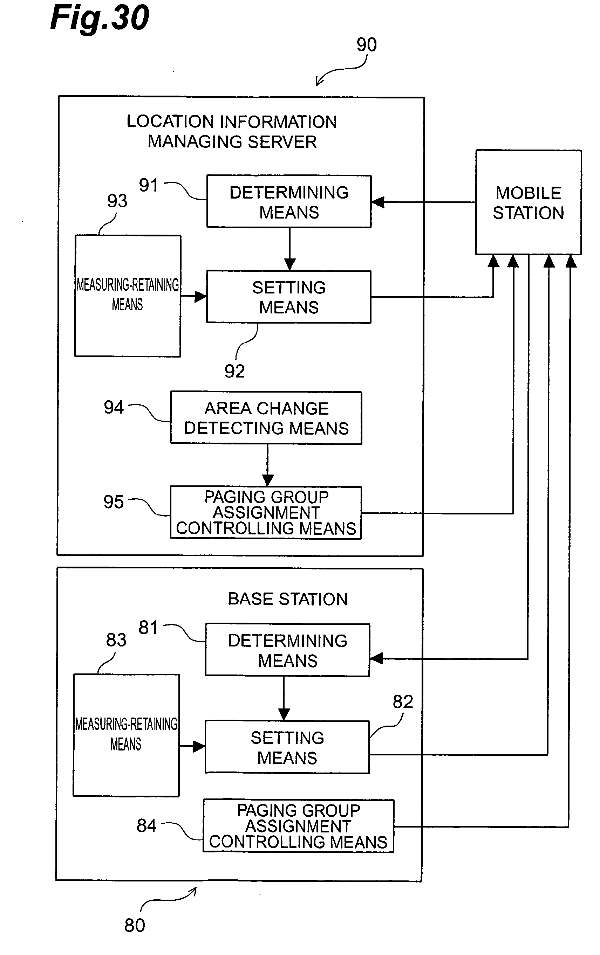

For example, the server according to the present invention is preferably configured as shown in Fig. 30. Namely, server 90 comprises the above determining means 91 and setting means 92, the determining means 91 determines a state according to the duration in which neither packet transmission nor reception is conducted between the mobile station and the base station in the cell, out of the plurality of states including the sleep state or the idle state, as a state of the mobile station, and the setting means 92 sets for the mobile station both or either of the paging period of the mobile station and the reception timing of intermittent reception by the mobile station, according to the state acquired by the determination.

In this case, preferably, server 90 further comprises measurement-retaining means 93 for measuring both or either of the number of mobile stations located in each paging area and having moved into the mentioned state, and paging traffics at the receptive reception timings of the paging channel in each paging area, and for retaining the measurement values thus measured, and setting means 92 sets for the mobile station both or either of the paging period of the mobile station and the reception timing of intermittent reception by the mobile station, according to the measurement values retained by the measurement-retaining means 91, when the state of the mobile station is determined to be the sleep state.

Server 90 is also preferably configured as follows: it further comprises area change detecting means 94 and paging group assignment controlling means 95; when the area change detecting means 94 detects a change of the location registration area on which the mobile station is under location registration, the paging group assignment controlling means 95 selects one paging group on the basis of predetermined information, out of a plurality of paging groups categorized by respective timings of receiving a paging signal for the mobile stations, and assigns the mobile station the selected paging group.

Base station 80 can comprise a configuration similar to server 90 as described above (provided that base station 80 excludes the configuration corresponding to the area change detecting means 94, because there is only one area of base station 80). In this case, burden sharing of execution can be implemented, for example, by letting base station 80 perform the control in the link layer and letting server 90 perform the control in the network layer.

Incidentally, the invention also includes the following aspect about control in the case where the state of the mobile station is determined to be the sleep state.

In order to achieve the above object, a paging method in a mobile communication system according to the present invention is a paging method in a mobile communication system comprising a base station, and a plurality of mobile stations capable of transmitting or receiving a packet to or from the base station in a cell established by the base station, in which the mobile stations are configured to move into a sleep mode of periodically receiving a signal from the base station, in a case where neither packet transmission nor reception is conducted during a predetermined duration, and in which the base station has a paging channel capable of specifying a mobile station and notifying the mobile station of arrival of a packet or capable of transmitting an incoming packet addressed to a mobile station having moved into the sleep mode, and can intermittently transmit the paging channel in a predetermined period, wherein the sleep mode comprises a plurality of sleep states according to durations in which neither packet transmission nor reception is conducted, and it is possible to set paging periods corresponding to the respective sleep states and reception timings of intermittent reception by the mobile stations, wherein the base station instructs a mobile station to change both or either of a paging period and a reception timing, according to both or either of the number of mobile stations existing in the cell and having moved into the sleep mode, and paging traffic of the paging channel, in a predetermined case, and wherein the mobile station performs intermittent reception in the paging period and at the reception timing based on the change instruction.

The invention associated with the above paging method in the mobile communication system can also be described from the aspect of the invention associated with the mobile communication system as described below. Namely, a mobile communication system according to the present invention is a mobile communication system comprising a base station, and a plurality of mobile stations capable of transmitting or receiving a packet to or from the base station in a cell established by the base station, in which the mobile station moves into a sleep mode of periodically receiving a signal from the base station, in a case where neither packet transmission nor reception is conducted during a predetermined duration, and in which the base station has a paging channel capable of specifying a mobile station and notifying the mobile station of arrival of a packet or capable of transmitting an incoming packet addressed to a mobile station having moved into the sleep mode, and can intermittently transmit the paging channel in a predetermined period, wherein the sleep mode comprises a plurality of sleep states according to durations in which neither packet transmission nor reception is conducted, and it is possible to set paging periods corresponding to the respective sleep states and reception timings of intermittent reception by the mobile stations, wherein the base station comprises: measuring-retaining means for measuring both or either of the number of mobile stations located in the cell and having moved into the sleep mode, and paging traffic of the paging channel, and for retaining measurement values thus measured; and change instructing means for instructing a mobile station to change both or either of a paging period and a reception timing, according to the measurement values retained, in a predetermined case, and wherein the mobile stations comprise: intermittent reception controlling means for performing intermittent reception in the paging period and at the reception timing based on the change instruction.

The above predetermined case is a case where the mobile station newly moves into the sleep mode, or a case where the mobile station previously having moved into the sleep mode newly moves into the cell, or a case where the mobile station previously having moved into the sleep mode changes the sleep state, or an arbitrary case determined by the base station.

A base station according to the present invention is a base station, together with a plurality of mobile stations, constituting a mobile communication system, the base station constituting the mobile communication system in which the mobile stations are configured so that a mobile station in a cell established by the base station transmits or receives a packet to or from the base station and so that, when neither packet transmission nor reception is conducted during a predetermined duration, a mobile station moves into a sleep mode of periodically receiving a signal from the base station and in which the base station has a paging channel capable of specifying a mobile station and notifying the mobile station of arrival of a packet or capable of transmitting an incoming packet addressed to a mobile station having moved in the sleep mode and can intermittently transmit the paging channel in a predetermined period, wherein the sleep mode comprises a plurality of sleep states according to durations in which neither packet transmission nor reception is conducted, and it is possible to set paging periods corresponding to the respective sleep states and reception timings of intermittent reception by the mobile stations, the base station comprising: measuring-retaining means for measuring both or either of the number of mobile stations located in the cell and having moved into the sleep mode, and paging traffic of the paging channel, and for retaining measurement values thus measured; and change instructing means for instructing a mobile station to change both or either of a paging period and a reception timing, according to the retained measurement values, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station.

In the conventional system, under an environment in which a very large number of mobile stations were in the standby state, paging traffic to be transmitted by the paging channel increased to bear hard on the paging channel, which raised the risk of occurrence of call loss. Since the reception timings of intermittent reception by the mobile stations were predetermined regardless of the paging traffic, the traffic might be congested at a specific reception timing. In the conventional technology about PHS, a group number for standby of each mobile station was preliminarily determined by a telephone number, and it was thus conceivable that only a specific group was congested with heavy traffic in a specific cell. In this case, there arose the problem of call loss of a paging call. The periods of intermittent reception by the mobile stations were equal among all the groups, independent of the traffic, which could result in failure in effective battery saving. In the technology concerning Bluetooth, a master continuously transmits N_{B} packets per period for maintenance of synchronization, to slaves potentially connected in Park Mode, which could raise the problem of decrease of channel efficiency. Namely, the fundamental period must be set with intervals of time not less than N_{B}×Δ_{B} (Δ_{B} is a transmission time interval of each packet) at the minimum, and it was difficult to set an extremely short fundamental period. In the Park Mode, a slave off a connected state to the master for a long time is allowed to perform thinning-out reception of control packets from the Beacon channel transmitted from the master, which enabled effective battery saving. However, in the case of systems containing a very large number of mobile stations in a long standby state like the cellular systems, there could arise the problem that fundamental periods for a number of mobile stations were concentrated at a long period.

According to the present invention, however, the base station is configured to instruct the mobile station to change both or either of the paging period and the reception timing, according to both or either of the number of mobile stations located in the cell and having moved into the sleep mode, and the paging traffic of the paging channel, in the predetermined case, and the mobile station performs intermittent reception in the paging period and at the reception timing based on the change instruction, which can circumvent the problem of congestion of paging traffic at a specific reception timing and which can also simultaneously present the effect of smoothing the paging traffics at the respective reception timings. It also becomes feasible to effectively utilize the channel.

Since it is also feasible to perform the change of the paging period at the same time as the change of the reception timing, it becomes feasible to implement more effective battery saving than before.

Furthermore, the conventional technology had the problem of concentration of more mobile stations at a long paging period as the non-communication duration of each mobile station increased. In contrast, the present invention takes the traffic according to the paging period into account and thus can circumvent the problem of concentration of mobile stations at a specific paging period, and enable smoothing of traffic among a plurality of paging periods.

In order to achieve the above object, a paging method in a mobile communication system according to the present invention is a paging method in a mobile communication system comprising a plurality of mobile stations, a plurality of base stations connected to a network, and a server connected to the network and configured to manage a paging area formed by a collection of cells established by the base stations and location information of the mobile stations, in which the mobile stations are configured to move into a sleep mode of periodically receiving a signal from the base station, in a case where neither packet transmission nor reception is conducted during a predetermined duration, and in which the base stations have a paging channel capable of specifying a mobile station and notifying the mobile station of arrival of a packet or capable of transmitting an incoming packet addressed to a mobile station having moved into the sleep mode, and can intermittently transmit the paging channel in a predetermined period, wherein the sleep mode comprises a plurality of sleep states according to durations in which neither packet transmission nor reception is conducted, a plurality of paging periods are prepared corresponding to the respective sleep states, and it is possible to set paging areas corresponding to the respective paging periods and reception timings of intermittent reception by the mobile stations, wherein the server instructs a mobile station to change both or either of a paging period and a reception timing, according to both or either of the number of mobile stations located in each paging area and having moved into the sleep mode, and paging traffics at respective reception timings of the paging channel in each paging area, in a predetermined case, and wherein the mobile station performs intermittent reception in the paging period and at the reception timing based on the change instruction.

The invention associated with the above paging method in the mobile communication system can also be described from the aspect of the invention associated with the mobile communication system as follows. Namely, a mobile communication system according to the present invention is a mobile communication system comprising a plurality of mobile stations, a plurality of base stations connected to a network, and a server connected to the network and configured to manage a paging area formed by a collection of cells established by the base stations and location information of the mobile stations, in which the mobile stations are configured to move into a sleep mode of periodically receiving a signal from the base station, in a case where neither packet transmission nor reception is conducted during a predetermined duration, and in which the base stations have a paging channel capable of specifying a mobile station and notifying the mobile station of arrival of a packet or capable of transmitting an incoming packet addressed to a mobile station having moved into the sleep mode, and can intermittently transmit the paging channel in a predetermined period, wherein the sleep mode comprises a plurality of sleep states according to durations in which neither packet transmission nor reception is conducted, a plurality of paging periods are prepared corresponding to the respective sleep states, and it is possible to set paging areas corresponding to the respective paging periods and reception timings of intermittent reception by the mobile stations, wherein the server comprises: measuring-retaining means for measuring both or either of the number of mobile stations located in each paging area and having moved into the sleep mode, and paging traffics at respective reception timings of the paging channel in each paging area, and for retaining measurement values thus measured; and change instructing means for instructing a mobile station to change both or either of a paging period and a reception timing, according to the measurement values retained, in a predetermined case, and wherein the mobile stations comprise intermittent reception controlling means for performing intermittent reception in the paging period and at the reception timing based on the change instruction.

The above predetermined case is a case where the mobile station newly moves into the sleep mode, or a case where the mobile station previously having moved into the sleep mode changes the sleep state, or a case where the mobile station previously having moved into the sleep mode moves into a new paging area, or an arbitrary case determined by the server.

A server according to the present invention is a server, together with a plurality of mobile stations and with a plurality of base stations connected to a network, constituting a mobile communication system, being connected to the network, and being configured to manage a paging area formed by a collection of cells established by the base stations and location information of the mobile stations, the server constituting the mobile communication system in which the mobile stations are configured so that a mobile station in a cell established by a base station transmits or receives a packet to or from the base station and so that, when neither packet transmission nor reception is conducted during a predetermined duration, the mobile station moves into a sleep mode of periodically receiving a signal from the base station and in which the base stations have a paging channel capable of specifying a mobile station and notifying the mobile station of arrival of a packet or capable of transmitting an incoming packet addressed to a mobile station having moved in the sleep mode and can intermittently transmit the paging channel in a predetermined period, wherein the sleep mode comprises a plurality of sleep states according to durations in which neither packet transmission nor reception is conducted, a plurality of paging periods are prepared corresponding to the respective sleep states, and it is possible to set paging areas corresponding to the respective paging periods and reception timings of intermittent reception by the mobile stations, the server comprising: measuring-retaining means for measuring both or either of the number of mobile stations located in each paging area as mentioned and having moved into the sleep mode, and paging traffics at respective reception timings of the paging channel in each paging area as mentioned, and for retaining measurement values thus measured; and change instructing means for instructing a mobile station to change both or either of a paging period and a reception timing, according to the retained measurement values, in a case where the mobile station newly moves into the sleep mode, or in a case where the mobile station previously having moved into the sleep mode changes the sleep state, or in a case where the mobile station previously having moved into the sleep mode moves into a new paging area, or in an arbitrary case determined by the server.

In the above configuration, the server instructs the mobile station to change both or either of the paging period and the reception timing, according to both or either of the number of mobile stations located in each paging area and being in the sleep mode, and the paging traffics at the respective reception timings of the paging channel in each paging area, in the predetermined case and the mobile station performs the intermittent reception in the paging period and at the reception timing based on the change instruction, whereby it is feasible to circumvent the problem of congestion of paging traffic at a specific reception timing in a paging area and, at the same time as it, to achieve the effect of smoothing the paging traffics at the respective reception timings.

Since the change of the paging period can be made at the same time as the change of the reception timing, it becomes feasible to implement more effective battery saving than before.

Furthermore, the conventional technology had the problem of concentration of more mobile stations at a long paging period as the non-communication duration of each mobile station increased. In contrast, the present invention takes the traffic according to the paging period into account and thus can circumvent the problem of concentration of mobile stations at a specific paging period, and enable smoothing of traffic among a plurality of paging periods.

The above mobile communication system can be configured to provide servers in respective paging areas and give a hierarchical relation based on a predetermined rule among the servers, and the present invention can be applied to the mobile communication system of this configuration.

Namely, the paging method in the mobile communication system according to the present invention is characterized in that the mobile communication system comprises servers in respective paging areas and the servers are in a hierarchical relation based on a predetermined rule, and in that the server in each layer instructs a mobile station to change both or either of the paging period and the reception timing, according to both or either of the number of mobile stations located in a corresponding paging area and having moved into the sleep mode, and the paging traffics at the respective reception timings of the paging channel in the paging area.

The mobile communication system is characterized in that the mobile communication system comprises servers in respective paging areas and the servers are in a hierarchical relation based on a predetermined rule, and in that the change instructing means of the server in each layer instructs a mobile station to change both or either of the paging period and the reception timing, according to both or either of the number of mobile stations located in a corresponding paging area and having moved into the sleep mode, and the paging traffics at the respective reception timings of the paging channel in the paging area.

According to the above aspect of the invention, the processing concentrated on one server is scattered to the servers in the respective layers, so that the processing loads can be spread so as to reduce the processing load on one server. It is also feasible to avoid the problem that the entire system stops in the event of failure.

The above mobile communication system permits a service class to be set for each mobile station, and by applying the present invention to such a mobile communication system, it is also feasible to implement control also taking the service classes into account.

Namely, the paging method in the mobile communication system according to the present invention is characterized in that the base station or the server recognizes a service class of a mobile station and instructs the mobile station to change both or either of the paging period and the reception timing, further according to the service class.

The mobile communication system according to the present invention is also characterized in that the base station or the server further comprises recognizing-retaining means for recognizing a service class of a mobile station and for retaining the service class information, and in that the change instructing means of the base station or the server instructs the mobile station to change both or either of the paging period and the reception timing, further according to the service class recognized.

The base station is also preferably configured as follows: it further comprises recognizing-retaining means for recognizing a service class of a mobile station and for retaining the service class information, and the change instructing means instructs the mobile station to change both or either of the paging period and the reception timing, further according to the service class recognized.

Furthermore, the above server is preferably configured as follows: it further comprises recognizing-retaining means for recognizing a service class of a mobile station and for retaining the service class information, and the change instructing means instructs the mobile station to change both or either of the paging period and the reception timing, further according to the service class recognized.

According to the above aspects of the invention, both or either of the paging period and the reception timing can be set according to the service class of the mobile station, so that the mobile station can implement appropriate intermittent reception according to the service class.

For example, a real time class and a non-real time class can be set as service classes for the mobile stations, and a long paging period can be set for the mobile stations in the non-real time class, whereby it becomes feasible to implement effective battery saving. A short paging period can be set for the mobile stations in the real time class, whereby it becomes feasible to minimize the paging delay.

A mobile station according to the present invention is a mobile station, together with a base station, constituting a mobile communication system, being capable of transmitting or receiving a packet to or from the base station in a cell established by the base station, and being configured to move into a sleep mode of periodically receiving a signal from the base station, in a case where neither packet transmission nor reception is conducted during a predetermined duration, the mobile station constituting the mobile communication system in which the base station has a paging channel capable of specifying the mobile station and notifying the mobile station of arrival of a packet or capable of transmitting an incoming packet addressed to the mobile station having moved into the sleep mode, and can intermittently transmit the paging channel in a predetermined period, wherein the sleep mode comprises a plurality of sleep states according to durations in which neither packet transmission nor reception is conducted, and it is possible to set paging periods corresponding to the respective sleep states and reception timings of intermittent reception by the mobile station, the mobile station comprising: change instruction receiving means for receiving from the base station, a change instruction for change of both or either of a paging period and a reception timing, according to measurement values of both or either of the number of mobile stations located in the cell and having moved into the sleep mode, and paging traffic of the paging channel, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station; and intermittent reception controlling means for performing intermittent reception in the paging period and at the reception timing based on the change instruction.

Another mobile station according to the present invention is a mobile station, together with a plurality of base stations connected to a network and with a server connected to the network and configured to manage a paging area formed by a collection of cells established by the base stations, and location information of mobile stations located therein, constituting a mobile communication system and being capable of transmitting or receiving a packet to or from a base station in the cell established by the base station, the mobile station being configured to move into a sleep mode of periodically receiving a signal from the base station, in a case where neither packet transmission nor reception is conducted during a predetermined duration, the mobile station constituting the mobile communication system in which the base station has a paging channel capable of specifying the mobile station and notifying the mobile station of arrival of a packet or capable of transmitting an incoming packet addressed to the mobile station having moved into the sleep mode, and can intermittently transmit the paging channel in a predetermined period, wherein the sleep mode comprises a plurality of sleep states according to durations in which neither packet transmission nor reception is conducted, a plurality of paging periods are prepared corresponding to the respective sleep states, and it is possible to set paging areas corresponding to the respective paging periods and reception timings of intermittent reception by the mobile station, the mobile station comprising: change instruction receiving means for receiving from the server, a change instruction for change of both or either of a paging period and a reception timing, according to measurement values of both or either of the number of mobile stations located in each paging area and having moved into the sleep mode, and paging traffics at respective reception timings of the paging channel in each paging area, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station; and intermittent reception controlling means for performing intermittent reception in the paging period and at the reception timing based on the change instruction.

The invention also includes the following aspects about control in the case where the state of the mobile station is determined to be the idle state.

A server according to the present invention is a server comprising: paging group detecting means for detecting one out of a plurality of groups (hereinafter referred to as "paging groups") categorized by respective timings of receiving a paging signal for a mobile station, based on predetermined information; and area change detecting means for detecting a change of a location registration area on which the mobile station is under location registration, wherein, where the area change detecting means detects a change of the location registration area of the mobile station, the paging group detecting means assigns the mobile station the paging group detected (hereinafter referred to as a "designated paging group").

The server according to the present invention is configured so that the paging group detecting means detects one paging group on the basis of the predetermined information, out of the plurality of paging groups categorized by the respective timings of receiving the paging signal for the mobile station. The area change detecting means detects a change of the location registration area on which the mobile station is under location registration. When the area change detecting means detects the change of the location registration area of the mobile station, the paging group detecting means assigns the mobile station the designated paging group thus detected.

A mobile communication system according to the present invention is a mobile communication system comprising: paging group detecting means for detecting one paging group out of a plurality of paging groups categorized by respective timings of receiving a paging signal for a mobile station, based on predetermined information; and area change detecting means for detecting a change of a location registration area on which the mobile station is under location registration, wherein when the area change detecting means detects a change of the location registration area of the mobile station, the paging group detecting means assigns the mobile station the paging group detected (designated paging group).

In the mobile communication system according to the present invention, the paging group detecting means detects one paging group on the basis of the predetermined information, out of the plurality of paging groups categorized by the respective timings of receiving the paging signal for the mobile station. The area change detecting means detects a change of the location registration area on which the mobile station is under location registration. When the area change detecting means detects the change of the location registration area of the mobile station, the paging group detecting means assigns the mobile station the designated paging group thus detected.

In the conventional technology about PHS, a paging group number of a paging group with a reception timing being defined, was preliminarily determined corresponding to a telephone number of each mobile station, which raised the problem that in a location registration area an imbalance among the numbers of mobile stations belonging to the respective paging groups would result in an imbalance among paging traffic loads of the respective paging groups. For this reason, a buffer in the base station could experience overflow, so as to fail to transmit the paging signal to the mobile station, which might bring about call loss of a paging call arriving at the base station. This caused another problem that, in order to prevent the call loss, the capacity of the control channel used for transmission of the paging signal had to be designed with some margin. Furthermore, the method in prior art 1 failed to allow for the service quality requested by the mobile station, and it was thus difficult to perform control of QoS (Quality of Service).

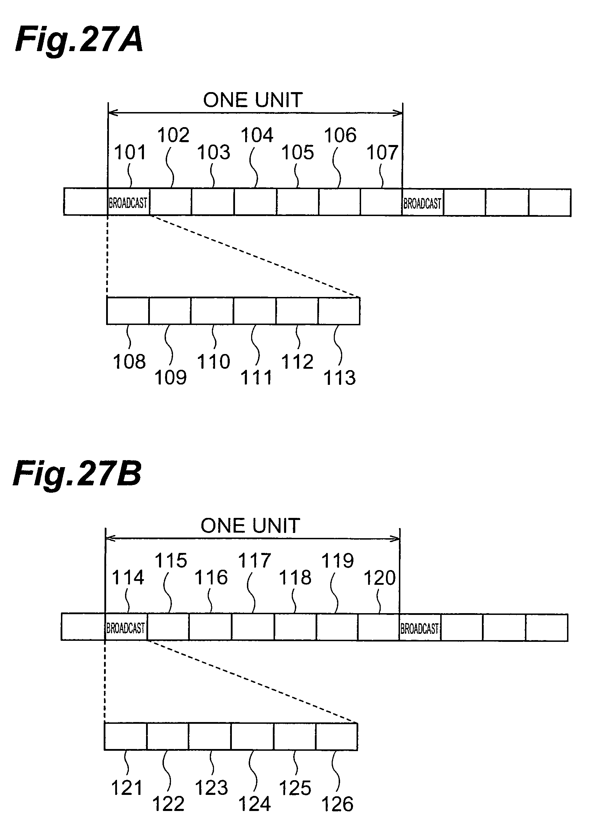

There is another conventional technology of changing the reception timing of reception of the paging signal assigned to each paging group, frame by frame. In this technology, the base station notifies the mobile station of the changed reception timing, using the control channel shown in Fig. 27A (cf. Japanese Patent Application Laid-Open Gazette No. Heisei 5-114883). The control channel is constructed so that one unit is comprised of a frame of a total of seven timeslots including one broadcasting timeslot 101 and six timeslots 102-107. In order to decrease the load on the control channel, all the mobile stations belonging to all the paging groups receive the broadcasting timeslot 101. The base station announces in this broadcasting timeslot 101, the reception timings of the paging signal for the respective paging groups in the timeslots 102-107 subsequent to the broadcasting timeslot, i.e., the locations of the timeslots. The broadcasting timeslot 101 is comprised of slots 108-113 for broadcasting the paging group numbers. For example, where a mobile station receives the control channel shown in Fig. 27B, it can acknowledge the reception timings of the paging signal for the respective paging groups, from the broadcasting timeslot 114 containing the slots 121-126 indicating the respective paging group numbers. Then each mobile station receives the paging signal at the reception timing acknowledged from the broadcasting timeslot 114, in the timeslot 115-120 subsequent to the broadcasting timeslot 114. For example, in the timeslot 115, mobile stations belonging to the paging group with the paging group number "2" indicated by the paging group number in slot 121 receive the paging signal. In this method, as described above, the reception timings corresponding to the paging groups to which the mobile stations belong, vary frame by frame for all the mobile stations.

In the technology of varying the reception timings corresponding to the paging groups to which the mobile stations belong, for all the mobile stations frame by frame, as described above, the base station had to transmit the broadcasting timeslot to all the mobile stations in every frame and the mobile stations had to receive the broadcasting timeslot in every frame. Therefore, this method had the problem that the channel utilization efficiency was very poor, the problem that the control of paging caused the heavy load on the base station and on the mobile stations, and the problem that the timeslots for each mobile station to receive increased, so as to result in failure in battery saving. Furthermore, since the reception timings corresponding to the paging groups to which the mobile stations belong, vary frame by frame, the mobile stations are not always able to perform intermittent reception, which caused the problem that it was infeasible to implement effective battery saving. Particularly, in cases where the reception timings of the respective paging groups were assigned in an order of arrival of incoming calls at the base station and the paging signal was transmitted based thereon, the paging signal to the mobile stations in an identical paging group was sometimes transmitted twice or more within an identical frame. This caused the problem of further decreasing the channel utilization efficiency.

According to the aspects of the invention associated with the above server and the mobile communication system, however, the paging group detecting means simply needs to assign the mobile station the designated paging group only when the area change detecting means detects a change of the location registration area of location registration of the mobile station. For this reason, the server or the mobile communication system can effectively utilize the channel, whereby it is feasible to decrease the load of paging control on the paging group detecting means.

Furthermore, in the aspects of the invention associated with the server and the mobile communication system, preferably, the area change detecting means comprises paging group acquiring means for acquiring a paging group assigned to the mobile station (hereinafter referred to as a "previous paging group"), when detecting a change of the location registration area of the mobile station, and the paging group detecting means determines whether the previous paging group acquired by the paging group acquiring means is identical to or different from the designated paging group thus detected, and assigns the mobile station the designated paging group thus detected, only if they are different.

According to this configuration, only when the previous paging group is different from the designated paging group, i.e., only when there is a change of the paging group, the paging group detecting means assigns the mobile station the designated paging group detected; when the previous paging group is identical to the designated paging group, i.e., when there is no change of the paging group, it is feasible to omit the assignment of the designated paging group detected, to the mobile station. This permits the mobile communication system to utilize the channel more effectively. Since there is no need for acquiring unnecessary information, the mobile stations have the operational effect that there is no need for always receiving redundant information signals. As a result, the mobile stations can expand the battery saving based on promotion of efficiency of reception time.

The server according to the present invention or the mobile communication system according to the present invention is preferably configured to comprise traffic volume measuring means for measuring paging traffic volumes at timings of the respective paging groups in the location registration area; or number-of-mobile-stations measuring means for measuring the numbers of mobile stations belonging to the respective paging groups in the location registration area, and the paging group detecting means detects one paging group, based on a result of the measurement by the traffic volume measuring means or by the number-of-mobile-stations measuring means. The "paging traffic volume" herein means the number of incoming calls. This enables the assignment of the designated paging group to be effected, based on the paging traffic volumes at the timings of the respective paging groups in the location registration area or based on the numbers of mobile stations belonging to the respective paging groups in the location registration area. For this reason, the server or the mobile communication system can prevent the paging traffic load from being concentrated at a timing of a specific paging group, whereby it is feasible to smooth the paging traffic loads on the respective paging groups. It is also feasible to prevent the paging signal from being transmitted twice or more to the mobile stations in an identical paging group within an identical frame. Therefore, it is feasible to utilize the channel more effectively.

For example, in data communication and the like, even if the paging traffic volume of a paging group is low or even if the number of mobile stations belonging to a paging group is small, there are cases where volume of data in one incoming call or volume of data received by one mobile station is high, so as to cause concentration of paging traffic load on the paging group. For this reason, the server according to the present invention or the mobile communication system according to the present invention preferably comprises data volume measuring means for measuring volumes of data to be transmitted at timings of the respective paging groups in the location registration area, and the paging group detecting means detects one paging group, based on a result of the measurement by the data volume measuring means. This enables the assignment of the designated paging group to be effected, based on the actual volumes of data transmitted at the timings of the respective paging groups in the location registration area. Therefore this can prevent the paging traffic load from being concentrated at a timing of a specific paging group, more than in the cases where one paging group is detected based on the result of the measurement by the traffic volume measuring means or by the number-of-mobile-stations measuring means, and this can smooth the paging traffic loads of the respective paging groups more.

In the aspects of the invention associated with the server and the mobile communication system, preferably, the paging group detecting means comprises quality acquiring means for acquiring a service quality requested by the mobile station, and the paging group detecting means detects one paging group, based on the service quality acquired by the quality acquiring means. This permits the server or the mobile communication system to detect the designated paging group in consideration of the service quality requested by the mobile station, which facilitates execution of the QoS control.

A mobile station according to the present invention is a mobile station comprising: requesting means for, at a time of moving into a location registration area different from a location registration area on which the mobile station is under location registration, detecting the movement and requesting a change of the location registration area; and setting changing means for changing setting of a paging group according to information notified of, when receiving an information signal from a base station, wherein, where paging group information is included in information notified of by the base station when the requesting means requests the change of the location registration area, the setting changing means changes the setting of the paging group.

In the mobile station according to the present invention, the requesting means detects movement into the location registration area different from the location registration area under location registration and requests a change of the location registration area. The setting changing means, when receiving the information signal from the base station, changes the setting of the paging group, according to the information notified of. In the case where the information notified of by the base station contains the paging group information when the requesting means requests the change of the location registration area, the setting changing means changes the setting of the paging group.

Therefore, the mobile station does not have to acquire unnecessary information, and does not have to receive redundant information signals. As a result, the mobile station can expand the battery saving based on promotion of efficiency of reception time.

Preferably, where the paging group information is not included, the setting changing means continuously uses a paging group to which the mobile station belonged before the change of the location registration area. In this configuration, the mobile station does not have to change the setting of the paging group, without change of the paging group, whereby it is feasible to further decrease the load of paging control.

### Brief Description of the Drawings

Fig. 1 is a configuration diagram of a mobile communication system assumed in embodiments of Part 1.
Fig. 2A is a diagram showing a paging period A among paging periods of intermittent transmission from the base station assumed in the embodiments of Part 1.
Fig. 2B is a diagram showing a paging period B among paging periods of intermittent transmission from the base station assumed in the embodiments of Part 1.
Fig. 2C is a diagram showing a paging period C among paging periods of intermittent transmission from the base station assumed in the embodiments of Part 1.
Fig. 2D is a diagram showing a paging period D among paging periods of intermittent transmission from the base station assumed in the embodiments of Part 1.
Fig. 2E is a diagram showing a paging period E among paging periods of intermittent transmission from the base station assumed in the embodiments of Part 1.
Fig. 3A is an illustration showing a correspondence between paging area A and paging period A.
Fig. 3B is an illustration showing a correspondence between paging area B and paging period B.
Fig. 3C is an illustration showing a correspondence between paging area C and paging period C.
Fig. 4A is a configuration diagram of a mobile communication system for explaining a first paging method.
Fig. 4B is an illustration showing the paging period A and three reception timings in the first paging method.
Fig. 4C is an illustration showing the paging period B and three reception timings in the first paging method.
Fig. 4D is an illustration showing the paging period C and three reception timings in the first paging method.
Fig. 5A is a configuration diagram of a mobile communication system for explaining a second paging method.
Fig. 5B is an illustration showing the paging period C and three reception timings in the second paging method.
Fig. 5C is an illustration showing the paging period B and three reception timings in the second paging method.
Fig. 5D is an illustration showing the paging period A and three reception timings in the second paging method.
Fig. 6 is an illustration for explaining a modification example of the second paging method.
Fig. 7 is a flowchart about first processing operation of the base station.
Fig. 8 is a flowchart about second processing operation of the base station.
Fig. 9 is a flowchart about first processing operation of the location information managing server.
Fig. 10 is a flowchart about second processing operation of the location information managing server.
Fig. 11 is a flowchart about third processing operation of the location information managing server.
Fig. 12 is a flowchart about fourth processing operation of the location information managing server.
Fig. 13 is a flowchart about processing operation of the mobile station.
Fig. 14A is a table for the base station to acknowledge mobile stations located in the cell under control of its own and having moved into the sleep mode in the first processing operation.
Fig. 14B is a table used by the base station in managing the numbers of mobile stations corresponding to the respective reception timings in the cell under control of its own and the paging traffic volumes at the respective reception timings for each of paging periods in the first processing operation.
Fig. 15A is a table for the base station to acknowledge mobile stations located in the cell under control of its own and having moved into the sleep mode in the second processing operation.
Fig. 15B is a table for the base station to manage the paging periods and reception timings in the real time class in the second processing operation.
Fig. 15C is a table for the base station to manage the paging periods and reception timings in the non-real time class in the second processing operation.
Fig. 16A is a table for the location information managing server to acknowledge mobile stations located in the paging area under management thereof and having moved into the sleep mode in the first processing operation.
Fig. 16B is a table used by the location information managing server in managing the location information of mobile stations for respective paging periods and in managing the numbers of mobile stations corresponding to the respective reception timings and the paging traffic volumes at the reception timings in the first processing operation.
Fig. 17A is a table for the location information managing server to acknowledge mobile stations located in the paging area under management thereof and having moved into the sleep mode in the second processing operation.
Fig. 17B is a table for the location information managing server to manage the paging periods and reception timings in the real time class in the second processing operation.
Fig. 17C is a table for the location information managing server to manage the paging periods and reception timings in the non-real time class in the second processing operation.
Fig. 18A is a table for the location information managing server to acknowledge mobile stations located in the paging area under management thereof and having moved into the sleep mode in the third processing operation.
Fig. 18B is a table used by the location information managing server in managing the location information of mobile stations for individual paging areas and in managing the numbers of mobile stations corresponding to the respective reception timings and the paging traffic volumes at the reception timings in the third processing operation.
Fig. 19A is a table for the location information managing server to acknowledge mobile stations located in the paging area under management thereof and having moved into the sleep mode in the fourth processing operation.
Fig. 19B is a table for the location information managing server to manage the paging periods and reception timings in the real time class in the fourth processing operation.
Fig. 19C is a table for the location information managing server to manage the paging periods and reception timings in the non-real time class in the fourth processing operation.
Fig. 20 is a functional block diagram about a configuration of a mobile communication system.
Fig. 21A is a configuration diagram of a mobile communication system according to the first embodiment of Part 2.
Fig. 21B is an illustration showing a paging group of location registration area A in Fig. 21A.
Fig. 21C is an illustration showing a paging group of location registration area B in Fig. 21A.
Fig. 22A is an illustration showing a location management table according to the first embodiment of Part 2.
Fig. 22B is an illustration showing a paging group management table according to the first embodiment of Part 2.
Fig. 22C is an illustration showing a measurement result table according to the first embodiment of Part 2.
Fig. 23 is a flowchart showing the operation procedure of the location information managing server according to the first embodiment of Part 2.
Fig. 24 is a flowchart showing the operation procedure of the mobile station according to the first embodiment of Part 2.
Fig. 25A is an illustration showing a location management table according to the second embodiment of Part 2.
Fig. 25B is an illustration showing a real time class paging group management table according to the second embodiment of Part 2.
Fig. 25C is an illustration showing a non-real time class paging group management table according to the second embodiment of Part 2.
Fig. 26 is a flowchart showing the operation procedure of the location information managing server according to the second embodiment of Part 2.
Fig. 27A is an illustration showing the first example of the control channel in the conventional mobile communication method.
Fig. 27B is an illustration showing the second example of the control channel in the conventional mobile communication method.
Fig. 28 is a flowchart showing the operation procedure of the mobile station according to an embodiment of Part 3.
Fig. 29 is a flowchart showing the control operation over the mobile station according to an embodiment of Part 3.
Fig. 30 is an illustration showing a configuration example of the server and base station about Part 3.

### Best Mode for Carrying out the Invention

The following will describe embodiments of the present invention: (Part 1) architecture and processing associated with the control in the link layer in a case where the mobile station is determined to be in the sleep state; (Part 2) architecture and processing associated with the control in the network layer in a case where the mobile station is determined to be in the idle state; and thereafter, (Part 3) control processing according to states of the mobile station.

### [(Part 1) Architecture and processing associated with control in link layer where mobile station is determined to be in sleep state]

Embodiments of the paging method and mobile communication system according to the present invention will be described below with reference to the drawings.

### [Configuration of mobile communication system]

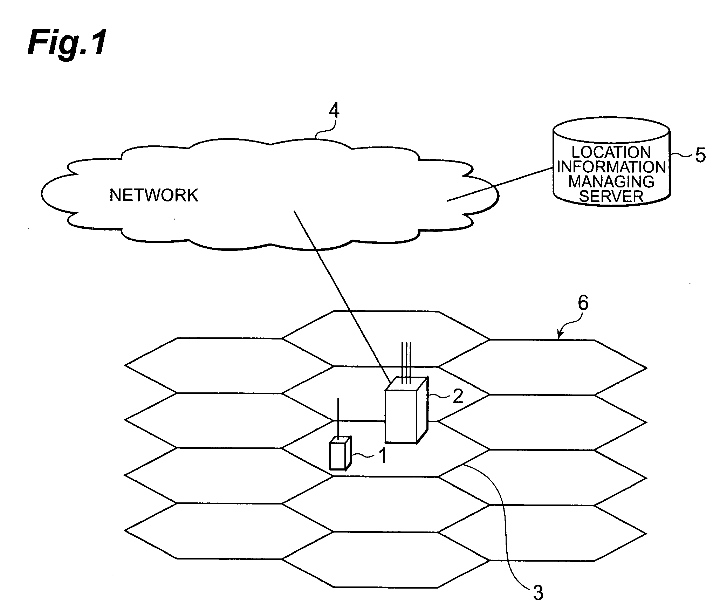

Fig. 1 shows a schematic configuration of the mobile communication system according to an embodiment of Part 1. Mobile station 1 shown in Fig. 1 is located in a cell 3 established by base station 2, and registers its location on a location registration area corresponding to a paging area 6 formed by a collection of cells. Information about the location of mobile station 1 and information about a state thereof (a sleep mode, a disconnected state, etc.) is managed by location information managing server 5 connected to network 4. Part 1 below will be described based on an example in which the paging area 6 is identical to the location registration area corresponding to the paging area 6. For this reason, in order to simplify the description, "to register the location on the location registration area corresponding to the paging area 6" will be described below as "to register the location on the paging area 6." However, the present invention does not have to be limited to the configuration wherein they are equal, as long as the location information managing server 5 keeps track of the correspondence relation between them and manages them.

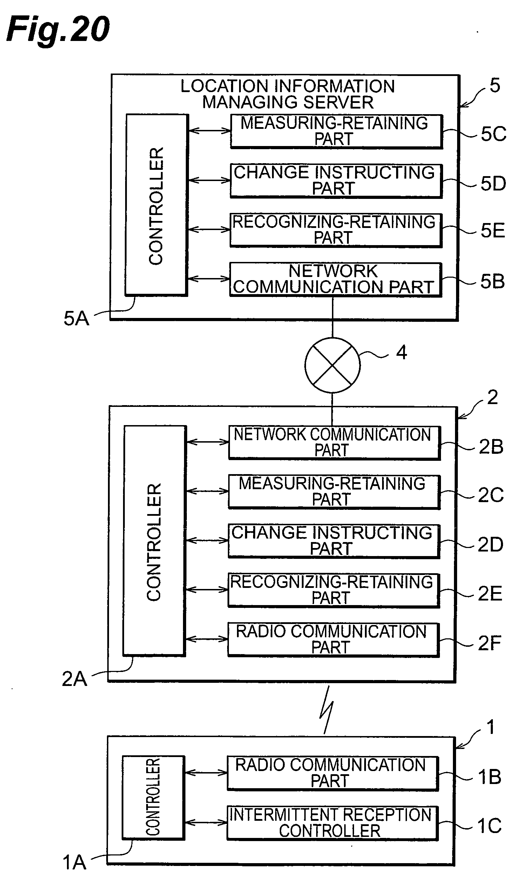

Fig. 20 is a functional block diagram about the configuration of the mobile communication system according to the present embodiment. Fig. 20 illustrates mobile station 1 and base station 2 one each in order to simplify the illustration, but it should be considered that in practice there exist a plurality of mobile stations 1 and base stations 2 in similar structure.

As shown in this Fig. 20, mobile station 1 is comprised of radio communicator 1B for performing wireless packet communication or the like with base station 2 or with another mobile station 1; intermittent reception controller 1C for implementing a transition into the sleep mode of periodically intermittently receiving the signal transmitted from base station 2 in the case where neither packet transmission nor reception is carried out over a predetermined duration in a communication state, and for changing the period of the intermittent reception, and so on; and controller 1A for monitoring and controlling the operations of the respective parts described above.

Base station 2 is comprised of network communicator 2B for performing communication with location information managing server 5 through network 4; measuring-retaining part 2C for measuring both or either of the number of mobile stations located in the cell under control of the host station and having moved into the sleep mode, and the paging traffic of the paging channel, and for retaining measurement values measured; change instructing part 2D for instructing the mobile station 1 to change both or either of the paging period and the reception timing, according to the measurement values retained, in a case where the mobile station 1 newly moves into the sleep mode, or in a case where the mobile station 1 previously having moved into the sleep mode newly moves into the cell, or in a case where the mobile station 1 previously having moved into the sleep mode changes the sleep state, or in an arbitrary case determined by the base station 2; recognizing-retaining part 2E for recognizing a service class of the mobile station 1 and for retaining the service class information; radio communicator 2F for performing wireless packet communication or the like with mobile station 1 or with another base station 2; and controller 2A incorporating a timer and configured to monitor and control the operations of the respective parts described above.

Location information managing server 5 is comprised of network communicator 5B for performing communication with base station 2 through network 4; measuring-retaining part 5C for measuring both or either of the number of mobile stations located in each paging area and having moved into the sleep mode, and the paging traffics at the respective reception timings of the paging channel in each paging area, and for retaining measurement values thus measured; change instructing part 5D for instructing the mobile station 1 to change both or either of the paging period and the reception timing, according to the measurement values retained, in a case where the mobile station 1 newly moves into the sleep mode, or in a case where the mobile station 1 previously having moved into the sleep mode moves into a new paging area, or in a case where the mobile station 1 previously having moved into the sleep mode changes the sleep state, or in an arbitrary case determined by the location information managing server; recognizing-retaining part 5E for recognizing a service class of the mobile station 1 and for retaining the service class information; and controller 5A for monitoring and controlling the operations of the respective parts described above.

### [About reception timings, paging periods, and paging areas]

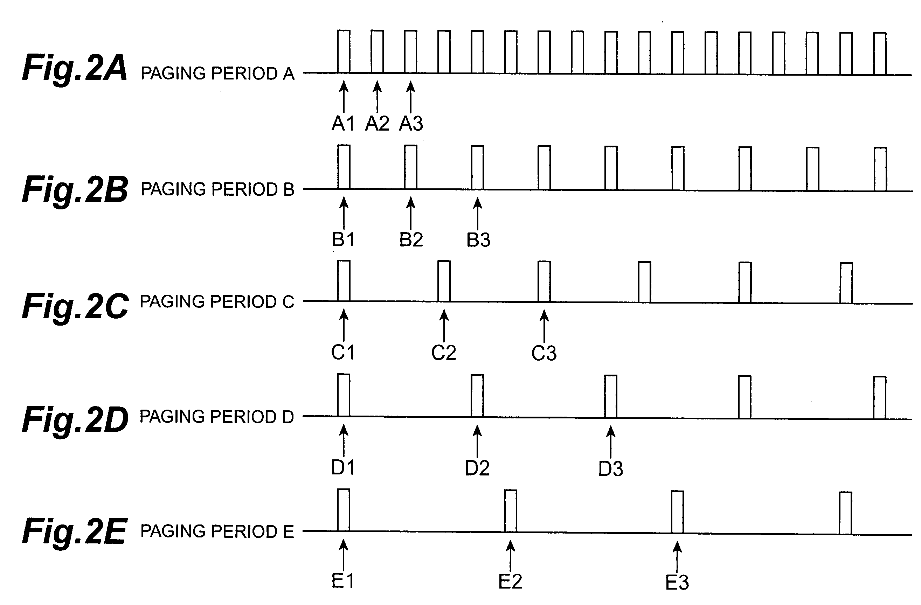

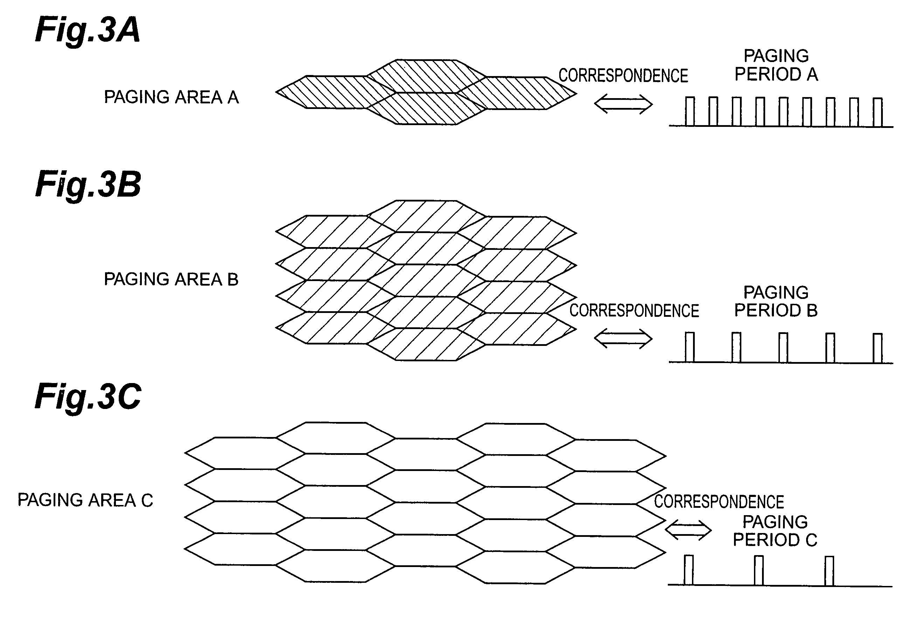

We will next describe the reception timings, paging periods, and paging areas in the present embodiment with reference to Figs. 2A-2E and Figs. 3A-3C.

Suppose base station 2 of Fig. 1 intermittently transmits the paging signal in one of the paging periods A-E of Figs. 2A-2E to the mobile station 1 in the sleep mode, and the cycle corresponding to the paging period A is T. Then the period of the paging period B is represented by 2T, the period of the paging period C by 3T, the period of the paging period D by 4T, and the period of the paging period E by 5T.

Reception timings for each mobile station 1 to receive the paging signal are defined in each paging period; for example, the reception timings in the paging period A are defined by three timings A1, A2, and A3. Similarly, the reception timings in the paging period B are three timings B1, B2, and B3. The reception timings in the paging period C are three timings C1, C2, and C3. The reception timings in the paging period D are three timings D1, D2, and D3, and those in the paging period E three timings E1, E2, and E3.

Furthermore, as shown in Figs. 3A-3C, the paging periods are correlated with the paging areas. Namely, the paging area A corresponds to the paging period A. Likewise, the paging area B corresponds to the paging period B, and the paging area C to the paging period C.

### [Processing operation in present embodiment]

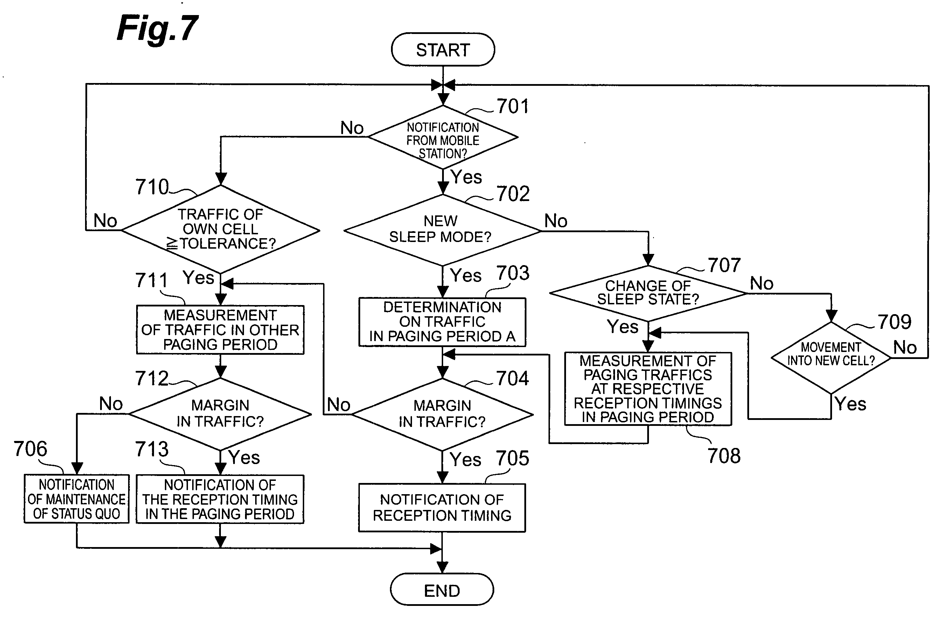

The processing operation in the present embodiment will be described below. The following will first describe the first paging method and the second paging method constituting the major part of the present invention in order, and thereafter describe the detailed processing operations in the base station, location information managing server, and mobile station 1 on the basis of Figs. 7-13 in order.

### [First paging method]

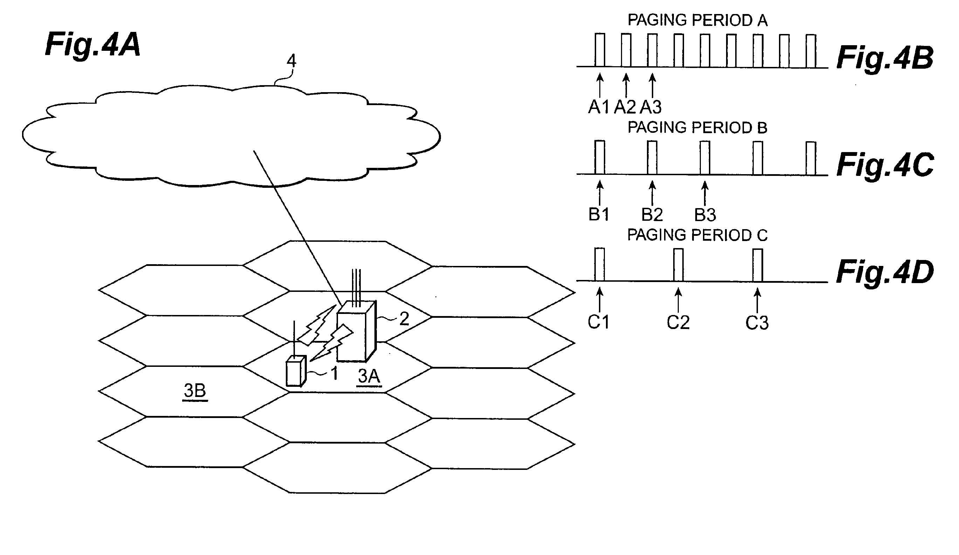

At the beginning, the first paging method according to the present invention will be described referring to Figs. 4A-4D.

The first paging method is concerned with only cells. Let us suppose herein that the paging periods are three types shown in Figs. 4B-4D (the paging periods A-C) and the reception timings for the mobile station 1 to receive the paging signal are three types in each paging period. Namely, the reception timings in the paging period A are those A1, A2, and A3, the reception timings in the paging period B those B1, B2, and B3, and the reception timings in the paging period C those C1, C2, and C3.

The below will describe the operation methods in the following four cases in order: ① a case where the mobile station newly moves into the sleep mode; ② a case where the mobile station previously having moved into the sleep mode changes the cell to another; ③ a case where the mobile station changes the sleep state; ④ a case where the base station changes the reception timing at an arbitrary point.

### ① Case where mobile station newly moves into sleep mode

Let us assume that mobile station 1 is under transmission and reception of packets to and from base station 2 in cell 3A. After completion of the transmission and reception of packets, mobile station 1 starts a timer for determining a transition into the sleep mode. With a timeout of this timer, mobile station 1 notifies base station 2 of its transition into the sleep mode.

Since mobile station 1 about to move into the sleep mode first goes into a standby state in the paging period A, base station 2, receiving the notification, compares the number of mobile stations under intermittent reception in the paging period A in the cell 3A under control of its own and the traffics at the respective reception timings A1-A3, with their respective predetermined thresholds preliminarily set in tables held by itself (base station 2), to evaluate the traffic volume. For example, the evaluation on the traffic volume herein is carried out by comparing the actual number of mobile stations under intermittent reception at each reception timing A1-A3 in the paging period A in the cell 3A, with an average of the numbers of mobile stations belonging to the corresponding reception timings and by comparing the traffic at each reception timing A1-A3 with a predetermined traffic threshold. It is noted herein that the evaluation methods are not limited to these and the evaluation may be conducted by any other method than the above.

Suppose the traffic at the reception timing A1 is heavy and the traffic at the reception timing A2 light in the cell 3A. Then base station 2 instructs mobile station 1 to stand by at the reception timing A2. Mobile station 1 thus instructed to perform the intermittent reception at the reception timing A2, performs the intermittent reception in the paging period A and at the reception timing A2.

If the traffic is heavy at all the reception timings A1-A3, base station 2 keeps mobile station 1 from going into the sleep mode, or assigns one with some traffic space out of the reception timings B1-B3 in the paging period B. For example, mobile station 1 instructed to perform the intermittent reception at the reception timing B2 in the paging period B, performs the intermittent reception at the timing thus assigned.

### ② Case where mobile station previously having moved into the sleep mode changes cell

Suppose mobile station 1 has previously moved into the sleep mode, was first located in the cell 3B, and thereafter moved into the cell 3A. It is assumed here that in the cell 3B the mobile station 1 was under intermittent reception at the reception timing B1 in the paging period B. Mobile station 1 recognizes a change of the ID of the base station 2 under communication and notifies the base station 2 in the new cell 3A that the mobile station 1 itself is in the sleep mode and under intermittent reception at the reception timing B1 in the paging period B.

The base station 2, receiving the notification, evaluates the paging traffics at the reception timings B1-B3 in the paging period B. For example, the base station 2 compares the number of mobile stations under intermittent reception in the paging period B and the traffics at the respective reception timings B1-B3, in the cell 3A under control of its own, with their respective predetermined thresholds preliminarily set in tables held by itself (base station 2), so as to evaluate the traffic volume. The evaluation on the traffic volume herein is carried out by comparing the actual number of mobile stations under intermittent reception at each reception timing B1-B3 in the paging period B in the cell 3A, with an average of the numbers of mobile stations belonging to the corresponding reception timings and by comparing the traffic at each reception timing B1-B3 with a predetermined traffic threshold. It is noted that the evaluation methods are not limited to these and the evaluation may be conducted by any other method than the above.

Supposing there is a free space in the traffic at the reception timing B1, the base station 2 instructs mobile station 1 to perform intermittent reception at the reception timing B1. Mobile station 1 continuously performs the intermittent reception at the reception timing B1 in the paging period B. On the other hand, if the traffic is heavy at the reception timing B1, the base station 2 will evaluate the traffics at the reception timings B2, B3 and, if there is a free space at the reception timing B3, the base station 2 instructs mobile station 1 to perform intermittent reception at the reception timing B3. Mobile station 1, receiving the instruction, performs the intermittent reception at the reception timing B3 in the paging period B.

In the case where the traffic is heavy at all the reception timings B1-B3, the base station 2 evaluates the traffics corresponding to the paging period A and the paging period C by methods similar to the above and, supposing there is a free space at the reception timing A2 in the paging period A, the base station 2 will instruct the mobile station 1 to perform the intermittent reception at the reception timing A2. Mobile station 1, receiving the instruction, changes the paging period B to the paging period A and performs the intermittent reception at the reception timing A2.

### ③ Case where mobile station changes sleep state

Suppose mobile station 1 has previously moved into the sleep mode and is now under intermittent reception at the reception timing A2 in the paging period A. After the transition into the sleep mode, this mobile station 1 started a timer for change of the sleep mode, and a timeout of the timer occurred. Then the mobile station 1 is about to change the sleep state. Namely, the mobile station 1 is about to change from the paging period A to the paging period B.

The mobile station 1 notifies base station 2 that a timeout of the timer occurred and the mobile station 1 is about to move into the paging period B. The base station 2, receiving the notification, evaluates the paging traffics at the reception timings B1-B3 in the paging period B. For example, the base station 2 compares the number of mobile stations under intermittent reception in the paging period B and the traffics at the respective reception timings B1-B3, in the cell 3A under control of its own, with their respective predetermined thresholds preliminarily set in tables held by itself (base station 2), to evaluate the traffic volume. The evaluation on the traffic volume herein is carried out by comparing the actual number of mobile stations under intermittent reception at each reception timing B1-B3 in the paging period B in the cell 3A, with an average of the numbers of mobile stations belonging to the corresponding reception timings and by comparing the traffics at the respective reception timings B1-B3 with a predetermined traffic threshold. It is noted that the evaluation methods are not limited to these and the evaluation may be conducted by any other method than the above.

Supposing the evaluation resulted in finding a free space at the reception timing B3, base station 2 instructs mobile station 1 to perform intermittent reception at the reception timing B3. The mobile station 1, receiving the instruction, changes into the paging period B and performs the intermittent reception at the reception timing B3. When the above traffic evaluation results in finding no free space in the paging period B (i.e., when there is no free space at all the reception timings B1-B3), the base station 2 keeps the mobile station 1 from making the transition, or the base station 2 evaluates the traffics at the reception timings C1-C3 in the paging period C and, if there is a free space at one of the reception timings in the paging period C, the base station 2 will instruct the mobile station 1 to make a transition thereinto.

If there is no free space in the both paging periods B, C, the base station 2 instructs the mobile station 1 to stay in the paging period A. The mobile station 1, receiving the instruction, maintains the current state.

### ④ Case where base station changes reception timing at arbitrary point

Suppose a sudden increase occurred in the paging traffic at the reception timing B2 in the paging period B. In this state, in order to avoid oppression of the paging channel, base station 2 notifies the mobile station 1 under intermittent reception at the reception timing B2 in the paging period B, of an available reception timing B3, and the mobile station 1, receiving the instruction, performs the intermittent reception at the reception timing B3.

### [Second paging method]

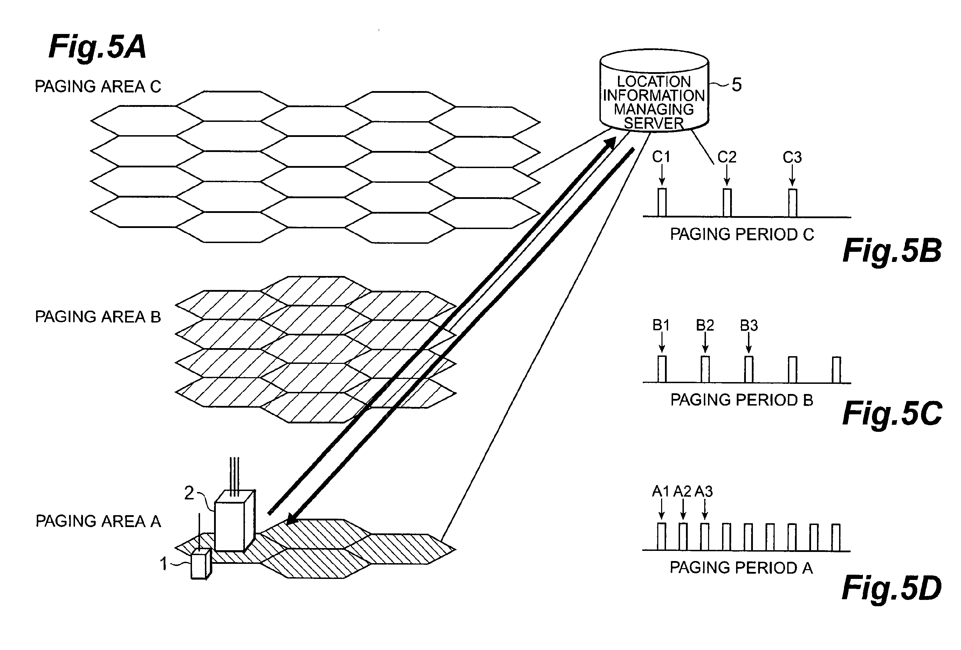

The second paging method according to the present invention will be described below referring to Figs. 5A-5D.

The second paging method is assumed to adopt a paging area configuration formed by a collection of cells. Let us assume herein that the paging periods are three types shown in Figs. 5B-5D (paging periods A-C) and the reception timings for the mobile station 1 to receive the paging signal are three types in each paging period. Namely, the reception timings in the paging period A are those A1, A2, and A3, the reception timings in the paging period B those B1, B2, and B3, and the reception timings in the paging period C those C1, C2, and C3.

The below will describe the operation methods in the following four cases in order: ① a case where the mobile station previously having moved into the sleep mode changes its paging area; ② a case where the mobile station newly moves into the sleep mode; ③ a case where the mobile station changes the sleep state; ④ a case where the location information managing server changes the reception timing at an arbitrary point.

### ① Case where mobile station previously having moved into sleep mode changes its paging area

Suppose mobile station 1 has previously moved into the sleep mode, registered its location on an area corresponding to the paging area A, and is now under reception at the reception timing A1 in the paging period A. When mobile station 1 moves and comes to recognize a difference of the paging area ID from the previous paging area ID, it performs location registration. The mobile station 1 notifies location information managing server 5 that the station itself (mobile station 1) is in the sleep mode and was under reception at the reception timing A1 in the right previous paging area A.

Location information managing server 5, receiving the notification, evaluates the traffic in the new paging area B. For example, the server compares the number of mobile stations under intermittent reception in the paging period B and the traffics at the respective reception timings B1-B3, in the paging area B, with their respective predetermined thresholds preliminarily set in tables held by itself (location information managing server 5), to evaluate the traffic volume. The evaluation on the traffic volume herein is carried out by comparing the actual number of mobile stations under intermittent reception at each reception timing B1-B3 in the paging period B in the paging area B, with an average of the numbers of mobile stations belonging to the corresponding reception timings and by comparing the traffics at the respective reception timings B1-B3 with a predetermined traffic threshold. It is noted that the evaluation methods are not limited to these and the evaluation may be carried out by any other method than the above.

When the evaluation results in finding a free space at the reception timing B1 in the new paging area B as well, the server instructs the mobile station 1 to perform intermittent reception at the reception timing B1. The mobile station 1, receiving the instruction, continuously performs the intermittent reception at the reception timing B1.

On the other hand, for example, if the traffic is heavy at the reception timing B1 and if there is a free space at the reception timing B3, the server instructs the mobile station 1 to change the reception timing B1 to the reception timing B3. The mobile station 1, receiving this change instruction, performs the intermittent reception at the reception timing B3.

If the traffic is heavy at all the reception timings B1-B3, location information managing server 5 instructs the mobile station 1 to change the paging area to another except for the paging area B. The mobile station 1, receiving the change instruction, performs location registration in the designated paging area.

### ② Case where mobile station newly moves into the sleep mode

Suppose mobile station 1 is under transmission and reception of packets to and from base station 2. After completion of the transmission and reception of packets, mobile station 1 starts the timer for determining a transition into the sleep mode. Thereafter, when a timeout of the timer occurs with neither packet transmission nor reception being carried out over a predetermined duration, the mobile station 1 is supposed to move into the sleep mode.

The mobile station 1 notifies location information managing server 5 of the transition into the sleep mode. Location information managing server 5, receiving this notification, evaluates the traffic in the paging area A corresponding to the paging period A for intermittent reception of the mobile station 1. For example, the server compares the number of mobile stations under intermittent reception in the paging period A and the traffics at the respective reception timings A1-A3 in the paging area A, with their respective predetermined thresholds preliminarily set in tables held by itself (location information managing server 5), to evaluate the traffic volume. The evaluation on the traffic volume herein is carried out by comparing the actual number of mobile stations under intermittent reception at each reception timing A1-A3 in the paging period A in the paging area A, with an average of the numbers of mobile stations belonging to the corresponding reception timings and by comparing the traffics at the respective reception timings A1-A3 with a predetermined traffic threshold. It is noted that the evaluation methods are not limited to these and the evaluation may be carried out by any other method than the above.

Supposing there is a free space in the traffic at the reception timing A1 in the paging area A, location information managing server 5 instructs the mobile station 1 to perform intermittent reception at the reception timing A1. The mobile station 1, receiving the instruction, performs the intermittent reception at the reception timing A1 in the paging period A and performs the location registration on the paging area corresponding to the paging area A.

### ③ Case where mobile station changes sleep state

Let us assume that mobile station 1 has previously moved into the sleep mode and is now under intermittent reception at the reception timing A1 in the paging period A. It is also assumed that the mobile station 1 has started a timer for changing the sleep mode, at the same time as the start of the intermittent reception in the paging period A and a timeout of the timer occurred.

The mobile station 1 notifies location information managing server 5 of the timeout of the timer and the transition from the paging period A into the paging period B. Location information managing server 5, receiving the notification, evaluates the paging traffic in the paging area corresponding to the paging period B. For example, the server compares the number of mobile stations under intermittent reception in the paging period B and the traffics at the respective reception timings B1-B3 in the paging area B, with their respective predetermined thresholds preliminarily set in tables held by itself (location information managing server 5), to evaluate the traffic volume. The evaluation on the traffic volume herein is carried out by comparing the actual number of mobile stations under intermittent reception at each reception timing B1-B3 in the paging period B in the paging area B, with an average of the numbers of mobile stations belonging to the corresponding reception timings and by comparing the traffics at the respective reception timings B1-B3 with a predetermined traffic threshold. It is noted that the evaluation methods are not limited to these and the evaluation may be carried out by any other method than the above.

When the evaluation results in finding a free space at the reception timing B1 in the paging area B, the server instructs the mobile station 1 to perform intermittent reception at the reception timing B1 in the paging period B. The mobile station 1 performs the intermittent reception at the designated reception timing B1.

If the traffic is heavy at all the reception timings B1-B3 in the paging period B, location information managing server 5 instructs the mobile station 1 to perform the intermittent reception in the current paging period A or to perform the intermittent reception in the paging period C. The mobile station 1, receiving this instruction, performs the intermittent reception at the designated reception timing.

### ④ Case where location information managing server changes reception timing at arbitrary point

Suppose while in the paging area B the mobile station 1 was under intermittent reception at the reception timing B2 in the paging period B, a sudden increase of paging traffic occurred at the reception timing B2. In order to avoid oppression of the paging channel, location information managing server 5 notifies the mobile station 1 of an available reception timing B3 and the mobile station 1, receiving this notification, performs the intermittent reception at the reception timing B3.

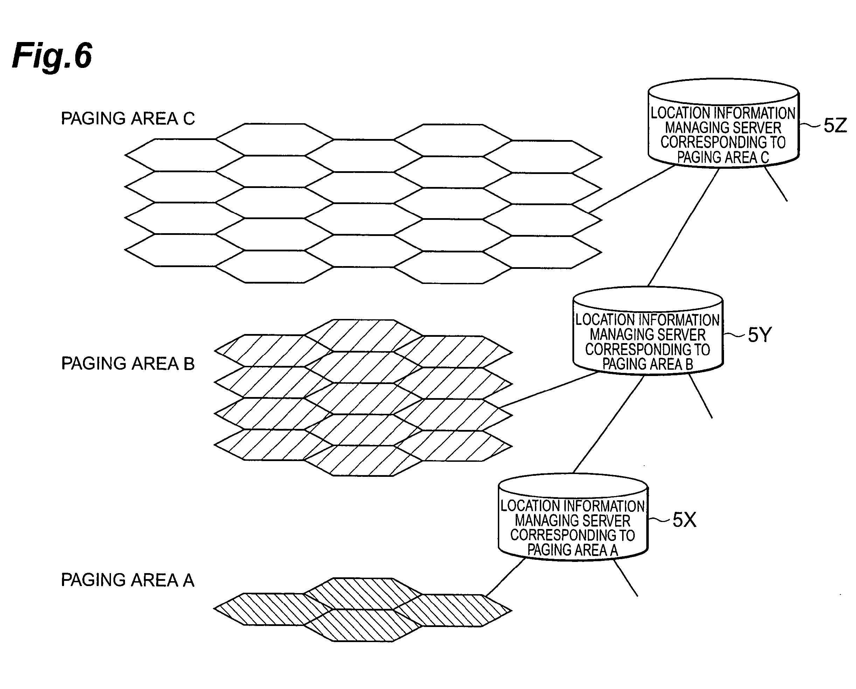

A modification example of the above second paging method is the scheme of Fig. 6. Namely, location information managing servers 5Z, 5Y, and 5X shown in Fig. 6 are in a hierarchical relation in the direction of size of paging area with the location information managing server 5Z corresponding to the paging area C at the top. The server in each layer has a function of recognizing the number of mobile stations having moved into the sleep mode and the timings of intermittent reception of the mobile stations in the sleep mode. In the sleep mode, the aforementioned processing in the second paging method is executed in each layer.

By executing the processing in the second paging method in the hierarchical structure described above, it becomes feasible to spread the processing concentrated on one location information managing server, into the layers and thus to prevent an excessive load from being exerted on one location information managing server. The load scattering configuration can avoid such an accident that the entire system goes down upon failure.

### (1) First processing operation of base station 2

The first processing operation of base station 2 will be described along Fig. 7. Base station 2 determines whether there is a notification of a new transition into the sleep mode or a change of the sleep state or a movement into a new cell from mobile station 1 (701). With no notification from mobile station 1, the base station 2 evaluates the current traffic at the reception timing in the paging period for intermittent reception of mobile station 1 in the cell of its own, for example, at intervals of a fixed time. For example, supposing mobile station 1 is under intermittent reception at the reception timing A1 in the paging period A at this point, base station 2 evaluates the traffic at the reception timing A1 in the paging period A in the cell 3A under control of its own (710). For example, the evaluation on the traffic volume herein is carried out by comparing the actual number of mobile stations under intermittent reception at the reception timing A1 in the paging period A in the cell 3A with an average of the numbers of mobile stations under intermittent reception at the reception timings A1-A3 and by comparing the traffic at the reception timing A1 with a predetermined traffic threshold. It is noted that the evaluation methods are not limited to these and the evaluation may be conducted by any other method than the above.

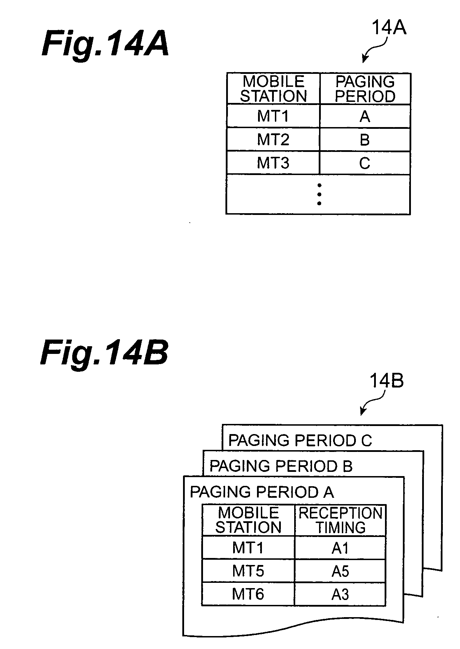

At the above 710 base station 2 may use the tables of Figs. 14A and 14B, for example, to determine the average of the numbers of mobile stations and the paging traffic volume, thereby performing the evaluation on traffic. Figs. 14A and 14B show configuration examples of the tables held by base station 2. Base station 2 has table 14A for recognizing mobile stations 1 located in the cell under control of its own and having moved into the sleep mode, and this table 14A stores a correspondence between identification numbers of mobile station ls (MT1, MT2, etc.) and paging periods for intermittent reception of mobile stations 1. Base station 2 also has table 14B used in managing the numbers of mobile stations corresponding to the respective reception timings in the cell under control of its own and the paging traffic volumes at the reception timings, for each of individual paging periods, and this table 14B stores for each of the paging periods a correspondence between identification numbers of mobile stations under intermittent reception in the relevant paging period and reception timings thereof.

When there is a free space in the traffic at 710, base station 2 performs nothing. On the other hand, when the traffic is heavy, the base station 2 measures the traffic at the other reception timings A2, A3 in the paging period A and the traffic in the other paging periods B, C (711). Then the base station 2 determines, based on the result of the measurement, whether there is a reception timing or a paging period with a margin in the traffic (712). The determination herein on the presence or absence of a margin at each reception timing can be made by adopting a method similar to the traffic evaluation method at above 710.

When there is a reception timing or a paging period with a margin in traffic at 712, the base station 2 notifies the mobile station 1 of the reception timing or the paging period, or of the both (713). On the other hand, when there is neither a reception timing nor a paging period with a margin in traffic, the base station 2 notifies the mobile station 1 to maintain the current state (706).

If there is a notification from mobile station 1 at 701, the base station 2 determines whether the notification is one to notify that the mobile station 1 newly moves into the sleep mode (702). When the notification is one to notify the new transition into the sleep mode, the base station 2 measures the traffic at a certain reception timing in the paging period A (e.g., the reception timing A1) (703) and determines whether there is a margin in traffic at the reception timing A1 in the paging period A (704). The determination on the presence or absence of a margin herein can be made by adopting a method similar to the traffic evaluation method at above 710.

When the determination at 704 is that there is a margin in traffic at the reception timing A1, the base station 2 notifies the mobile station 1 of the available reception timing A1 (705). On the other hand, when the determination at 704 is that there is no margin in traffic at the reception timing A1, the base station 2 measures the traffic at the other reception timings A2, A3 in the paging period A and the traffic in the other paging periods B, C (711). Then the base station 2 determines, based on the result of the measurement, whether there is a reception timing or a paging period with a margin in traffic (712). The determination herein on the presence or absence of a margin at each reception timing can be made by adopting a method similar to the traffic evaluation method at above 710.

When at 712 there is a reception timing or a paging period with a margin in traffic, the base station 2 notifies the mobile station 1 of the reception timing or the paging period, or of the both (713). On the other hand, there is neither a reception timing nor a paging period with a margin in traffic, the base station 2 notifies the mobile station 1 to maintain the current state (706).

When at 702 the notification from mobile station 1 is not one to notify that the mobile station 1 newly moves into the sleep mode, the base station 2 determines whether the notification is one to notify that the mobile station 1 changes the sleep state (707). When the notification is one to notify that the mobile station 1 changes the sleep state, the base station 2 measures the paging traffic at each reception timing in the paging period designated by the mobile station 1 (708). Let us assume herein that, for example, the mobile station 1 is about to change from the paging period A to the paging period B, while designating the paging period B as a period after the change. At 708, therefore, the base station 2 measures the paging traffics at the respective reception timings B1-B3 in the designated paging period B.

Then the base station 2 determines at 704 whether there is a margin in traffic at each reception timing in the paging period B (704). The determination on the presence or absence of a margin herein can be made by adopting a method similar to the traffic evaluation method at above 710. When the determination at 704 is that there is a margin in traffic at one of the reception timings, the base station 2 notifies the mobile station 1 of the reception timing with a margin (705). On the other hand, when the determination at 704 is that there is no margin in traffic at either of the reception timings, the base station 2 measures the traffic at each reception timing in the other paging period (the paging period C as a remaining candidate) (711) and determines, based on the result of the measurement, whether there is a reception timing with a margin in traffic (712). The determination on the presence or absence of a margin at each reception timing herein can be made by adopting a method similar to the traffic evaluation method at above 710. When at 712 there is a reception timing with a margin in traffic, the base station 2 notifies the mobile station 1 of the reception timing (713). On the other hand, when there is no reception timing with a margin in traffic, the base station 2 notifies the mobile station 1 to maintain the current state (706).

When at 707 the notification from mobile station 1 is not one to notify that the mobile station 1 changes the sleep state, the base station 2 determines whether the notification is one to notify that the mobile station 1 is in the sleep mode and has moved into a new cell (709). If the notification is not one to notify that the mobile station 1 is in the sleep mode and has moved into a new cell, the base station 2 returns to 701 to repeat the processing. On the other hand, when the notification is one to notify that the mobile station 1 is in the sleep mode and has moved into a new cell, the base station 2 measures the paging traffic at each reception timing in the paging period notified of along with the notification by the mobile station 1 (i.e., the paging period used for intermittent reception before the movement of mobile station 1 into the new cell) (708). For example, where the paging period B is notified of by mobile station 1, the base station 2 measures the paging traffics at the respective reception timings B1-B3 in the paging period B.

Then the base station 2 determines at 704 whether there is a margin in traffic at each reception timing in the paging period B (704). The determination on the presence or absence of a margin herein can be made by adopting a method similar to the traffic evaluation method at above 710. When the determination at 704 is that there is a margin in traffic at one of the reception timings, the base station 2 notifies the mobile station 1 of the reception timing with a margin (705). On the other hand, when the determination at 704 is that there is no margin in traffic at either of the reception timings, the base station 2 measures the traffic at each reception timing in the other paging period (the paging period C as a remaining candidate) (711) and determines, based on the result of the measurement, whether there is a reception timing with a margin in traffic (712). The determination on the presence or absence of a margin at each reception timing herein can be made by adopting a method similar to the traffic evaluation method at above 710. When at 712 there is a reception timing with a margin in traffic, the base station 2 notifies the mobile station 1 of the reception timing (713). On the other hand, when there is no reception timing with a margin in traffic, the base station 2 notifies the mobile station 1 to maintain the current state (706).

In the above configuration, the base station 2 instructs the mobile station 1 to change both or either of the paging period and the reception timing, according to both or either of the number of mobile stations located in the cell and having moved into the sleep mode and the paging traffic of the paging channel, in the case where the mobile station 1 newly moves into the sleep mode, or in the case where the mobile station 1 previously having moved into the sleep mode moves into a new cell, or in the case where the mobile station 1 previously having moved into the sleep mode changes the sleep state, or in an arbitrary case determined by the base station 2, and the mobile station 1 performs the intermittent reception in the paging period and at the reception timing based on the change instruction; therefore, it can achieve the effects of circumventing the problem of congestion of the paging traffic at a specific reception timing and, at the same time as it, smoothing the paging traffics at the respective reception timings.

Without any notification from mobile station 1, the base station 2 evaluates the current traffic at the reception timing in the paging period for intermittent reception of the mobile station 1 and, if the base station 2 determines that the traffic is heavy, the base station 2 searches for another reception timing or another paging period with a margin, notifies the mobile station 1 of the reception timing or the paging period with a margin, or of the both, and makes the mobile station 1 perform intermittent reception; therefore, even with a sudden increase of paging traffic at the reception timing under intermittent reception, it is feasible to quickly clear the congestion state.

### (2) Second processing operation of base station 2

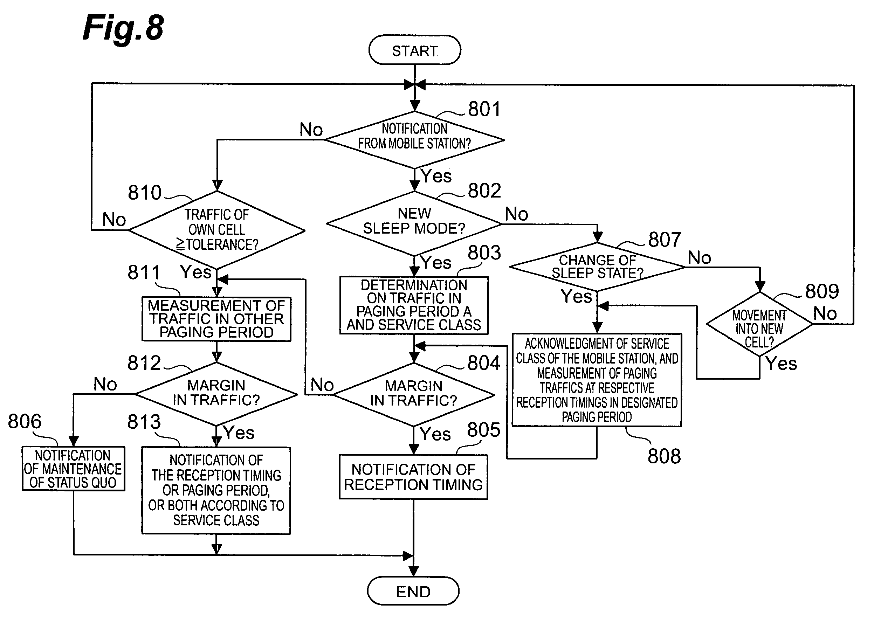

The second processing operation of base station 2 will be described along Fig. 8. Base station 2 determines whether there is a notification of a new transition into the sleep mode or a change of the sleep state or a movement into a new cell, from mobile station 1 (801). When there is no notification from mobile station 1, the base station 2 evaluates the current traffic at the reception timing in the paging period used for the intermittent reception of the mobile station 1 in the cell of its own, for example, at intervals of a fixed time. For example, supposing the mobile station 1 is under intermittent reception at the reception timing A1 in the paging period A at this moment, base station 2 evaluates the traffic at the reception timing A1 in the paging period A in the cell 3A under control of its own (810). For example, the evaluation on the traffic volume herein is conducted by comparing the actual number of mobile stations under intermittent reception at the reception timing A1 in the paging period A in the cell 3A with an average of the numbers of mobile stations under intermittent reception at the reception timings A1-A3 and by comparing the traffic at the reception timing A1 with a predetermined traffic threshold. It is noted that the evaluation methods are not limited to these and the evaluation may be conducted by any other method than the above.

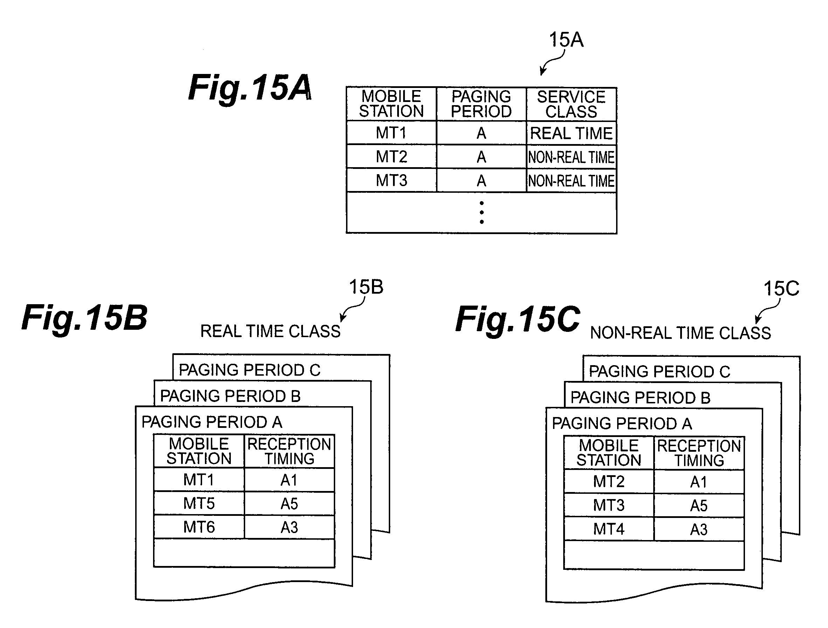

At above 810 the base station 2 may use, for example, the tables of Figs. 15A, 15B, and 15C to determine the average of the numbers of mobile stations and the paging traffic volume, thereby conducting the evaluation on traffic. Figs. 15A, 15B, and 15C show configuration examples of the tables held by base station 2. Base station 2 has table 15A for recognizing the mobile stations 1 located in the cell under control of its own and having moved into the sleep mode, and this table 15A stores a correspondence among identification numbers of mobile stations (MT1, MT2, etc.), paging periods under intermittent reception of the mobile stations 1, and service classes to which the mobile stations 1 belong. Base station 2 also has tables 15B, 15C for management of paging periods and reception timings in the respective service classes. The table 15B stores for each of the paging periods, a correspondence between identification numbers of mobile stations under intermittent reception in the relevant paging period and reception timings thereof, and the table 15C is also configured in similar fashion. An example of the service classes herein is one in which there are a real time class for which quickness of processing is strongly required and a non-real time class for which quickness of processing is not required but power saving or the like is required, and the present invention can also be applied to the other cases that can be subjected to classification.

When at 810 there is a free space in traffic, base station 2 conducts nothing. On the other hand, when the traffic is heavy, the base station 2 measures the traffic at the other reception timings A2, A3 in the paging period A and the traffic in the other paging periods B, C (811). Then the base station 2 determines, based on the result of the measurement, whether there is a reception timing or a paging period with a margin in traffic (812). The determination on the presence or absence of a margin at each reception timing herein can be made by adopting a method similar to the traffic evaluation method at above 810.

When at 812 there is a reception timing or a paging period with a margin in traffic, the base station 2 notifies the mobile station 1 of the reception timing or the paging period, or of the both, according to the service class (813). On the other hand, when there is neither a reception timing nor a paging period with a margin in traffic, the base station 2 notifies the mobile station 1 to maintain the current state (806).

Incidentally, when at 801 there is a notification from mobile station 1, the base station 2 determines whether the notification is one to notify that the mobile station 1 newly moves into the sleep mode (802). When the notification is one to notify that the mobile station 1 newly moves into the sleep mode, the base station 2 checks the service class of the mobile station 1 and measures the traffic in the paging period A corresponding to the service class for intermittent reception of the mobile station 1 (803), and the base station 2 determines whether there is a margin in the traffic in the paging period (804). The determination on the presence or absence of a margin herein can be made by adopting a method similar to the traffic evaluation method at above 810.

When the determination at 804 is that there is a margin in traffic at either of the reception timings, the base station 2 notifies the mobile station 1 of an available reception timing according to the service class (805). For example, when the service class is the real time class, the base station 2 assigns the mobile station 1 a reception timing with a margin as large as possible, in order to avoid occurrence of call loss. On the other hand, when the determination at 804 is that there is no margin in traffic at either of the reception timings, the base station 2 measures the traffic at the other reception timings A2, A3 in the paging period A and the traffic in the other paging periods B, C (811). Then the base station 2 determines, based on the result of the measurement, whether there is a reception timing or a paging period with a margin in traffic (812). The determination on the presence or absence of a margin at each reception timing herein can be made by adopting a method similar to the traffic evaluation method at above 810.

When at 812 there is a reception timing or a paging period with a margin in traffic, the base station 2 notifies the mobile station 1 of the reception timing or the paging period, or of the both, according to the service class (813). On the other hand, when there is neither a reception timing nor a paging period with a margin in traffic, the base station 2 notifies the mobile station 1 to maintain the current state (806).

When at 802 the notification from mobile station 1 is not one to notify that the mobile station 1 newly moves into the sleep mode, the base station 2 determines whether the notification is one to notify that the mobile station 1 changes the sleep state (807). When the notification is one to notify that the mobile station 1 changes the sleep state, the base station 2 checks the service class of the mobile station 1 and measures the paging traffics at the respective reception timings in the paging period designated by the mobile station 1 (808). Let us suppose herein, for example, that the mobile station 1 is about to change from the paging period A to the paging period B and designated the paging period B as a period after the change. Therefore, at 808 the base station 2 measures the paging traffics at the respective reception timings B1-B3 in the designated paging period B.

Then the base station 2 determines at 804, whether there is a margin in traffic at each reception timing in the paging period B (804). The determination on the presence or absence of a margin herein can be made by adopting a method similar to the traffic evaluation method at above 810. When the determination at 804 is that there is a margin in traffic at either of the reception timings, the base station 2 notifies the mobile station 1 of the reception timing with a margin, according to the service class (805). On the other hand, when the determination at 804 is that there is no margin in traffic at either of the reception timings, the base station 2 measures the traffics at the respective reception timings in the other paging period (the paging period C as a remaining candidate) (811) and determines, based on the result of the measurement, whether there is a reception timing with a margin in traffic (812). The determination on the presence or absence of a margin at each reception timing herein can be made by adopting a method similar to the traffic evaluation method at above 810. When at 812 there is a reception timing with a margin in traffic, the base station 2 notifies the mobile station 1 of the reception timing, according to the service class (813). On the other hand, there is no reception timing with a margin in traffic, the base station 2 notifies the mobile station 1 to maintain the current state (806).

When at 807 the notification from mobile station 1 is not one to notify that the mobile station 1 changes the sleep state, the base station 2 determines whether the notification is one to notify that the mobile station 1 is in the sleep mode and has moved into a new cell (809). When the notification is not one to notify that the mobile station 1 is in the sleep mode and has moved into a new cell, the base station 2 returns to 801 to repeat the processing. On the other hand, when the notification is one to notify that the mobile station 1 is in the sleep mode and has moved into a new cell, the base station 2 checks the service class of the mobile station 1 and measures the paging traffics at the respective reception timings in the paging period notified of along with the notification by the mobile station 1 (i.e., the paging period used for the intermittent reception before the cell movement by the mobile station 1) (808). For example, when the paging period B is notified of by the mobile station 1, the base station 2 measures the paging traffics at the respective reception timings B1-B3 in the paging period B.

Then the base station 2 determines at 804, whether there is a margin in traffic at each reception timing in the paging period B (804). The determination on the presence or absence of a margin herein can be made by adopting a method similar to the traffic evaluation method at above 810. When the determination at 804 is that there is a margin in traffic at either of the reception timings, the base station 2 notifies the mobile station 1 of the reception timing with a margin (805). On the other hand, when the determination at 804 is that there is no margin in traffic at either of the reception timings, the base station 2 measures the traffics at the respective reception timings in the other paging period (the paging period C as a remaining candidate) (811) and determines, based on the result of the measurement, whether there is a reception timing with a margin in traffic (812). The determination on the presence or absence of a margin at each reception timing herein can be made by adopting a method similar to the traffic evaluation method at above 810. When at 812 there is a reception timing with a margin in traffic, the base station 2 notifies the mobile station 1 of the reception timing, according to the service class (813). On the other hand, when there is no reception timing with a margin in traffic, the base station 2 notifies the mobile station 1 to maintain the current state (806).

Since the above enables the setting of both or either of the paging period and the reception timing, according to the service class of the mobile station, it is feasible to implement appropriate intermittent reception according to the service class at the mobile station. For example, the real time class or the non-real time class can be set as a service class for each mobile station, and by setting a long paging period for the mobile station in the non-real time class, it becomes feasible to implement effective battery saving. By setting a short paging period for the mobile station in the real time class, it becomes feasible to minimize the paging delay.

### (3) First processing operation of location information managing server

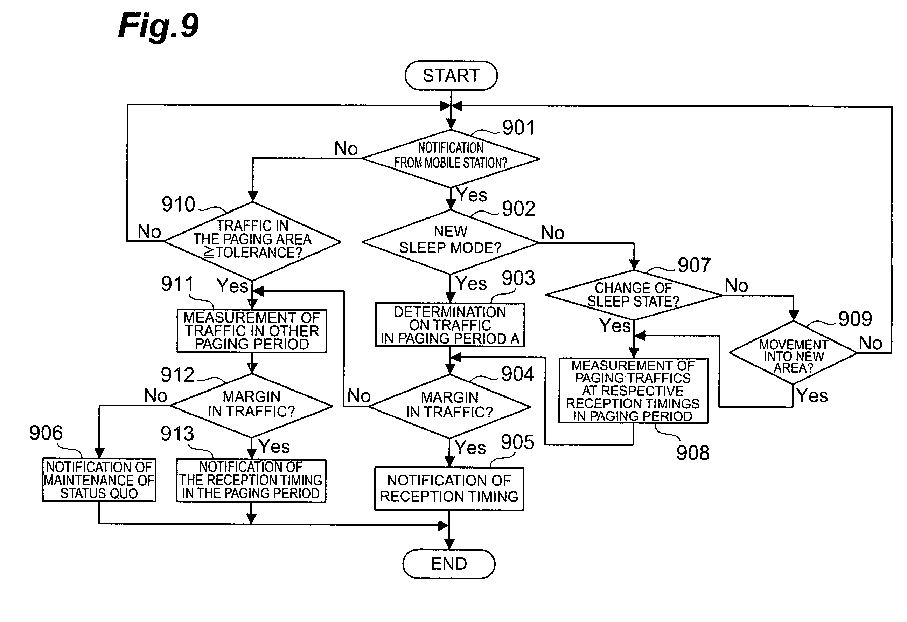

The first processing operation of location information managing server 5 will be described along Fig. 9. Location information managing server 5 determines whether there is a notification of a new transition into the sleep mode or a change of the sleep state or a movement into a new paging area from mobile station 1 (901). When there is no notification from mobile station 1, the current traffic is evaluated at the reception timing in the paging period under intermittent reception of mobile station 1 in the paging area under control, for example, at intervals of a fixed time. For example, supposing mobile station 1 is under intermittent reception at the reception timing A1 in the paging period A at this moment, base station 2 evaluates the traffic at the reception timing A1 in the paging period A in the paging area under control thereof (910). For example, the evaluation on traffic volume herein is carried out by comparing the actual number of mobile stations under intermittent reception at the reception timing A1 in the paging period A in the paging area under control with an average of the numbers of mobile stations under intermittent reception at the reception timings A1-A3 and by comparing the traffic at the reception timing A1 with a predetermined traffic threshold. It is noted that the evaluation methods are not limited to these and the evaluation may be conducted by any other method than the above.

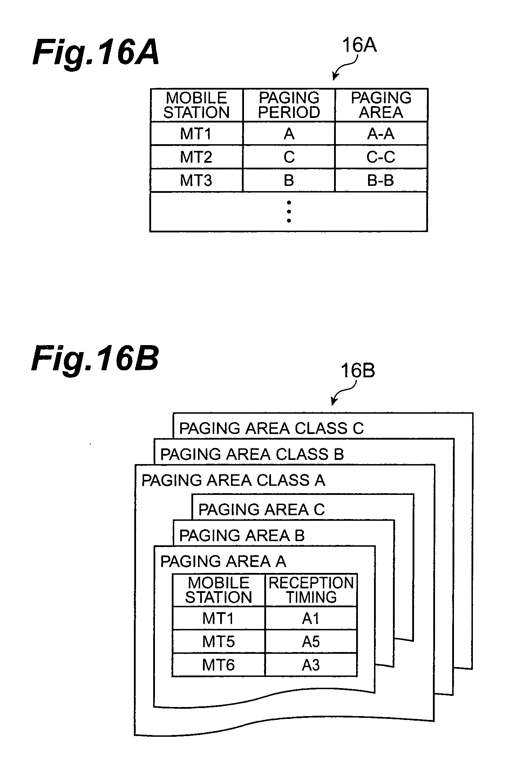

At above 910 location information managing server 5 may use, for example, the tables of Figs. 16A and 16B to determine the average of the numbers of mobile stations and the paging traffic volume, thereby conducting the evaluation on traffic. Figs. 16A and 16B show configuration examples of the tables held by location information managing server 5. Location information managing server 5 has table 16A for recognizing mobile stations located in the paging areas under management thereof and having moved into the sleep mode, and this table 16A stores a correspondence among identification numbers of mobile stations (MT1, MT2, etc.), paging periods of the mobile stations under intermittent reception, and paging areas on which the mobile stations are in location registration. Location information managing server 5 also has table 16B used in managing the location information of mobile stations and in managing the number of mobile stations corresponding to each reception timing and the paging traffic volume at the reception timing, for each of the paging periods, and this table 16B stores for each of paging area classes and for each of paging areas, a correspondence between identification numbers of mobile stations under intermittent reception in a paging period corresponding to the relevant paging area and their reception timings.

When at 910 there is a free space in traffic, location information managing server 5 performs nothing. On the other hand, when the traffic is heavy, the server measures the traffic at the other reception timings A2, A3 in the paging period A and the traffic in the other paging periods B, C (911). Then the server determines, based on the result of the measurement, whether there is a reception timing or a paging period with a margin in traffic (912). The determination on the presence or absence of a margin at each reception timing herein can be made by adopting a method similar to the traffic evaluation method at above 910.

When at 912 there is a reception timing or a paging period with a margin in traffic, the server notifies the mobile station 1 of the reception timing or the paging period, or of the both (913). On the other hand, when there is neither a reception timing nor a paging period with a margin in traffic, the server notifies the mobile station 1 to maintain the current state (906).

Incidentally, when at 901 there is a notification from mobile station 1, the server determines whether the notification is one to notify that the mobile station 1 newly moves into the sleep mode (902). When the notification is one to notify that the mobile station newly moves into the sleep mode, the server measures the traffic at a certain reception timing in the paging period A (e.g., the reception timing A1) (903) and determines whether there is a margin in traffic at the reception timing A1 in the paging period A (904). The determination on the presence or absence of a margin can be made by adopting a method similar to the traffic evaluation method at above 910.

When the determination at 904 is that there is a margin in traffic at the reception timing A1, the server notifies the mobile station 1 of the available reception timing A1 (905). On the other hand, when the determination at 904 is that there is no margin in traffic at the reception timing A1, the server measures the traffic at the other reception timings A2, A3 in the paging period A and the traffic in the other paging periods B, C (911). Then the server determines, based on the result of the measurement, whether there is a reception timing or a paging period with a margin in traffic (912). The determination on the presence or absence of a margin at each reception timing herein can be made by adopting a method similar to the traffic evaluation method at above 910.

When at 912 there is a reception timing or a paging period with a margin in traffic, the server notifies the mobile station 1 of the reception timing or the paging period, or of the both (913). On the other hand, when there is neither a reception timing nor a paging period with a margin in traffic, the server notifies the mobile station 1 to maintain the current state (906).

When at 902 the notification from mobile station 1 is not one to notify that the mobile station 1 newly moves into the sleep mode, the server determines whether the notification is one to notify that the mobile station 1 changes the sleep state (907). When the notification is one to notify that the mobile station 1 changes the sleep state, the server measures the paging traffic at each reception timing in the paging period designated by the mobile station 1 (908). For example, let us suppose herein that the mobile station 1 is about to change from the paging period A to the paging period B and designated the paging period B as a period after the change. Therefore, at 908 the server measures the paging traffics at the respective reception timings B1-B3 in the designated paging period B.

Then the server determines at 904, whether there is a margin in traffic at each reception timing in the paging period B (904). The determination on the presence or absence of a margin herein can be made by adopting a method similar to the traffic evaluation method at above 910. When the determination at 904 is that there is a margin in traffic at either of the reception timings, the server notifies the mobile station 1 of the reception timing with a margin (905). On the other hand, when the determination at 904 is that there is no margin in traffic at either of the reception timings, the server measures the traffics at the respective reception timings in the other paging period (the paging period C as a remaining candidate) (911) and determines, based on the result of the measurement, whether there is a reception timing with a margin in traffic (912). The determination on the presence or absence of a margin at each reception timing herein can be made by adopting a method similar to the traffic evaluation method at above 910. When at 912 there is a reception timing with a margin in traffic, the server notifies the mobile station 1 of the reception timing (913). On the other hand, when there is no reception timing with a margin in traffic, the server notifies the mobile station 1 to maintain the current state (906).

When at 907 the notification from mobile station 1 is not one to notify that the mobile station 1 changes the sleep state, the server determines whether the notification is one to notify that the mobile station 1 is in the sleep mode and has moved into a new paging area (909). When the notification is not one to notify that the mobile station 1 is in the sleep mode and has moved into a new paging area, the server returns to 901 to repeat the processing. On the other hand, when the notification is one to notify that the mobile station 1 is in the sleep mode and has moved into a new paging area, the server measures the paging traffics at the respective reception timings in the paging period notified of along with the notification by the mobile station 1 (i.e., the paging period used for the intermittent reception before the movement of the paging area by the mobile station 1) (908). For example, if the paging period B is notified of by the mobile station 1, the server measures the paging traffics at the respective reception timings B1-B3 in the paging period B.

Then the server determines at 904, whether there is a margin in traffic at each reception timing in the paging period B (904). The determination on the presence or absence of a margin herein can be made by adopting a method similar to the traffic evaluation method at above 910. When the determination at 904 is that there is a margin in traffic at either of the reception timings, the server notifies the mobile station 1 of the reception timing with a margin (905). On the other hand, when the determination at 904 is that there is no margin in traffic at either of the reception timings, the server measures the traffics at the respective reception timings in the other paging period (the paging period C as a remaining candidate) (911) and determines, based on the result of the measurement, whether there is a reception timing with a margin in traffic (912). The determination on the presence or absence of a margin at each reception timing herein can be made by adopting a method similar to the traffic evaluation method at above 910. When at 912 there is a reception timing with a margin in traffic, the server notifies the mobile station 1 of the reception timing (913). On the other hand, when there is no reception timing with a margin in traffic, the server notifies the mobile station 1 to maintain the current state (906).

In the above configuration, the location information managing server instructs the mobile station to change both or either of the paging period and the reception timing, according to both or either of the number of mobile stations in the sleep mode located in each paging area and the paging traffics at the respective reception timings of the paging channel in each paging area, in the case where the mobile station newly moves into the sleep mode, or in the case where the mobile station previously having moved into the sleep mode changes the sleep state, or in the case where the mobile station previously having moved into the sleep mode moves into a new paging area, or in an arbitrary case determined by the location information managing server, and the mobile station performs the intermittent reception in the paging period and at the reception timing based on the change instruction; therefore, it is feasible to achieve the effects of circumventing the problem of congestion of paging traffic at a specific reception timing in the paging area and, at the same time as it, smoothing the paging traffics at the respective reception timings.

Without any notification from mobile station 1, the server evaluates the current traffic at the reception timing in the paging period of intermittent reception at the mobile station 1 and, if location information managing server 5 determines that the traffic is heavy, the server searches for another reception timing or another paging period with a margin, notifies the mobile station 1 of the reception timing or the paging period with a margin, or of the both, and makes the mobile station 1 perform intermittent reception; therefore, even with a sudden increase in the paging traffic at the reception timing in intermittent reception, it is feasible to quickly clear the congestion state.

### (4) Second processing operation of location information managing server

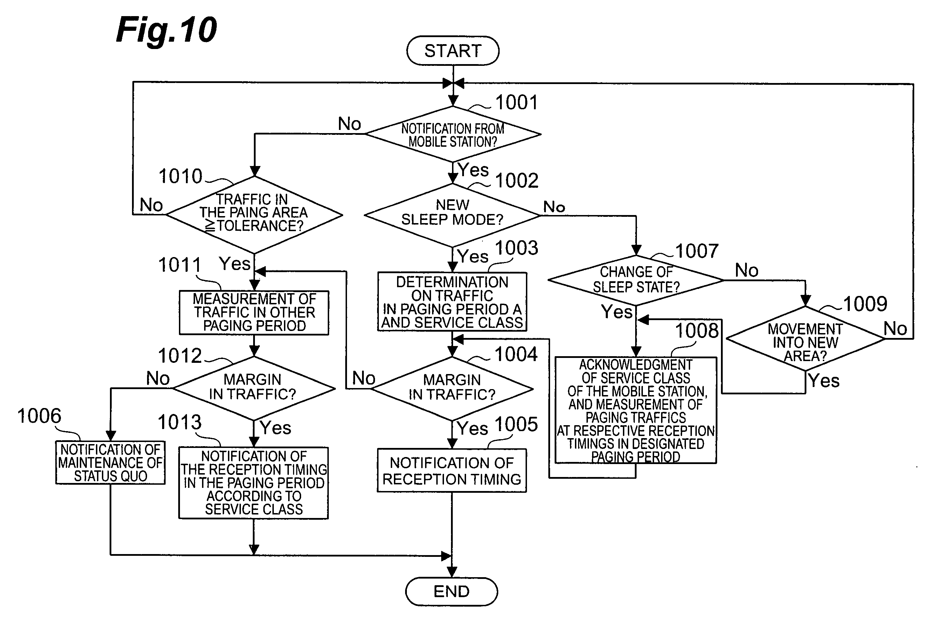

The second processing operation of location information managing server 5 will be described along Fig. 10. Location information managing server 5 determines whether there is a notification of a new transition into the sleep mode or a change of the sleep state or a movement into a new paging area, from mobile station 1 (1001). When there is no notification from mobile station 1 herein, the server evaluates the current traffic at the reception timing in the paging period used for intermittent reception by mobile station 1 in the paging area under control thereof, for example, at intervals of a fixed time. For example, supposing the mobile station 1 is under intermittent reception at the reception timing A1 in the paging period A at this moment, base station 2 evaluates the traffic at the reception timing A1 in the paging period A in the paging area under control thereof (1010). For example, the evaluation on traffic volume herein is carried out by comparing the actual number of mobile stations under intermittent reception at the reception timing A1 in the paging period A in the paging area under control, with an average of the numbers of mobile stations under intermittent reception at the reception timings A1-A3 and by comparing the traffic at the reception timing A1 with a predetermined traffic threshold. It is noted that the evaluation methods are not limited to these and the evaluation may be carried out by any other method than the above.

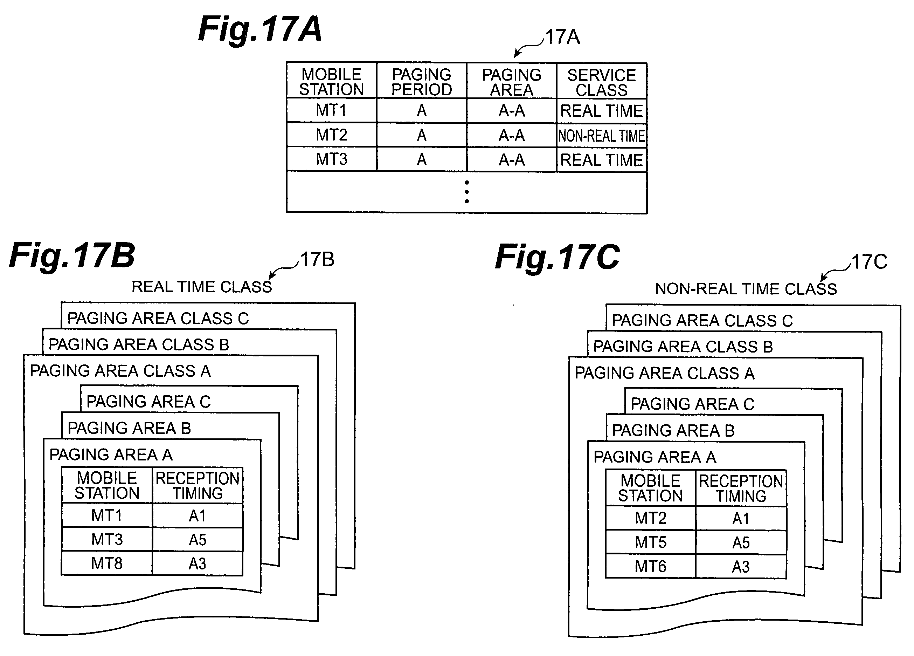

At above 1010 the location information managing server 5 may use, for example, the tables of Figs. 17A, 17B, and 17C to determine the average of the numbers of mobile stations and the paging traffic volume, thereby conducting the evaluation on traffic. Figs. 17A, 17B, and 17C show configuration examples of the tables held by location information managing server 5. Location information managing server 5 has table 17A for recognizing the mobile stations located in the paging area under management and having moved into the sleep mode, and this table 17A stores a correspondence among identification numbers of mobile stations (MT1, MT2, etc.), paging periods of the mobile stations under intermittent reception, paging areas where the mobile stations are under location registration, and service classes to which the mobile stations belong. Location information managing server 5 has the tables 17B, 17C for managing the paging periods and reception timings in the respective service classes. The table 17B stores, for each of paging area classes and for each of paging areas, a correspondence between identification numbers of mobile stations under intermittent reception in a paging period corresponding to the relevant paging area, and reception timings thereof, and the table 17C is also configured in similar fashion. An example of the service classes herein is one in which there are a real time class for which quickness of processing is strongly required and a non-real time class for which quickness of processing is not required but power saving or the like is required, and the present invention can also be applied to the other cases that can be subjected to classification.

When at 1010 there is a free space in traffic, location information managing server 5 conducts nothing. On the other hand, when the traffic is heavy, the server measures the traffic at the other reception timings A2, A3 in the paging period A and the traffic in the other paging periods B, C (1011). Then the server determines, based on the result of the measurement, whether there is a reception timing or a paging period with a margin in traffic (1012). The determination on the presence or absence of a margin at each reception timing herein can be made by adopting a method similar to the traffic evaluation method at above 1010.

When at 1012 there is a reception timing or a paging period with a margin in traffic, the server notifies the mobile station 1 of the reception timing or the paging period, or of the both, according to the service class (1013). On the other hand, when there is neither a reception timing nor a paging period with a margin in traffic, the server notifies the mobile station 1 to maintain the current state (1006).

Incidentally, when at 1001 there is a notification from mobile station 1, the server determines whether the notification is one to notify that the mobile station 1 newly moves into the sleep mode (1002). If the notification is one to notify that the mobile station newly moves into the sleep mode, the server checks the service class of the mobile station 1 and measures the traffic in the paging period A corresponding to the service class for intermittent reception by the mobile station 1 (1003) and the server determines whether there is a margin in traffic in the paging period (1004). The determination on the presence or absence of a margin herein can be made by adopting a method similar to the traffic evaluation method at above 1010.

When the determination at 1004 is that there is a margin in traffic at the reception timing A1, the server notifies the mobile station 1 of an available reception timing according to the service class (1005). For example, when the service class is the real time class, the server assigns the mobile station a reception timing with a margin as large as possible, in order to avoid occurrence of call loss. On the other hand, when the determination at 1004 is that there is no margin in traffic at the reception timing A1, the server measures the traffic at the other reception timings A2, A3 in the paging period A and the traffic in the other paging periods B, C (1011). Then the server determines, based on the result of the measurement, whether there is a reception timing or a paging period with a margin in traffic (1012). The determination on the presence or absence of a margin at each reception timing herein can be made by adopting a method similar to the traffic evaluation method at above 1010.

When at 1012 there is a reception timing or a paging period with a margin in traffic, the server notifies the mobile station 1 of the reception timing or the paging period, or of the both, according to the service class (1013). On the other hand, when there is neither a reception timing nor a paging period with a margin in traffic, the server notifies the mobile station 1 to maintain the current state (1006).

When at 1002 the notification from mobile station 1 is not one to notify that the mobile station 1 newly moves into the sleep mode, the server determines whether the notification is one to notify that the mobile station 1 changes the sleep state (1007). When the notification is one to notify that the mobile station 1 changes the sleep state, the server checks the service class of the mobile station 1 and measures the paging traffics at the respective reception timings in the paging period designated by the mobile station 1 (1008). For example, let us suppose herein that the mobile station 1 is about to change from the paging period A to the paging period B and designated the paging period B as a period after the change. Therefore, at 1008 the server measures the paging traffics at the respective reception timings B1-B3 in the designated paging period B.

Then the server determines at 1004, whether there is a margin in traffic at each reception timing in the paging period B (1004). The determination on the presence or absence of a margin herein can be made by adopting a method similar to the traffic evaluation method at above 1010. When the determination at 1004 is that there is a margin in traffic at either of the reception timings, the server notifies the mobile station 1 of the reception timing with a margin, according to the service class (1005). On the other hand, when the determination at 1004 is that there is no margin in traffic at either of the reception timings, the server measures the traffics at the respective reception timings in the other paging period (the paging period C as a remaining candidate) (1011) and determines, based on the result of the measurement, whether there is a reception timing with a margin in traffic (1012). The determination on the presence or absence of a margin at each reception timing herein can be made by adopting a method similar to the traffic evaluation method at above 1010. When at 1012 there is a reception timing with a margin in traffic, the server notifies the mobile station 1 of the reception timing, according to the service class (1013). On the other hand, when there is no reception timing with a margin in traffic, the server notifies the mobile station 1 to maintain the current state (1006).

When at 1007 the notification from mobile station 1 is not one to notify that the mobile station 1 changes the sleep state, the server determines whether the notification is one to notify that the mobile station 1 is in the sleep mode and has moved into a new paging area (1009). When the notification is not one to notify that the mobile station 1 is in the sleep mode and has moved into a new paging area, the server returns to 1001 to repeat the processing. On the other hand, when the notification is one to notify that the mobile station 1 is in the sleep mode and has moved into a new paging area, the server checks the service class of the mobile station 1 and measures the paging traffics at the respective reception timings in the paging period notified of along with the notification by the mobile station 1 (i.e., the paging period used for intermittent reception before the change of the paging area by the mobile station 1) (1008). For example, where the paging period B is notified of by the mobile station 1, the server measures the paging traffics at the respective reception timings B1-B3 in the paging period B.

Then the server determines at 1004, whether there is a margin in traffic at each reception timing in the paging period B (1004). The determination on the presence or absence of a margin herein can be made by adopting a method similar to the traffic evaluation method at above 1010. When the determination at 1004 is that there is a margin in traffic at either of the reception timings, the server notifies the mobile station 1 of the reception timing with a margin (1005). On the other hand, when the determination at 1004 is that there is no margin in traffic at either of the reception timings, the server measures the traffics at the respective reception timings in the other paging period (the paging period C as a remaining candidate) (1011) and determines, based on the result of the measurement, whether there is a reception timing with a margin in traffic (1012). The determination on the presence or absence of a margin at each reception timing herein can be made by adopting a method similar to the traffic evaluation method at above 1010. When at 1012 there is a reception timing with a margin in traffic, the server notifies the mobile station 1 of the reception timing, according to the service class (1013). On the other hand, when there is no reception timing with a margin in traffic, the server notifies the mobile station 1 to maintain the current state (1006).

The above configuration enables the setting of both or either of the paging period and the reception timing, according to the service class of the mobile station, whereby it is feasible to implement appropriate intermittent reception according to the service class at the mobile station. For example, the real time class or the non-real time class can be set as a service class for the mobile station, and by setting a long paging period for the mobile station in the non-real time class, it becomes feasible to implement effective battery saving. By setting a short paging period for the mobile station in the real time class, it also becomes feasible to minimize the paging delay.

### (5) Third processing operation of location information managing server

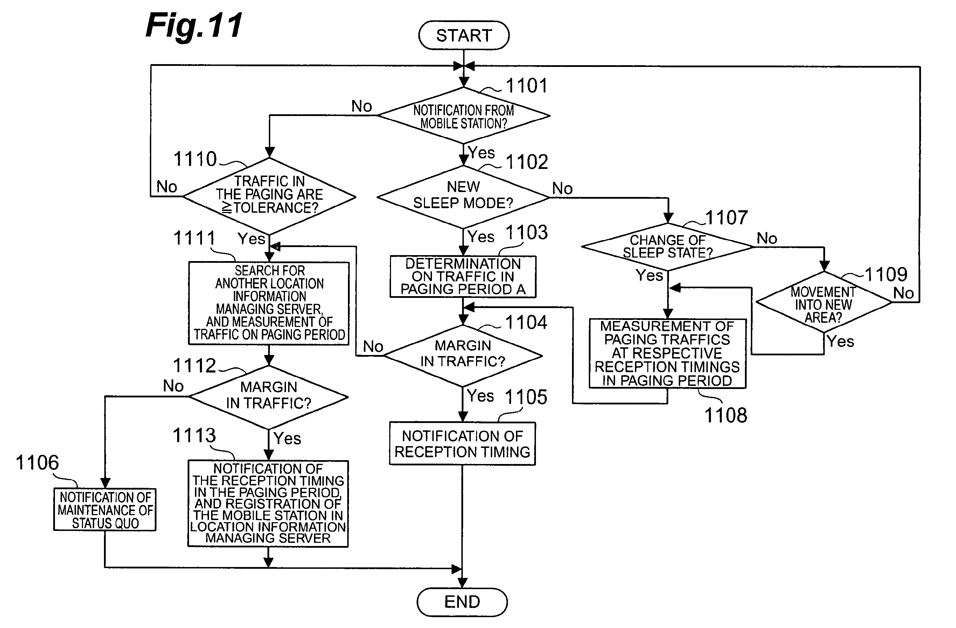

The third processing operation of location information managing server 5 will be described along Fig. 11. Location information managing server 5 determines whether there is a notification of a new transition into the sleep mode or a change of the sleep state or a movement into a new paging area, from mobile station 1 (1101). When there is no notification from mobile station 1, the server evaluates the current traffic at the reception timing in the paging period for intermittent reception of mobile station 1 in the paging area under control thereof, for example, at intervals of a fixed time. For example, supposing the mobile station 1 is under intermittent reception at the reception timing A1 in the paging period A at this moment, base station 2 evaluates the traffic at the reception timing A1 in the paging period A in the paging area under control thereof (1110). For example, the evaluation on traffic volume herein is carried out by comparing the actual number of mobile stations under intermittent reception at the reception timing A1 in the paging period A in the paging area under control, with an average of the numbers of mobile stations under intermittent reception at the reception timings A1-A3 and by comparing the traffic at the reception timing A1 with a predetermined traffic threshold. It is noted that the evaluation methods are not limited to these and the evaluation may be conducted by any other method than the above.

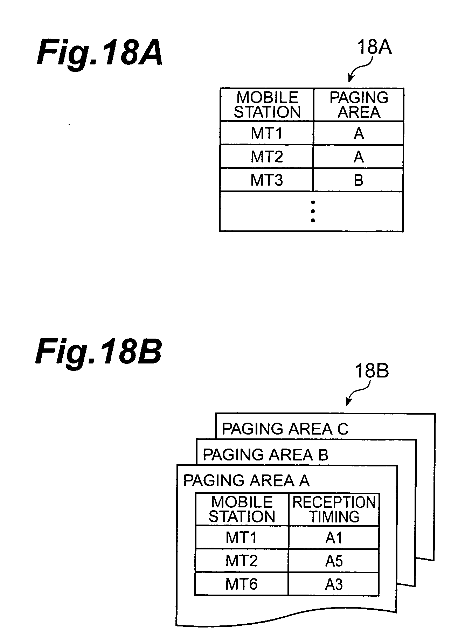

At above 1110 the location information managing server 5 may use, for example, the tables of Figs. 18A and 18B to determine the average of the numbers of mobile stations and the paging traffic volume, thereby performing the evaluation on traffic. Figs. 18A and 18B show configuration examples of the tables held by location information managing server 5. Location information managing server 5 has table 18A for recognizing the mobile stations located in the paging areas under management thereof and having moved into the sleep mode, and this table 18A stores a correspondence between identification numbers of mobile stations (MT1, MT2, etc.) and paging areas where the mobile stations are under location registration. Location information managing server 5 also has table 18B used in managing the location information of mobile stations and in managing the numbers of mobile stations corresponding to the respective reception timings and the paging traffic volumes at the reception timings, for each of the paging areas, and this table 18B stores, for each of the paging areas, a correspondence between identification numbers of mobile stations under intermittent reception in a paging period corresponding to the relevant paging area, and reception timings thereof.

When at 1110 the traffic has a free space, location information managing server 5 conducts nothing. On the other hand, when the traffic is heavy, location information managing server 5 searches for a superordinate or subordinate location information managing server with respect to the server 5 itself and measures the traffic at the other reception timings A2, A3 in the paging period A and the traffic in the other paging periods B, C (1111). Then the server determines, based on the result of the measurement, whether there is a reception timing or a paging period with a margin in traffic (1112). The determination on the presence or absence of a margin at each reception timing herein can be made by adopting a method similar to the traffic evaluation method at above 1110.

When at 1112 there is a reception timing or a paging period with a margin in traffic, the server notifies the mobile station 1 of the reception timing or the paging period, or of the both and, at the same time as it, the mobile station is added to the location information managing server (1113). On the other hand, when there is neither a reception timing nor a paging period with a margin in traffic, the server notifies the mobile station 1 to maintain the current state (1106).

If at 1101 there is a notification from mobile station 1, the server determines whether the notification is one to notify that the mobile station 1 newly moves into the sleep mode (1102). When the notification is one to notify that the mobile station newly moves into the sleep mode, the server measures the traffic at a certain reception timing in the paging period A (e.g., the reception timing A1) (1103) and determines whether there is a margin in traffic at the reception timing A1 in the paging period A (1104). The determination on the presence or absence of a margin herein can be made by adopting a method similar to the traffic evaluation method at above 1110.

When the determination at 1104 is that there is a margin in traffic at the reception timing A1, the server notifies the mobile station 1 of the available reception timing A1 (1105). On the other hand, when the determination at 1104 is that there is no margin in traffic at the reception timing A1, the location information managing server 5 searches for a superordinate or subordinate location information managing server with respect to the server 5 itself and measures the traffic at the other reception timings A2, A3 in the paging period A and the traffic in the other paging periods B, C (1111). Then the server determines, based on the result of the measurement, whether there is a reception timing or a paging period with a margin in traffic (1112). The determination on the presence or absence of a margin at each reception timing herein can be made by adopting a method similar to the traffic evaluation method at above 1110.

When at 1112 there is a reception timing or a paging period with a margin in traffic, the server notifies the mobile station 1 of the reception timing or the paging period, or of the both and, at the same time as it, the mobile station is added to the location information managing server (1113). On the other hand, when there is neither a reception timing nor a paging period with a margin in traffic, the server notifies the mobile station 1 to maintain the current state (1106).

When at 1102 the notification from the mobile station 1 is not one to notify that the mobile station 1 newly moves into the sleep mode, the server determines whether the notification is one to notify that the mobile station 1 changes the sleep state (1107). When the notification is one to notify that the mobile station 1 changes the sleep state, the server measures the paging traffics at the respective reception timings in the paging period designated by the mobile station 1 (1108). Let us assume herein, for example, that the mobile station 1 is about to change from the paging period A to the paging period B and designated the paging period B as a period after the change. Therefore, at 1108 the server measures the paging traffics at the respective reception timings B1-B3 in the designated paging period B.

Then the server determines at 1104, whether there is a margin in traffic at each reception timing in the paging period B (1104). The determination on the presence or absence of a margin herein can be made by adopting a method similar to the traffic evaluation method at above 1110. When the determination at 1104 is that there is a margin in traffic at either of the reception timings, the server notifies the mobile station 1 of the reception timing with a margin (1105). On the other hand, when the determination at 1104 is that there is no margin in traffic at either of the reception timings, the location information managing server 5 searches for a superordinate or subordinate location information managing server with respect to the server 5 itself, measures the traffic at each reception timing in the other paging period (the paging period C as a remaining candidate) (1111), and determines, based on the result of the measurement, whether there is a reception timing with a margin in traffic (1112). The determination on the presence or absence of a margin at each reception timing herein can be made by adopting a method similar to the traffic evaluation method at above 1110. When at 1112 there is a reception timing with a margin in traffic, the server notifies the mobile station 1 of the reception timing and, at the same time as it, the mobile station is added to the location information managing server (1113). On the other hand, when there is no reception timing with a margin in traffic, the server notifies the mobile station 1 to maintain the current state (1106).

When at 1107 the notification from mobile station 1 is not one to notify that the mobile station 1 changes the sleep state, the server determines whether the notification is one to notify that the mobile station 1 is in the sleep mode and has moved into a new paging area (1109). When the notification is not one to notify that the mobile station 1 is in the sleep mode and has moved into a new paging area, the server returns to 1101 to repeat the processing. On the other hand, when the notification is one to notify that the mobile station 1 is in the sleep mode and has moved into a new paging area, the server measures the paging traffics at the respective reception timings in the paging period notified of along with the notification by the mobile station 1 (i.e., the paging period used for intermittent reception before the change of the paging area by the mobile station 1) (1108). For example, where the paging period B is notified of by the mobile station 1, the server measures the paging traffics at the respective reception timings B1-B3 in the paging period B.

Then the server determines at 1104, whether there is a margin in traffic at each reception timing in the paging period B (1104). The determination on the presence or absence of a margin herein can be made by adopting a method similar to the traffic evaluation method at above 1110. When the determination at 1104 is that there is a margin in traffic at either of the reception timings, the server notifies the mobile station 1 of the reception timing with a margin (1105). On the other hand, when the determination at 1104 is that there is no margin in traffic at either of the reception timings, the location information managing server 5 searches for a superordinate or subordinate location information managing server with respect to the server 5 itself, measures the traffics at the respective reception timings in the other paging period (the paging period C as a remaining candidate) (1111), and determines, based on the result of the measurement, whether there is a reception timing with a margin in traffic (1112). The determination on the presence or absence of a margin at each reception timing herein can be made by adopting a method similar to the traffic evaluation method at above 1110. When at 1112 there is a reception timing with a margin in traffic, the server notifies the mobile station 1 of the reception timing and, at the same time as it, the mobile station is added to the location information managing server (1113). On the other hand, when there is no reception timing with a margin in traffic, the server notifies the mobile station 1 to maintain the current state (1106).

In the above configuration, the processing used to be concentrated on one location information managing server is scattered to the location information managing servers in the respective layers, whereby it is feasible to spread the processing load and decrease the processing load on one server. It can also circumvent the problem of stop of the entire system upon failure.

### (6) Fourth processing operation of location information managing server

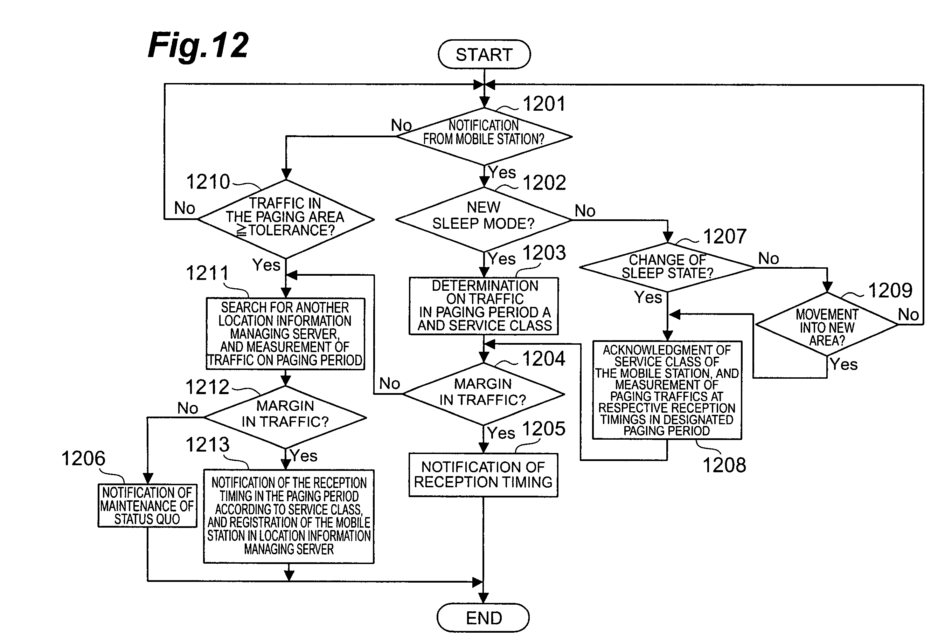

The fourth processing operation of location information managing server 5 will be described along Fig. 12. Location information managing server 5 determines whether there is a notification of a new transition into the sleep mode or a change of the sleep state or a movement into a new paging area, from mobile station 1 (1201). When there is no notification from mobile station 1, the server evaluates the current traffic at the reception timing in the paging period for intermittent reception of mobile station 1 in the paging area under control thereof, for example, at intervals of a fixed time. For example, supposing the mobile station 1 is under intermittent reception at the reception timing A1 in the paging period A at this moment, base station 2 evaluates the traffic at the reception timing A1 in the paging period A in the paging area under control thereof (1210). For example, the evaluation on traffic volume herein is carried out by comparing the actual number of mobile stations under intermittent reception at the reception timing A1 in the paging period A in the paging area under control, with an average of the numbers of mobile stations under intermittent reception at the reception timings A1-A3 and by comparing the traffic at the reception timing A1 with a predetermined traffic threshold. It is noted that the evaluation methods are not limited to these and the evaluation may also be conducted by any other method than the above.

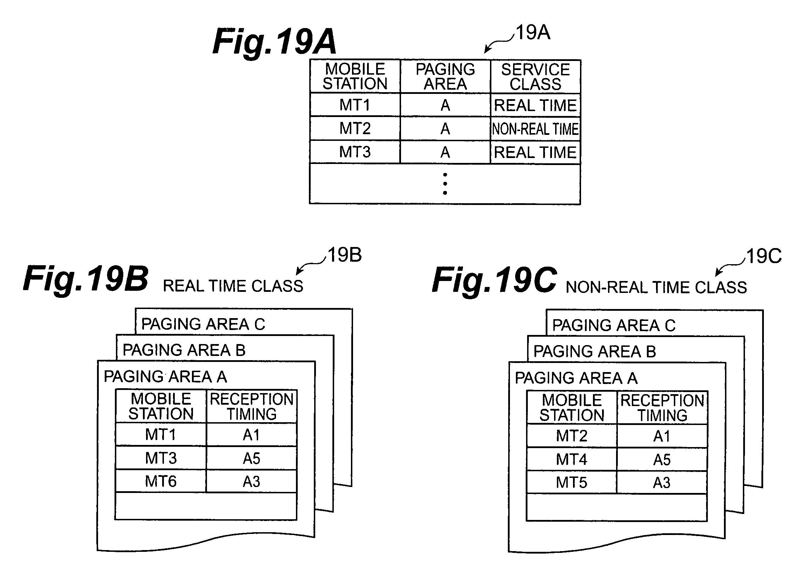

At above 1210 the location information managing server 5 may use, for example, the tables of Figs. 19A, 19B, and 19C to determine the average of the numbers of mobile stations and the paging traffic volume, thereby conducting the evaluation on traffic. Figs. 19A, 19B, and 19C show configuration examples of the tables held by location information managing server 5. Location information managing server 5 has table 19A for recognizing the mobile stations located in the paging areas under management thereof and having moved into the sleep mode, and this table 19A stores a correspondence among identification numbers of mobile stations (MT1, MT2, etc.), paging areas where the mobile stations are under location registration, and service classes to which the mobile stations belong. Location information managing server 5 also has tables 19B, 19C for managing the paging periods and reception timings in the respective service classes. The table 19B stores, for each of the paging areas, a correspondence between identification numbers of mobile stations under intermittent reception in the paging period corresponding to the relevant paging area, and reception timings thereof and the table 19C is also configured in similar fashion. An example of the service classes herein is one in which there are a real time class for which quickness of processing is strongly required and a non-real time class for which quickness of processing is not required but power saving or the like is required, and the invention can also be applied to the other cases that can be subjected to classification.

When at 1210 the traffic has a free space, location information managing server 5 performs nothing. On the other hand, when the traffic is heavy, location information managing server 5 searches for a superordinate or subordinate location information managing server with respect to the server 5 itself, and measures the traffic at the other reception timings A2, A3 in the paging period A and the traffic in the other paging periods B, C (1211). Then the server determines, based on the result of the measurement, whether there is a reception timing or a paging period with a margin in traffic (1212). The determination on the presence or absence of a margin at each reception timing herein can be made by adopting a method similar to the traffic evaluation method at above 1210.

When at 1212 there is a reception timing or a paging period with a margin in traffic, the server notifies the mobile station 1 of the reception timing or the paging period, or of the both, according to the service class, and, at the same time as it, the mobile station is added to the location information managing server (1213). On the other hand, when there is neither a reception timing nor a paging period with a margin in traffic, the server notifies the mobile station 1 to maintain the current state (1206).

When at 1201 there is a notification from the mobile station 1, the server determines whether the notification is one to notify that the mobile station 1 newly moves into the sleep mode (1202). When the notification is one to notify that the mobile station newly moves into the sleep mode, the server checks the service class of the mobile station 1, and measures the traffic in the paging period A corresponding to the service class for intermittent reception of the mobile station 1 (1203), and then the server determines whether there is a margin in traffic in the paging period (1204). The determination on the presence or absence of a margin herein can be made by adopting a method similar to the traffic evaluation method at above 1210.

When the determination at 1204 is that there is a margin in traffic at the reception timing A1, the server notifies the mobile station 1 of the available reception timing according to the service class (1205). For example, where the service class is the real time class, the server assigns the mobile station a reception timing with a margin as large as possible, in order to avoid occurrence of call loss. On the other hand, when the determination at 1204 is that there is no margin in traffic at the reception timing A1, the location information managing server 5 searches for a superordinate or subordinate location information managing server with respect to the server 5 itself, and measures the traffic at the other reception timings A2, A3 in the paging period A and the traffic in the other paging periods B, C (1211). Then the server determines, based on the result of the measurement, whether there is a reception timing or a paging period with a margin in traffic (1212). The determination on the presence or absence of a margin at each reception timing herein can be made by adopting a method similar to the traffic evaluation method at above 1210.

When at 1212 there is a reception timing or a paging period with a margin in traffic, the server notifies the mobile station 1 of the reception timing or the paging period, or of the both, according to the service class and, at the same time as it, the mobile station is added to the location information managing server (1213). On the other hand, when there is neither a reception timing nor a paging period with a margin in traffic, the server notifies the mobile station 1 to maintain the current state (1206).

When at 1202 the notification from mobile station 1 is not one to notify that the mobile station 1 newly moves into the sleep mode, the server determines whether the notification is one to notify that the mobile station 1 changes the sleep state (1207). When the notification is one to notify that the mobile station 1 changes the sleep state, the server checks the service class of the mobile station 1 and measures the paging traffics at the respective reception timings in the paging period designated by the mobile station 1 (1208). Let us assume herein, for example, that the mobile station 1 is about to change from the paging period A to the paging period B and designated the paging period B as a period after the change. Therefore, at 1208 the server measures the paging traffics at the respective reception timings B1-B3 in the designated paging period B.

Then the server determines at 1204, whether there is a margin in traffic at each reception timing in the paging period B (1204). The determination on the presence or absence of a margin herein can be made by adopting a method similar to the traffic evaluation method at above 1210. When the determination at 1204 is that there is a margin in traffic at either of the reception timings, the server notifies the mobile station 1 of the reception timing with a margin, according to the service class (1205). On the other hand, when the determination at 1204 is that there is no margin in traffic at either of the reception timings, the server searches for a superordinate or subordinate location information managing server with respect to the server 5 itself, and measures the traffics at the respective reception timings in the other paging period (the paging period C as a remaining candidate) (1211), and then the server determines, based on the result of the measurement, whether there is a reception timing with a margin in traffic (1212). The determination on the presence or absence of a margin at each reception timing herein can be made by adopting a method similar to the traffic evaluation method at above 1210. When at 1212 there is a reception timing with a margin in traffic, the server notifies the mobile station 1 of the reception timing according to the service class and, at the same time as it, the mobile station is added to the location information managing server (1213). On the other hand, there is no reception timing with a margin in traffic, the server notifies the mobile station 1 to maintain the current state (1206).

When at 1207 the notification from mobile station 1 is not one to notify that the mobile station 1 changes the sleep state, the server determines whether the notification is one to notify that the mobile station 1 is in the sleep mode and has moved into a new paging area (1209). When the notification is not one to notify that the mobile station 1 is in the sleep mode and has moved into a new paging area, the server returns to 1201 to repeat the processing. On the other hand, when the notification is one to notify that the mobile station 1 is in the sleep mode and has moved into a new paging area, the server checks the service class of the mobile station 1 and measures the paging traffics at the respective reception timings in the paging period notified of along with the notification by the mobile station 1 (i.e., the paging period for intermittent reception before the change of the paging area by the mobile station 1) (1208). For example, where the paging period B is notified of by the mobile station 1, the server measures the paging traffics at the respective reception timings B1-B3 in the paging period B.

Then the server determines at 1204, whether there is a margin in traffic at each reception timing in the paging period B (1204). The determination on the presence or absence of a margin herein can be made by adopting a method similar to the traffic evaluation method at above 1210. When the determination at 1204 is that there is a margin in traffic at either of the reception timings, the server notifies the mobile station 1 of the reception timing with a margin (1205). On the other hand, when the determination at 1204 is that there is no margin in traffic at either of the reception timings, the location information managing server 5 searches for a superordinate or subordinate location information managing server with respect to the server 5 itself, and measures the traffics at the respective reception timings in the other paging period (the paging period C as a remaining candidate) (1211), and then the server determines based on the result of the measurement, whether there is a reception timing with a margin in traffic (1212). The determination on the presence or absence of a margin at each reception timing herein can be made by adopting a method similar to the traffic evaluation method at above 1210. When at 1212 there is a reception timing with a margin in traffic, the server notifies the mobile station 1 of the reception timing according to the service class and, at the same time as it, the mobile station is added to the location information managing server (1213). On the other hand, when there is no reception timing with a margin in traffic, the server notifies the mobile station 1 to maintain the current state (1206).

In the above configuration, the mobile station can implement appropriate intermittent reception according to the service class and the processing used to be concentrated on one location information managing server can be scattered to the location information managing servers in the respective layers, whereby it is feasible to spread the processing load and decrease the processing load on one server. It can also circumvent the problem of stop of the entire system upon failure.

### (7) Processing operation of mobile station

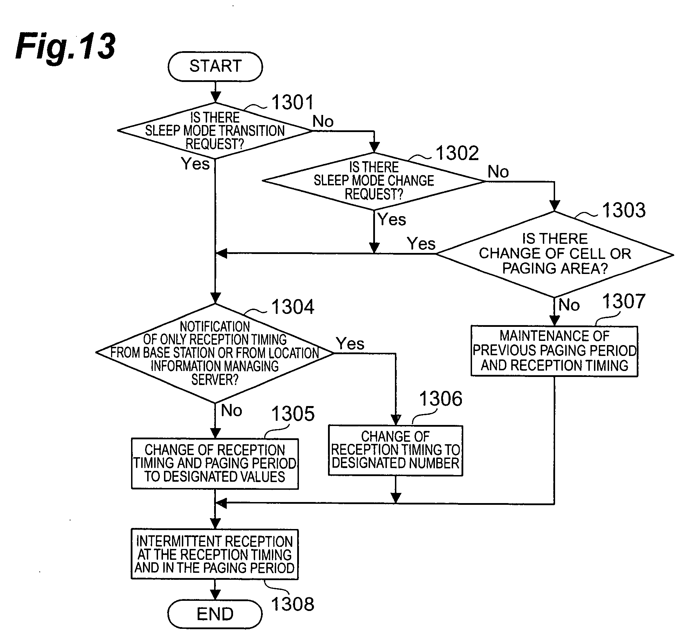

The processing operation of mobile station 1 will be described along Fig. 13. Mobile station 1 determines whether there occurs a timeout of a predetermined timer (a timer for determination on a transition into the sleep mode) in itself to raise a transition request for a new transition into the sleep mode (1301).

Where there arises a new transition request into the sleep mode, the mobile station determines whether it is notified of only a reception timing by base station 2 or by location information managing server 5 (1304). When the mobile station is notified of only the reception timing, the mobile station 1 changes the current reception timing to the number notified of (designated number) (1306), and performs intermittent reception at the reception timing after the change in a predetermined default paging period (e.g., the paging period A) (1308). On the other hand, when at 1304 the mobile station is notified of both the reception timing and paging period, the mobile station 1 changes the current reception timing and paging period into the reception timing and paging period thus notified of (1305) and performs intermittent reception in the paging period and at the reception timing after the change (1308).

When at 1301 there is no new transition request into the sleep mode, the mobile station determines whether the mobile station previously has moved into the sleep mode and whether there occurs a change request for a change of the sleep state (1302).

Where there occurs a change request for a change of the sleep mode, the mobile station determines whether it is notified of only the reception timing by base station 2 or by location information managing server 5 (1304). When notified of only the reception timing, the mobile station 1 changes the reception timing to the number thus notified of (designated number) (1306), and performs intermittent reception at the reception timing after the change in the predetermined default paging period (e.g., the paging period A) (1308). On the other hand, when at 1304 the mobile station is notified of both the reception timing and paging period, the mobile station 1 changes the reception timing and paging period to the reception timing and paging period thus notified of (1305) and performs intermittent reception in the paging period and at the reception timing after the change (1308).

When at 1302 there occurs no sleep-mode change request, the mobile station determines whether the station itself (mobile station 1) has moved into a new cell or into a new paging area (1303). In the system configuration where a plurality of location information managing servers 5Z, 5Y, 5X are provided in the hierarchical structure in decreasing direction of size of paging area with the location information managing server 5Z corresponding to the paging area C at the top, as described before with Fig. 6, the step 1303 is assumed to make an affirmative determination as well in the case where the station itself (mobile station 1) has moved into an area under control of a new location information managing server.

Where the mobile station has moved into a new cell or into control of a new location information managing server, it determines whether it is notified of only the reception timing by base station 2 or by location information managing server 5 (1304). When notified of only the reception timing, the mobile station 1 changes the reception timing to the number notified of (designated number) (1306), and performs intermittent reception at the reception timing after the change in the predetermined default paging period (e.g., the paging period A) (1308). On the other hand, when at 1304 the mobile station is notified of both the reception timing and the paging period, the mobile station 1 changes the reception timing and paging period to the reception timing and paging period thus notified of (1305), and performs intermittent reception in the paging period and at the reception timing after the change (1308).

When the steps 1301, 1302, and 1303 all end with no, the mobile station maintains the paging period and reception timing used heretofore (1307) and performs intermittent reception in the paging period and at the reception timing (1308).

The above operation of the mobile station implements the intermittent reception in the paging period and at the reception timing based on the change instruction about both or either of the paging period and the reception timing from the base station or from the location information managing server, or implements appropriate intermittent reception according to the service class of the mobile station.

### [(Part 2) Architecture and processing associated with control in network layer where mobile station is determined to be in idle state]

### [First embodiment]

The first embodiment of Part 2 will be described below with reference to the drawings.

### (Configurations of mobile communication system and each device)

The configuration of the mobile communication system is shown in Fig. 1. The mobile communication system is comprised of location information managing server 5, communication network 4, a plurality of mobile stations 1, and a plurality of base stations 2. Location information managing server 5 is connected to communication network 4 and manages the location information about locations of mobile stations 1 and paging group information about paging groups assigned to mobile stations 1. Furthermore, location information managing server 5 performs assignment of a designated paging group of the timing to receive the paging signal, to each mobile station 1, notification of a designated paging group to mobile station 1, and so on. Location information managing server 5 performs transmission and reception of signals to and from mobile stations 1 through communication network 4 and base stations 2. A "paging group" corresponds to a combination of a "paging period" and a "reception timing" in Part 1. However, Part 2 below will describe cases where the paging period is constant, and, therefore, a "paging group" corresponds to a reception timing.

Location information managing server 5 and the plurality of base stations 2 are connected to communication network 4, and communication network 4 relays communication between location information managing server 5 and base stations 2 and communication between base stations 2. A base station 2 establishes a radio area called cell 3, and sets a radio link with each mobile station 1 located in the cell 3 to perform communication therewith. Each base station 2 periodically transmits the paging signal at timings defined for the respective paging groups, to a plurality of mobile stations 1 in the standby state located in the cell 3 covered by itself. A collection of cells 3 form a location registration area 6. Each base station 2 periodically transmits a control signal containing a location registration area ID of a location registration area to which the base station itself belongs, to mobile stations 1. This permits mobile stations 1 to detect a change of its location registration area. A location registration area ID is letters, symbols, or numerals specific to each location registration area 6, for distinguishing the location registration area 6. Each base station 2 may transmit a base station ID, instead of the location registration area ID. This also permits mobile stations 1 to detect a change of its location registration area. Furthermore, each base station 2 is connected to communication network 4 and relays signals transmitted from mobile stations 1 located in its cell 3, to location information managing server 5 or signals to other mobile stations 1. In addition, each base station 2 performs transmission and reception of signals to and from location information managing server 5 through communication network 4.

Each mobile station 1 performs location registration on a location registration area 6 to which a cell 3 where the mobile station itself is located belongs, and performs communication through base station 2. Each mobile station 1 belongs to an assigned paging group and in the standby state the mobile station 1 performs intermittent reception to intermittently receive the paging signal at the timing of the paging group.

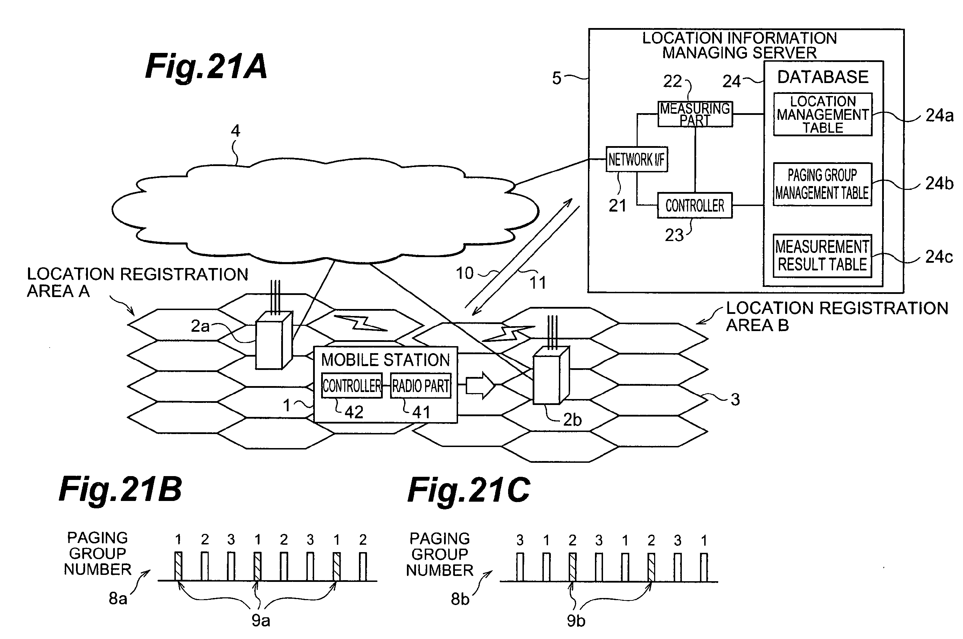

Location information managing server 5 and mobile station 1 will be described below in more detail with reference to Figs. 21A-21C. They will be described with Fig. 21A, using two location registration areas of location registration area A and location registration area B. Although not illustrated, there are a large number of location registration areas, such as location registration area C, location registration area D, etc. in addition to the location registration area A and location registration area B. At first, mobile station 1 is under location registration on the location registration area A and is in communication through a radio link with base station 2a covering a cell in the location registration area A. Suppose the mobile station 1 moves from the location registration area A toward the location registration area B, switches the radio link to one with base station 2b covering a cell in the location registration area B, and performs communication therewith. Although Fig. 21A shows only one base station 2a or 2b in each location registration area, there are a plurality of base stations in practice. The paging group of the location registration area A in Fig. 21A is the paging group 8a shown in Fig. 21B, and the paging group of the location registration area B the paging group 8b shown in Fig. 21C. Each paging group is given a paging group number which is a number specific to each paging group, for distinguishing the paging group. In the case of Fig. 21A, the mobile station 1 belongs to the paging group 9a with the paging group number of 1 shown in Fig. 21B, in the location registration area A before the change.

First, location information managing server 5 will be described. Location information managing server 5 is comprised of network interface 21, measuring part 22, controller 23, and database 24. Network interface 21 is connected to communication network 4, to measuring part 22, and to controller 23. Network interface 21 is an area change detecting means for detecting a change of the location registration area where the location of mobile station 1 is registered. Network interface 21 has a paging group acquiring means for, when detecting a change of the location registration area of mobile station 1, acquiring a previous paging group assigned before the change to the mobile station. Specifically, network interface 21 receives signal 10 of a location registration request from mobile station 1 through base station 2b and communication network 4. This signal 10 of location registration request contains a request for a change of the location registration area for location registration of mobile station 1 in the location registration area B and the paging group number "1" of the paging group 9a being the previous paging group to which the mobile station 1 belonged in the location registration area A as a location registration area before the change. This permits network interface 21, receiving the signal 10 of location registration request, to acknowledge occurrence of the change of the location registration area where the location of mobile station 1 is registered, and acquire the previous paging group. Then network interface 21 transmits the signal 10 of location registration request received, to the controller 23.

Furthermore, network interface 21 also functions as a notifying means for notifying the mobile station of a designated paging group assigned to the mobile station 1 requesting the change of its location registration area, by controller 23. Specifically, network interface 21 performs the notification of the designated paging group, based on control by controller 23. Network interface 21 acquires information signal 11 containing the paging group number assigned to the mobile station 1. Network interface 21 transmits the information signal 11 to the mobile station 1 through communication network 4 and base station 2b, to notify the mobile station 1 of the designated paging group to which the mobile station 1 should belong in the location registration area B and which was assigned by the controller 23.

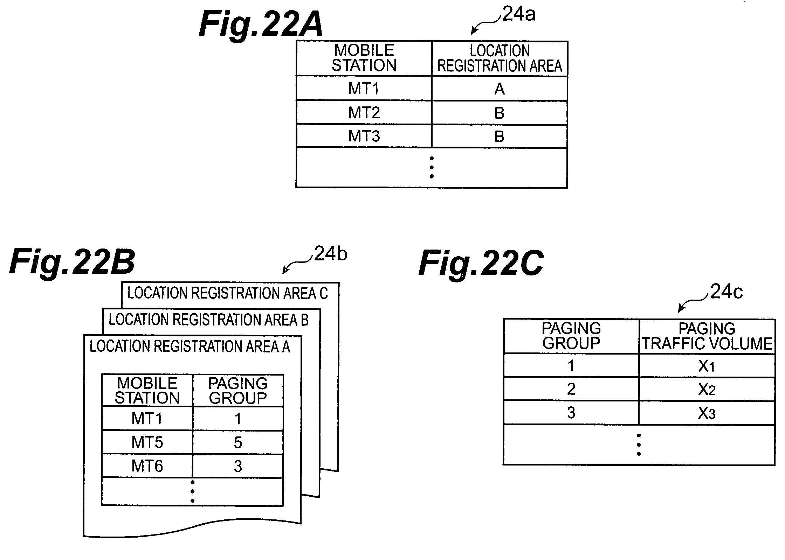

Database 24 is a retaining means for retaining the location information about mobile stations 1 and the paging group information about mobile stations 1. Database 24 is comprised of location management table 24a, paging group management table 24b, and measurement result table 24c. Figs. 22A to 22C show more detailed configurations of database 24. The location management table 24a shown in Fig. 22A retains information of a mobile station ID of each mobile station 1 and a location registration area ID indicating a location registration area for location registration of each mobile station 1, in correspondence to each other.

The paging group management table 24b shown in Fig. 22B is sectioned into regions of the respective location registration areas. The paging group management table 24b retains, for each of the location registration areas, a correspondence between mobile station IDs of mobile stations 1 location-registered in the relevant location registration area and paging group numbers of designated paging groups assigned to the mobile stations 1. Furthermore, paging group management table 24b acknowledges and manages the numbers of mobile stations 1 belonging to the paging groups, and paging traffic volume and data volume in each paging group, which are measured by measuring part 22. The measurement result table 24c shown in Fig. 22C retains the results of the measurement by measuring part 22. The measurement result table 24c retains a correspondence between paging group numbers and measurement results about paging groups of the paging group numbers. Fig. 22C shows an example of the measurement results in which the paging traffic volumes in the respective paging groups are retained, but the measurement result table 24c also retains the other measurement results, such as the numbers of mobile stations 1 belonging to the paging groups, the volume of data transmitted at the timing of each paging group, and so on.

Measuring part 22 is a traffic volume measuring means for measuring the paging traffic volume at the timing of each paging group in each location registration area. Furthermore, measuring part 22 also functions as a number-of-mobile-stations measuring means for measuring the number of mobile stations 1 belonging to each paging group in each location registration area. In addition, measuring part 22 also functions as a data volume measuring means for measuring the volume of data transmitted at the timing of each paging group in each location registration area. Measuring part 22 is connected to network interface 21, to controller 23, and to database 24. An example of the traffic measurement processing in the location registration area B will be described below.

For example, measuring part 22 monitors the number of incoming calls directed to a plurality of mobile stations 1 location-registered on the location registration area B and measures the paging traffic volume at the timing of each paging group in the location registration area B. For example, as to a plurality of base stations 2b covering their respective cells 3 in the location registration area B, measuring part 22 constantly or regularly measures the number of incoming calls arriving during a fixed duration at each base station 2b, the number of incoming calls accumulated at that time in a buffer of each base station 2b, etc., for each of mobile stations 1 as destinations of the incoming calls. This enables measuring part 22 to capture the number of incoming calls for each mobile station 1. Next, measuring part 22 makes reference to paging group management table 24b to capture the paging group to which each mobile station 1 belongs. Then measuring part 22 determines the number of incoming calls in each paging group from the number of incoming calls for each receiving mobile station 1 and the paging group to which each mobile station 1 belongs. This permits measuring part 22 to monitor the number of incoming calls in each paging group. Furthermore, measuring part 22 may be configured to measure the paging traffic volume of each paging group by any other method.

Furthermore, measuring part 22 constantly or regularly monitors, for each paging group, the number of mobile stations 1 in the standby state in the location registration area B, whereby it can measure the number of mobile stations 1 belonging to each paging group in the location registration area B. For example, measuring part 22 makes reference to the paging group management table 24b to count the number of mobile stations 1 in each paging group and in each location registration area, whereby it can monitor the number of mobile stations 1 belonging to the location registration area B, for each paging group. Furthermore, measuring part 22 may be configured to measure the number of mobile stations 1 belonging to each paging group, by any other method.

Moreover, measuring part 22 constantly or regularly monitors, for each paging group, the data volume of incoming calls directed to mobile stations 1 location-registered in the location registration area B, thereby measuring the volume of data transmitted at the timing of each paging group in the location registration area B. It is noted that the data volume of an incoming call can be determined by the number of packets in the incoming call or the like. For example, as to a plurality of base stations 2b covering the cells 3 in the location registration area B, measuring part 22 measures the volume of data such as the number of packets of incoming calls arriving in a fixed duration at each base station 2b, the volume of data such as the number of packets of incoming calls accumulated at that time in the buffer of each base station 2b, etc., for each of mobile stations 1 as destinations of the incoming calls. This enables measuring part 22 to grasp the volume of data of incoming calls for each of mobile stations 1. Then measuring part 22 makes reference to paging group management table 24b to grasp the paging group to which each mobile station 1 belongs. Then measuring part 22 obtains the volume of data such as the number of packets of incoming calls in each paging group, from the volume of data such as the number of packets of incoming calls for each of receiving mobile stations 1, and the paging group to which each mobile station 1 belongs. This permits measuring part 22 to monitor the data volume of incoming calls for each of paging groups. Furthermore, measuring part 22 may be configured to measure the volume of data transmitted in each paging group, by any other method.

Measuring part 22 notifies controller 23 of the paging group numbers and the measurement results such as the paging traffic volume of each paging group, the number of mobile stations 1, the data volume of incoming calls to mobile stations 1, etc. in the location registration area B thus measured. Furthermore, measuring part 22 records in the measurement result table 24c, the paging group numbers and the measurement results such as the traffic volume of each paging group, the number of mobile stations 1, the data volume of incoming calls to mobile stations 1, etc. in the location registration area B thus measured. Measuring part 22, when performing the measurement on a regular basis, regularly updates the traffic volume, the number of mobile stations 1, and the data volume of incoming calls to mobile stations 1 in the measurement result table 24c. In the case where measuring part 22 performs the measurement on the occasion of the assignment of the paging group by controller 23, measurement result table 24c may be configured to retain the measurement results before the next measurement and then discard the data after a lapse of a predetermined time.

Controller 23 is connected to network interface 21, to measuring part 22, and to database 24. Controller 23 is a paging group detecting means for detecting a designated paging group out of a plurality of paging groups on the basis of predetermined information. When network interface 21 detects a change of the location registration area of a mobile station 1, controller 23 assigns the mobile station 1 a designated paging group detected. Namely, upon a change of the location registration area of mobile station 1, controller 23 assigns the mobile station 1 the designated paging group.

Specifically, network interface 21 receives the signal 10 of location registration request and transmits it to controller 23, and the controller 23 acquires the signal, whereby network interface 21 detects occurrence of the change of the location registration area. On this occasion, controller 23 acquires the location registration area ID of the location registration area subject to the change of the location information and the paging group number of the paging group of the mobile station 1, from the signal 10 of location registration request.

Controller 23 receives the notification of the measurement result from measuring part 22 and detects the designated paging group in the location registration area B on the basis of the measurement result. In this case, controller 23 detects the designated paging group, based on the paging traffic volume in each paging group in the location registration area B. For example, controller 23 selects a paging group with low paging traffic volume out of the paging groups in the location registration area B and detects the paging group as a designated paging group. Furthermore, controller 23 detects the designated paging group, based on the number of mobile stations 1 belonging to each paging group in the location registration area B. For example, controller 23 selects a paging group with a small number of belonging mobile stations and with a small number of mobile stations in the standby state out of the paging groups in the location registration area B and detects the paging group as a designated paging group. Furthermore, controller 23 detects the designated paging group, based on the volume of data transmitted at the timing of each paging group in the location registration area B after the change. For example, controller 23 selects a paging group with low volume of transmitted data out of paging groups in the location registration area B and detects the paging group as a designated paging group. As described above, controller 23 may select a paging group, based on one of the paging traffic volume, the number of mobile stations 1, and the volume of data transmitted at the timing of each paging group, or may select a paging group, based on two or all of the paging traffic volume, the number of mobile stations 1, and the volume of data transmitted at the timing of each paging group, and detect the paging group as a designated paging group.

In the case of Fig. 21A, as described above, mobile station 1 belongs to the paging group 9a with the paging group number of "1" (cf. Fig. 21B) in the location registration area A before the change. It is assumed herein that the paging traffic volume of the paging group with the paging group number of "1" is high and that of the paging group with the paging group number of "2" is low, in the location registration area B. In this case, controller 23 selects the paging group with the paging group number of "2" as a designated paging group in the location registration area B and detects the paging group as a designated paging group.

Controller 23 may be configured to regularly receive the notification of the measurement result about each location registration area from measuring part 22. Furthermore, controller 23 may be configured to instruct measuring part 22 to measure the paging traffic volume, the number of mobile stations, the volume of data of incoming calls to mobile stations 1, etc. for each location registration area on the occasion of performing the assignment of the paging group, and to receive the notification of the measurement result. In this case, controller 23 designates a type of an item to be measured and instructs measuring part 22 to measure it. Namely, controller 23 designates one, or two or more, or all of the paging traffic volume, the number of mobile stations 1, and the data volume of incoming calls to mobile stations 1, and gives an instruction of the measurement.

Moreover, controller 23 also performs control on network interface 21. When controller 23 detects a designated paging group in the location registration area B, it determines whether the paging group number of the designated paging group is identical to or different from the paging group number of the previous paging group included in the signal 10 of location registration request transmitted from network interface 21. When the paging group number of the previous paging group is different from that of the designated paging group, that is, when there is a change of the paging group, controller 23 assigns the mobile station 1 the designated paging group detected. Then controller 23 transmits to network interface 21, information signal 11 containing the paging group number of the designated paging group thus assigned, in correspondence to the mobile station ID of the mobile station 1, to notify the mobile station 1 of completion of the location registration and instruct the mobile station 1 to change the paging group. On the other hand, when the paging group number of the previous paging group is identical to that of the designated paging group, i.e., when there is no change of the paging group, controller 23 does not assign the designated paging group detected, to the mobile station 1 and gives no instruction to network interface 21. In this case, therefore, network interface 21 does not perform the notification of the paging group number of the designated paging group to the mobile station 1 and performs only the notification of completion of location registration to the mobile station 1.

In the case of Fig. 21A, the paging group as the previous paging group has the paging group number "1," and the controller determines that it is different from the paging group number "2" of the paging group being the designated paging group and that there is a change of the paging group. Therefore, controller 23 assigns the mobile station 1 the designated paging group detected, transmits information signal 11 containing the paging group number "2" of the designated paging group assigned, to network interface 21, and provides the notification of completion of location registration and the instruction of change of the paging group to the mobile station 1.

Furthermore, controller 23 assigns the mobile station 1 the designated paging group in the location registration area B, and thereafter adds and records the paging group number of the designated paging group into paging group management table 24b. Specifically, controller 23 records the paging group number "2" of the paging group being the designated paging group, in correspondence to the mobile station ID of the mobile station 1 assigned the designated paging group, in the region of the location registration area B in the paging group management table 24b. In this manner, controller 23 registers the relation between the mobile station ID of the mobile station 1 and the paging group number of the paging group to which the mobile station 1 belongs, to automatically create the paging group management table 24b.

Furthermore, after controller 23 acquires the signal 10 of location registration request, it records the location registration area ID of the new location registration area included in the signal, into the location management table 24a, thereby performing the location registration. Specifically, controller 23 records the location registration area ID of the location registration area B in correspondence to the mobile station ID of the mobile station 1 having sent the location registration request, into the location management table 24a. In this way, controller 23 registers the relation between the mobile station ID of the mobile station 1 and the location registration area ID of the location registration area to which the mobile station 1 belongs, creates the location management table 24a, and manages the location information of mobile station 1.

Mobile station 1 will be described below. As shown in Fig. 21A, mobile station 1 is comprised of radio part 41 and controller 42, and the radio part 41 is connected to controller 42. Radio part 41 is a requesting means for, with movement into a location registration area different from the location registration area of the current location registration, detecting the movement and sending a location registration area change request. Furthermore, radio part 41 is an acquiring means for receiving the information signal from base station 2a, 2b and acquiring a paging group of timing to receive the paging signal in the new location registration area, out of the information notified of. Specifically, mobile station 1 transmits the location registration request signal 10 to location information managing server 5 on the occasion of occurrence of a change of the location registration area and receives the information signal 11 containing the paging group number of the designated paging group assigned as a paging group of timing to receive the paging signal in the new location registration area B, by the location information managing server 5, from location information managing server 5 through communication network 4 and base station 2b. Radio part 41 transfers the information signal 11 to controller 42 only when receiving the information signal 11 containing the paging group number.

Furthermore, radio part 41 also functions as a receiving means for receiving the paging signal transmitted from base station 2a, 2b, based on the control by controller 42. Radio part 41 performs intermittent reception of the paging signal at the timing of the designated paging group. Radio part 41 also always receives the control signal with the location registration area ID transmitted from base station 2a, 2b and transfers the received control signal to controller 42.

Furthermore, radio part 41 also functions as a transmitting means for transmitting the location registration request signal 10, based on the control by controller 42. Radio part 41 transmits the location registration request signal 10 to location information managing server 5 through base station 2a, 2b and communication network 4.

Controller 42 is a setting changing means for, when radio part 4 receives the information signal from base station 2a, 2b, changing the setting of the paging group in accordance with the information notified of. Controller 42 changes the setting of the paging group when the paging group information is included in the information notified of by base station 2a, 2b in response to the location registration area change request by radio part 41. First, controller 42 determines whether the paging group information is included in the information notified of by base station 2a, 2b. In this case, controller 42 determines whether there is a notification of the paging group number of the designated paging group from location information managing server 5. Specifically, with transmission of information signal 11 containing the paging group number from radio part 41, controller 42 determines that there is the notification of the paging group number; without transmission of information signal 11 containing the paging group number, it determines that there is no notification of the paging group number.

When controller 42 determines that there is a notification of the paging group number and when the paging group information is included in the information notified of, controller 42 acquires the paging group number of the designated paging group from information signal 11 containing the paging group number. Controller 42 changes the setting of the timing for reception of the paging signal to the timing of the designated paging group acquired. Then controller 42 controls radio part 41 so as to receive the paging signal at the timing of the designated paging group with the paging group number after the change of the setting.

On the other hand, when it is determined that there is no notification of the paging group number and when no paging group information is included in the information notified of, controller 42 does not perform the change of the setting of timing for reception of the paging signal. Then controller 42 continuously uses the previous paging group to which the mobile station belonged in the location registration area A before the change of the location registration area, in the new location registration area B as well, and controls radio part 41 so as to receive the paging signal at the timing of the previous paging group.

Furthermore, controller 42 generates the location registration request signal 10 and controls radio part 41 so as to transmit the location registration request signal 10. Controller 42 acquires the control signal with the location registration area ID received by radio part 41, from the radio part 41. When acknowledging a change of the location registration area ID in the control signal, controller 42 determines that there is a change of the location registration area, and generates the location registration request signal 10. Controller 42 generates the location registration request signal 10 containing a request for change of the location registration area and the paging group number of the previous paging group to which the mobile station belonged in the location registration area before the change of the location registration area. Then controller 42 transfers the location registration request signal 10 generated, to radio part 41 to instruct and control radio part 41 to transmit it to location information managing server 5.

In the case of Fig. 21A, radio part 41 initially receives the control signal containing the location registration area ID of the location registration area A. Then the mobile station 1 moves from the location registration area A toward the location registration area B and comes to the border between the location registration area A and the location registration area B, whereupon radio part 41 comes to receive the control signal containing the location registration area ID of the location registration area B. Therefore, controller 42 acknowledges that the location registration area ID in the control signal has changed to the location registration area ID of the location registration area B and determines that there occurred a change of the location registration area. Then controller 42 generates the location registration request signal 10 containing the location registration area ID of the new location registration area B and the paging group number "1" of the paging group 9a (cf. Fig. 21B) being the previous paging group to which the mobile station belonged in the location registration area A, and makes radio part 41 transmit it to location information managing server 5.

Then radio part 41 receives the information signal 11 containing the paging group number, from base station 2b, so that the controller 42 acquires the paging group number "2" of the paging group being the designated paging group. Controller 42 changes the setting of the timing for reception of the paging signal from the timing of the paging group with the paging group number "1" to the timing of the paging group with the paging group number "2" acquired. This causes radio part 41 to perform intermittent reception of the paging signal at the timing of the paging group 9b (cf. Fig. 21C) with the paging group number "2," in the location registration area B.

### (Mobile communication method)

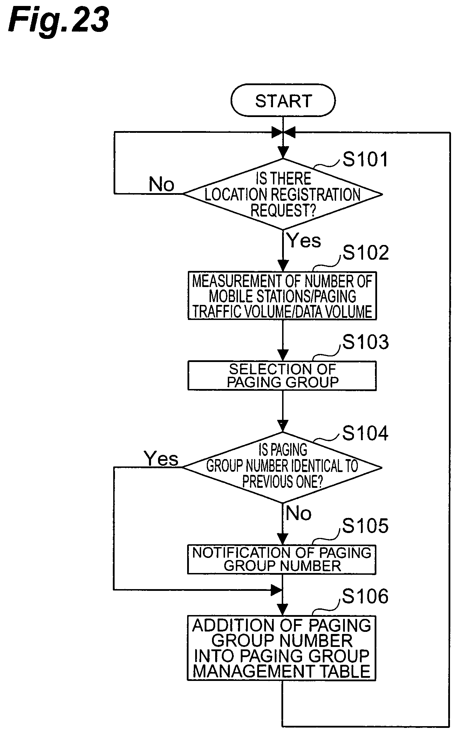

A mobile communication method performed with use of the mobile communication system will be described below. First, the operation of location information managing server 5 will be described. Fig. 23 is a flowchart showing the operation procedure of location information managing server 5. At the first step, location information managing server 5 monitors whether there is a location registration request from mobile station 1 (S101). Specifically, a determination is made on whether control part 23 of location information managing server 5 acquired the location registration request signal 10 from mobile station 1 to be received by network interface 21 and transferred to controller 23.

When a step (S101) there is a location registration request in the location registration area B from mobile station 1, location information managing server 5 measures the paging traffic volume at the timing of each paging group in the location registration area B, the number of mobile stations 1 belonging to each paging group in the location registration area B, the volume of data arriving at the timing of each paging group in the location registration area B, or the like (S102). Specifically, controller 23 of location information managing server 5 instructs measuring part 22 to measure the paging traffic volume or the number of mobile stations 1 in each paging group in the location registration area B, or the volume of data arriving at the timing of each paging group, and then measuring part 22 performs the measurement thereof. On the other hand, when at step (S101) there is no location registration request, location information managing server 5 continues monitoring whether there is a location registration request.

Location information managing server 5 then selects a designated paging group in the location registration area B, based on the result of the measurement at step (S102), and detects the paging group as a designated paging group (S103). Specifically, controller 23 of location information managing server 5 receives the notification of the measurement result from measuring part 22, and selects a paging group with low paging traffic volume out of the paging groups in the location registration area B, or selects a paging group with a small number of belonging mobile stations 1 and with a small number of mobile stations 1 in the standby state, out of the paging groups in the location registration area B, or selects a paging group with low volume of data to be transmitted, out of the paging groups in the location registration area B, based on the measurement result.

Then location information managing server 5 determines whether the paging group number of the designated paging group detected is identical to or different from the paging group number of the previous paging group (S104). Specifically, controller 23 of location information managing server 5 determines whether the paging group number of the designated paging group is identical to or different from the paging group number of the previous paging group included in the location registration request signal 10 transferred from network interface 21.

When at step (S104) the paging group number of the previous paging group is different from that of the designated paging group, location information managing server 5 assigns the mobile station 1 the designated paging group and notifies the mobile station 1 of the paging group number of the designated paging group assigned (S105). On the other hand, when at step (S104) the two paging group numbers are equal, location information managing server 5 does not notify the mobile station 1 of the paging group number of the designated paging group, and moves to step (S106).

Finally, location information managing server 5 adds and records the paging group number of the designated paging group into the paging group management table 24b (S106). Specifically, controller 23 of location information managing server 5 records the paging group number of the designated paging group in correspondence to the mobile station ID of the mobile station 1 assigned the designated paging group, in the region of the location registration area B in the paging group management table 24b. Location information managing server 5 repeatedly performs the operations at the steps (S101) to (S106).

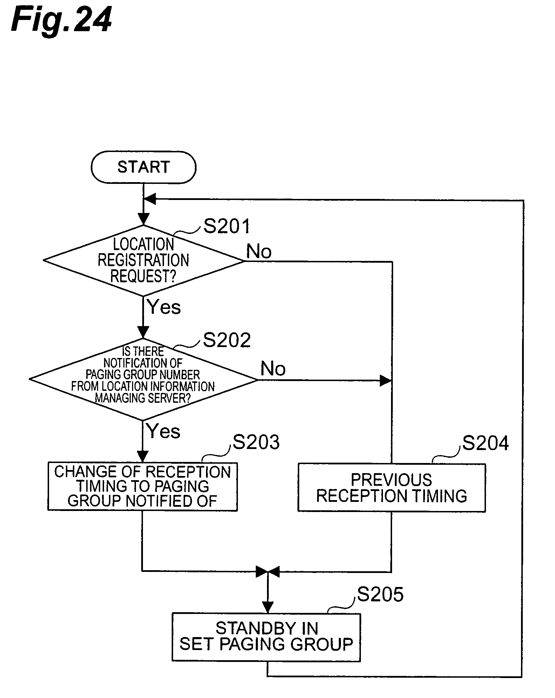

The operation of mobile station 1 will be described next. Fig. 24 is a flowchart showing the operation procedure of mobile station 1. First, mobile station 1 makes a location registration request when changing from the location registration area A to the location registration area B (S201). Specifically, controller 42 of mobile station 1 generates the location registration request signal 10 and radio part 41 transmits the location registration request signal 10 to location information managing server 5.

After mobile station 1 sends the location registration request at step (S201), it waits for a fixed time period and determines whether there is a notification of the paging group number of the designated paging group from location information managing server 5 (S202). Specifically, controller 42 of mobile station 1 determines that there is a notification of the paging group number, with transmission of information signal 11 containing the paging group number from radio part 41; it determines that there is no notification of the paging group number, without transmission of information signal 11 containing the paging group number.

When it is determined at step (S202) that there is a notification of the paging group number of the designated paging group, mobile station 1 changes the setting of the timing for reception of the paging signal to the timing of the designated paging group with the paging group number notified of (S203). Specifically, controller 42 of mobile station 1 acquires the paging group number of the designated paging group from information signal 11 containing the paging group number and changes the setting to the timing of the designated paging group with the paging group number.

On the other hand, when at step (S202) mobile station 1 determines that there is no notification of the paging group number of the designated paging group, controller 42 of mobile station 1 does not change the setting of the timing for reception of the paging signal, and maintains the setting of the timing of the previous paging group to which the mobile station belonged in the location registration area A before the change of the location registration area, to continuously use the previous paging group (S204).

Then mobile station 1 stands by while performing intermittent reception of the paging signal at the timing of the paging group thus set (S205). Specifically, controller 42 of mobile station 1 controls radio part 41 so as to receive the paging signal at the set timing, so that radio part 41 performs intermittent reception at the timing in accordance with the control of controller 42. Mobile station 1 repeatedly performs the operations at steps (S201) to (S205).

### (Effects of the first embodiment)

According to the mobile communication system, location information managing server 5, mobile station 1, and mobile communication method in the first embodiment as described above, network interface 21 receives the location registration request signal 10 to detect the change of the location registration area of the current location registration with movement of mobile station 1. Furthermore, controller 23 detects the designated paging group out of a plurality of paging groups on the basis of the predetermined information. When network interface 21 detects a change of the location registration area of mobile station 1, controller 23 assigns the mobile station 1 the designated paging group detected. Finally, network interface 21 notifies the mobile station 1 about to change the location registration area, of information signal 11 containing the paging group number of the designated paging group assigned by controller 23.

Therefore, controller 23 can be configured to assign the designated paging group only when network interface 21 detects a change of the location registration area of current location registration of mobile station 1, and the network interface 21 can also be configured to transmit the information signal 11 containing the paging group number of the designated paging group only to the mobile station 1 subject to the change only when there occurs a change of the location registration area. For this reason, the mobile communication system can effectively utilize the channel and reduce the load of paging control on controller 23.

Furthermore, network interface 21 has the paging group acquiring means for acquiring the previous paging group on the occasion of detecting the location registration area change of mobile station 1, and controller 23 acquires the paging group number of the previous paging group acquired by network interface 21 and determines whether the paging group number of the previous paging group acquired is identical to or different from that of the designated paging group. Then controller 23 assigns the mobile station 1 the designated paging group detected, only when they are different. Network interface 21 also transmits the information signal 11 containing the paging group number of the designated paging group to the mobile station 1 only when the paging group number of the previous paging group is different from that of the designated paging group, with a change of the paging group; whereas it omits the notification to mobile station 1 when the paging group number of the previous paging group is identical to that of the designated paging group, without change of the paging group. Therefore, the mobile communication system can utilize the channel more effectively. Furthermore, the action of mobile station 1 is characterized by no need for acquiring unnecessary information, thereby achieving the action of no need for reception of redundant information signals. As a result, mobile station 1 can expand battery saving based on promotion of efficiency of reception time.

Furthermore, controller 23 can perform the assignment of the paging group, based on the paging traffic volume at the timing of each paging group in each location registration area, or based on the number of mobile stations 1 belonging to each paging group in the location registration area B. For this reason, the mobile communication system can prevent the concentration of the paging traffic load at a specific paging group timing and thus smooth the paging traffic loads on the respective paging groups. It is also feasible to prevent the paging signal from being transmitted twice or more to mobile station 1 in the same paging group, within the same frame. Therefore, it is feasible to implement more effective utilization of the channel.

Moreover, controller 23 can perform the assignment of the paging group, based on the volume of data to be transmitted at the timing of each paging group in each location registration area. For this reason, even in cases where in data transmission or the like, in spite of low paging traffic volume of a paging group or in spite of the small number of mobile stations belonging to a paging group, the volume becomes high of data included in one incoming call or of data received by one mobile station, it is feasible to surely prevent the concentration of the paging traffic load at a specific paging group timing and implements better smoothing of the paging traffic loads on the respective paging groups.

In mobile station 1, with movement into a location registration area different from the location registration area of current location registration, radio part 41 detects it and sends the location registration area change request. When radio part 41 receives information signal 11 from base station 2b, controller 42 changes the setting of the paging group according to the information notified of. When the paging group information is included in the information notified of by base station 2b in response to the location registration area change request from radio part 41, controller 42 changes the setting of the paging group to the designated paging group of the paging group number included in the information signal 11. Then radio part 41 receives the paging signal in the designated paging group.

Accordingly, mobile station 1 does not have to acquire unnecessary information, and, therefore, does not have to receive redundant information signals. As a consequence, mobile station 1 can expand battery saving based on promotion of efficiency of reception time.

Furthermore, when radio part 41 does not receive the information signal 11 containing the paging group number, that is, when the paging group information is not included in the information notified of by base station 2b, controller 23 controls radio part 41 to continuously use the previous paging group and receive the paging signal at the timing of the previous paging group, in the location registration area B. For this reason, without change of the paging group, mobile station 1 does not have to perform the change of setting of the paging group and thus does not have to change the timing of reception of the paging signal, which can further reduce the load of paging control.

### [Second embodiment]

The second embodiment of Part 2 will be described below with reference to the drawings.

### (Configurations of mobile communication system and each device)

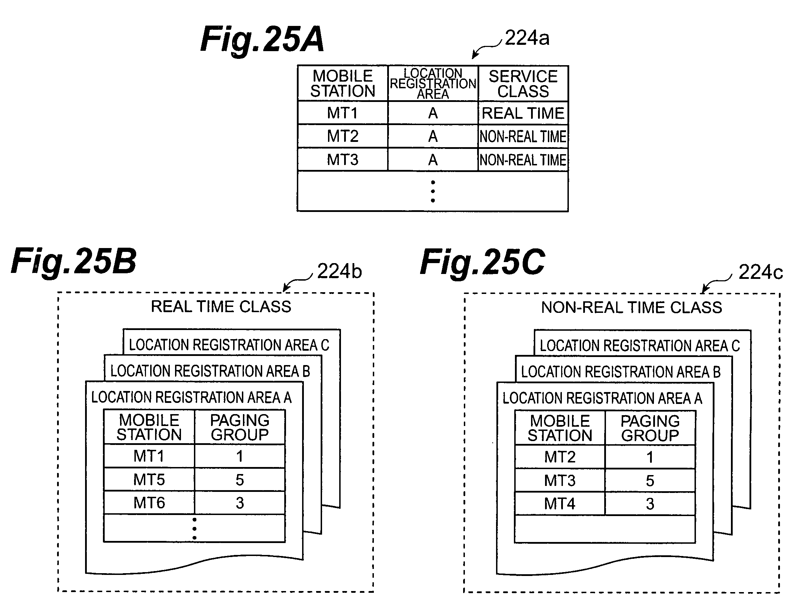

The mobile communication system according to the present embodiment is substantially the same as the mobile communication system shown in Fig. 21A, except that the database 24 of the location information managing server 5 shown in Figs. 22A-22C is replaced by database 224 shown in Figs. 25A-25C and, in conjunction therewith, the operation is different in part at measuring part 22 and controller 23 of location information managing server 5. For this reason, redundant description will be avoided about the substantially same portions.

Database 224 is comprised of location management table 224a shown in Fig. 25A, real time class paging group management table 224b shown in Fig. 25B, and non-real time class paging group management table 224c shown in Fig. 25C.

Service qualities requested by mobile station 1, in Fig. 25A, include two service classes, the real time class and the non-real time class. The real time class is a service quality requiring real time nature and having a very short permissible delay; for example, it is requested by mobile station 1 performing moving picture communication, voice communication, and so on. The non-real time class is a service quality not requiring the real time nature but having a relatively long permissible delay; for example, it is requested by mobile station 1 performing data communication. Therefore, mobile station 1 can be classified according to the service quality requested.

As described above, Fig. 25A shows the use of the real time class and non-real time class as service qualities, but there are no particular restrictions on the contents of service qualities. For example, loss probability levels can be used as service qualities. Specifically, for keeping the loss probability not more than a threshold, it is possible to use the loss probability as a parameter and prepare a plurality of service classes with different thresholds of loss probability. Besides, it is also possible to use degrees of urgency of data included in incoming calls or the like, as service qualities. The service qualities are preferably those capable of being classified, in terms of control.

Database 224 includes paging group management tables for the respective service qualities. Specifically, the database is provided with real time class paging group management table 224b of Fig. 25B and non-real time class paging group management table 224c of Fig. 25C. Real time class paging group management table 224b retains the information about paging groups of mobile stations 1 requesting the service quality of the real time class, and non-real time class paging group management table 224c the information about paging groups of mobile stations 1 requesting the service quality of the non-real time class.

Real time class paging group management table 224b and non-real time class paging group management table 224c each are sectioned into regions of the respective location registration areas. Real time class paging group management table 224b and non-real time class paging group management table 224c each retain, for each of the regions of the location registration areas, a correspondence between mobile station IDs of mobile stations 1 location-registered on the location registration area and paging group numbers of paging groups assigned to the mobile stations 1 and used in standby of the mobile stations 1. The following will describe a processing example in the location registration area B.

In the present embodiment, measuring part 22 measures, for each of the service qualities, the paging traffic volume at the timing of each paging group in the location registration area B, the number of mobile stations 1 belonging to each paging group in the location registration area B, and the volume of data to be transmitted at the timing of each paging group in the location registration area B. Except for this point, measuring part 22 operates in much the same manner as in the first embodiment.

For example, measuring part 22 monitors the number of incoming calls directed to a plurality of mobile stations 1 location-registered on the location registration area B, for each of the paging groups and for each of the service classes. First, measuring part 22 grasps the number of incoming calls for each of mobile stations 1, in much the same manner as in the first embodiment. Then measuring part 22 makes reference to real time class paging group management table 224b shown in Fig. 25B, to grasp the paging groups to which the respective mobile stations 1 registered in real time class paging group management table 224b belong. Thereafter, measuring part 22 determines the number of incoming calls for each paging group from the numbers of incoming calls for the respective receiving mobile stations 1 and the paging groups to which the respective mobile stations 1 belong, to monitor the number of incoming calls for each paging group in the real time class. For the non-real time class, similarly, the measuring part makes reference to non-real time class paging group management table 224c shown in Fig. 25C, to monitor the number of incoming calls for each paging group in the non-real time class. Measuring part 22 measures the paging traffic volume at the timing of each paging group in the location registration area B, for each of the service qualities in this way.

Furthermore, measuring part 22 monitors the number of mobile stations 1 in the standby state in the location registration area B, for each of the paging groups and for each of the service classes. For example, measuring part 22 makes reference to real time class paging group management table 224b to count the number of mobile stations 1 in each paging group, thereby monitoring the number of mobile stations 1 belonging to the location registration area B, for each of the paging groups in the real time class. For the non-real time class, similarly, the measuring part makes reference to non-real time class paging group management table 224c, whereby it can monitor the number of incoming calls for each paging group in the non-real time class. Measuring part 22 measures the number of mobile stations 1 belonging to each paging group in the location registration area B, for each of the service qualities in this way.

In addition, measuring part 22 monitors the volume of data of incoming calls directed to a plurality of mobile stations 1 location-registered in the location registration area B, for each of the paging groups and for each of the service classes. For example, measuring part 22 determines the volume of data of incoming calls for each mobile station 1, in much the same manner as in the first embodiment. Then measuring part 22 makes reference to real time class paging group management table 224b to grasp the paging groups to which the respective mobile stations 1 registered in the real time class paging group management table 224b belong. Then measuring part 22 determines the volume of data of incoming calls for each paging group from the volume of data such as the number of packets of incoming calls for each receiving mobile station 1 and the paging groups to which the respective mobile stations 1 belong, thereby monitoring the volume of data of incoming calls for each paging group in the real time class. For the non-real time class, similarly, the measuring part makes reference to non-real time class paging group management table 224c to monitor the volume of data of incoming calls for each paging group in the non-real time class. Measuring part 22 measures the volume of data to be transmitted at the timing of each paging group in the location registration area B, for each of the service qualities in this way.

Measuring part 22 notifies controller 23 of the paging traffic volume measured, the number of mobile stations 1, the volume of data of incoming calls, etc. in correspondence to the service class as a type of service quality and the paging group number. Furthermore, measuring part 22 retains the traffic volume, the number of mobile stations 1, the volume of data of incoming calls, etc. thus measured, in correspondence to the paging group number and the service class.

In the present embodiment, controller 23 is further provided with a quality acquiring means for acquiring the service quality requested by mobile station 1. Then controller 23 detects the designated paging group, based on the service quality acquired. Except for this point, controller 23 operates in much the same manner as in the first embodiment. First, controller 23 makes reference to location management table 224a on the occasion of selecting the designated paging group for a certain mobile station 1, to acquire the service class of the mobile station 1 from the mobile station ID of the mobile station 1.

Next, controller 23 acquires from the measuring part 22 the paging traffic volume at the timing of each paging group in the location registration area B in each service class, the number of mobile stations 1 belonging to each paging group in the location registration area B in each service class, and the volume of data to be transmitted at the timing of each paging group in the location registration area B in each service class. Then controller 23 determines whether the paging traffic volume in each paging group and in each service class in the location registration area B is high or low for the service class of mobile station 1, and selects a paging group judged as low. Furthermore, controller 23 may determine whether the number of mobile stations 1 in each service class belonging to each paging group in the location registration area B is large or small for the service class of mobile station 1, and select a paging group judged as small. In addition, controller 23 may determine whether the volume of data to be transmitted at the timing of each paging group in the location registration area B is high or low for the service class of mobile station 1, and select a paging group judged as low.

For example, where the paging traffic volume in the real time class for a certain paging group is high, controller 23 determines that the paging group is not suitable for the mobile station 1 in the real time class, because the paging traffic volume in the real time class is high. On the other hand, even in a case where for the same paging group, the paging traffic volume in the real time class is somewhat high but the total paging traffic volume of those in the real time class and in the non-real time class is not so high, the controller 23 determines that the paging group can be used for the mobile station 1 in the non-real time class.

Moreover, controller 23 can also perform similar control in the case where a plurality of service classes with different thresholds of loss probability are prepared. For example, where the paging traffic volume is high in a class with a high threshold of loss probability for a certain paging group, controller 23 determines that the paging group is not suitable for mobile station 1 in the class with the high threshold of loss probability, because the paging traffic volume is high in the class with the high threshold of loss probability.

On the other hand, in the case where for the same paging group, the paging traffic volume in the class with the high threshold of loss probability is somewhat high but the total paging traffic volume of those in the class with the high threshold of loss probability and in the class with the low threshold is not so high, controller 23 determines that the paging group can be used for mobile station 1 in the class with the low threshold of loss probability.

Controller 23 may also be configured to preferentially assign mobile station 1 in the real time class or in the class with the high threshold of loss probability, a paging group with low paging traffic volume in the real time class or a paging group with low paging traffic volume in the class with the high threshold of loss probability.

Where the number of mobile stations 1 in the real time class belonging to a certain paging group is large, controller 23 determines that the paging group is not suitable for mobile station 1 in the real time class, because the number of mobile stations 1 in the real time class is large.

On the other hand, in the case where for the same paging group, the number of mobile stations 1 in the real time class is somewhat large but the total number of mobile stations 1 of those in the real time class and in the non-real time class is not so large, the controller 23 determines that the paging group can be used for mobile station 1 in the non-real time class. Controller 23 can also perform similar control in the case where a plurality of service classes with different thresholds of loss probability are prepared.

Controller 23 may also be configured to preferentially assign mobile station 1 in the real time class or in the class with the high threshold of loss probability, a paging group with a small number of belonging mobile stations 1 in the real time class or a paging group with a small number of belonging mobile stations 1 in the class with the high threshold of loss probability.

Where the volume of data in the real time class to be transmitted at the timing of a certain paging group is high, controller 23 determines that the paging group is not suitable for mobile station 1 in the real time class, because the data volume is high in the real time class.

On the other hand, in the case where for the same paging group, the data volume in the real time class is somewhat high but the total data volume of those in the real time class and in the non-real time class is not so high, controller 23 determines that the paging group can be used for mobile station 1 in the non-real time class.

Controller 23 can also perform similar control in the case where a plurality of service classes with different thresholds of loss probability are prepared. Controller 23 may be configured to preferentially assign mobile station 1 in the real time class or in the class with the high threshold of loss probability, a paging group with low volume of data in the real time class to be transmitted or a paging group with low volume of data in the class with the high threshold of loss probability to be transmitted. In this manner, controller 23 selects and detects the designated paging group, based on the service quality acquired.

### (Mobile communication method)

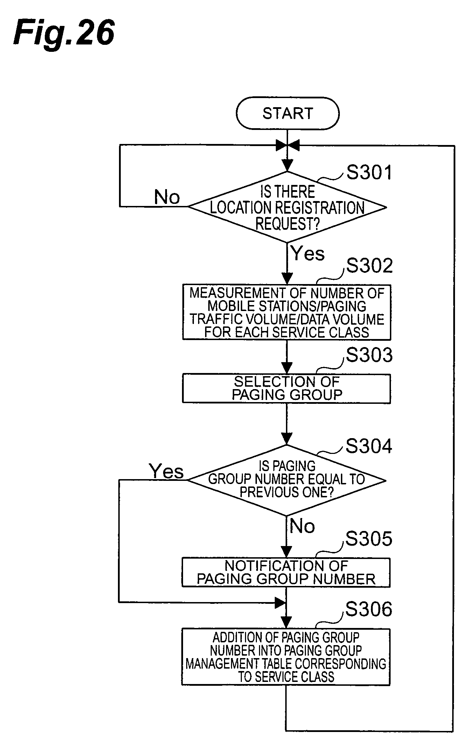

Next, the operation of location information managing server 5 will be described. The following is an example of processing in the location registration area B. Fig. 26 is a flowchart showing the operation procedure of location information managing server 5. Step (S301) is similar to step (S101). When at step (S301) there is a location registration request from mobile station 1, location information managing server 5 measures the paging traffic volume at the timing of each paging group in the location registration area B, the number of mobile stations 1 belonging to each paging group in the location registration area B, the volume of data arriving at the timing of each paging group in the location registration area B, etc. for each of the service qualities (S302). Specifically, controller 23 of location information managing server 5 performs the measurement in each of the real time class and the non-real time class.

Then location information managing server 5 acquires the service quality requested by the mobile station 1, selects a designated paging group in the location registration area B, based on the service quality and the measurement result at step (S302), and detects the paging group as a designated paging group (S303). Specifically, controller 23 of location information managing server 5 makes reference to location management table 224a to acquire the service class of the mobile station 1, acquires the paging traffic volume in each service class, the number of mobile stations 1, and the data volume from measuring part 22, and selects the designated paging group.

Steps (S304), (S305) are similar to those (S104), (S105). Finally, location information managing server 5 adds and records the paging group number of the designated paging group into either of real time class paging group management table 224b and non-real time class paging group management table 224c provided for the respective service classes (S306). For example, where the service class of mobile station 1 is the real time class, controller 23 of location information managing server 5 records the paging group number of the designated paging group in correspondence to the mobile station ID of the mobile station 1 assigned the designated paging group, into the region of the location registration area B in the real time class paging group management table 224b. Location information managing server 5 repeatedly performs the operations at the steps (S301) to (S306).

### (Effects of second embodiment)

According to the mobile communication system, location information managing server 5, and mobile communication method in the second embodiment as described above, location management table 224a retains the correspondence between mobile station IDs for identification of respective mobile stations 1 and service classes indicating the service qualities requested by the respective mobile stations 1. Database 24 is provided with such paging group management tables as real time class paging group management table 224b and non-real time class paging group management table 224c, which retain the paging group information of mobile stations 1 requesting the service quality in the real time class and the paging group information of mobile stations 1 requesting the service quality in the non-real time class, respectively.

Furthermore, measuring part 22 measures the paging traffic volume at the timing of each paging group in the location registration area B, the number of mobile stations 1 belonging to each paging group in the location registration area B, the volume of data to be transmitted at the timing of each paging group in the location registration area B, etc. for each of the service qualities.

Therefore, controller 23 is able to acquire the service quality requested by mobile station 1 with reference to the location management table 224a and acquire the paging traffic volume, the number of mobile stations 1, and the data volume for each service quality from measuring part 22, whereby the controller is able to detect the designated paging group, using the service quality of the mobile station 1 and using the paging traffic volume, the number of mobile stations 1, and the data volume for each service quality. By recording the designated paging group into real time class paging group management table 224b or into non-real time class paging group management table 224c, it is feasible to implement management of information about paging groups for each of the service qualities.

Therefore, the mobile communication system is able to detect the designated paging group in view of the service quality requested by mobile station 1, and manage it. As a result, for example, it becomes feasible to assign the designated paging group so as to prevent an incoming call with data addressed to mobile station 1 in the real time class from overflowing in the buffer of base station 2, which makes it easier for the mobile communication system to perform QoS control taking the permissible delay or the like into account. In the case where the service qualities are defined using the loss probability as a parameter, the designated paging group can be assigned so as to prevent the loss probability from exceeding the threshold of each service class. For this reason, it becomes easy for the mobile communication system to perform QoS control to keep the loss probability not more than the threshold, according to a user's charge.

### [Modification examples]

The present invention is not limited to the above embodiments and can be modified in various ways. In the above embodiments, location information managing server 5 had both the function of managing the location information of all mobile stations 1 and the function of managing all the paging group information in each location registration area, but another potential configuration is such that location information managing servers are provided in the respective location registration areas and the location information managing server in each location registration area is provided with the function of managing the location information and the function of managing the information about paging groups.

Controller 23 acquired the paging group number of the previous paging group from location registration request signal 10 which was transmitted from mobile station 1, but the controller may also be configured to acquire the paging group number of the previous paging group from paging group management table 24b before the addition of the paging group number of the designated paging group in the location registration area.

Instead of retaining the service class of mobile station 1 in location management table 224a, mobile station 1 may be configured to put the service class in location registration request signal 10.

The databases 24, 224 shown in Figs. 22A-22C and in Figs. 25A-25C were arranged based on the keys of mobile station IDs so that the paging group numbers or the location registration area IDs were correlated to the mobile station IDs, but the databases may be arranged based on keys of paging group numbers or location registration area IDs so that the mobile station IDs are correlated to them.

As database 24 shown in Figs. 22A-22C was, database 224 may also be provided with a measurement result table for retaining the result of the measurement by measuring part 22 and measuring part 22 may be configured to record the measurement result into the measurement result table.

### [(Part 3) Control processing according to state of mobile station]

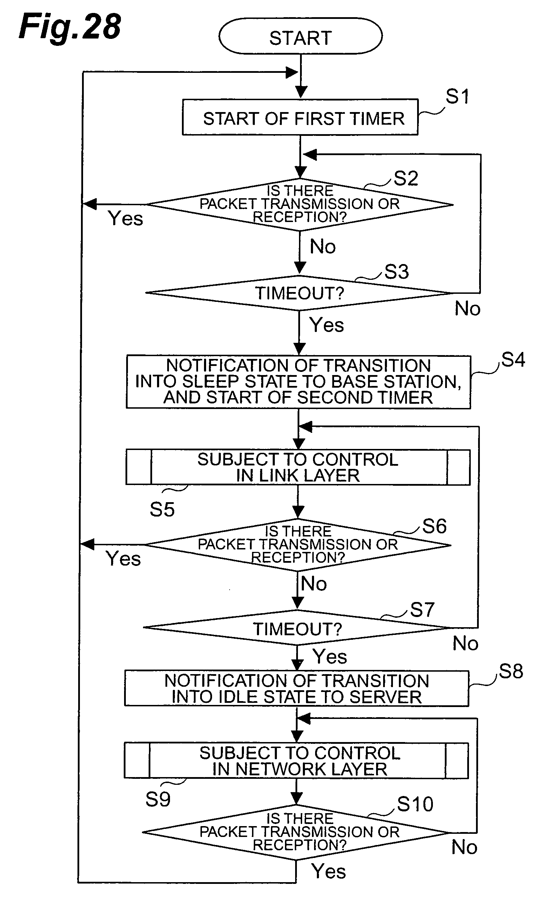

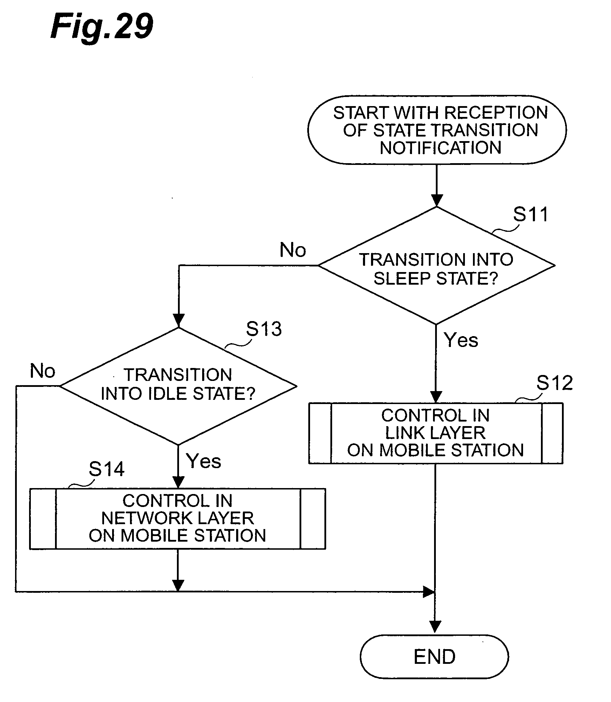

The following will describe the control processing at the location information managing server and at the base station in conjunction with notification of the state from the mobile station. Fig. 28 shows the operation procedure of the mobile station and Fig. 29 the control processing according to the state of the mobile station at the location information managing server and at the base station.

As shown in Fig. 28, the mobile station, after transmission or reception of packet, starts a timer for determining a transition of the station itself into the sleep state (hereinafter referred to as "first timer") (S1). Thereafter, if there occurs packet transmission or reception at the mobile station before a timeout of the first timer, the mobile station restarts the first timer (back to S1). On the other hand, when a timeout of the first timer occurs with neither packet transmission nor reception, the determination at S3 becomes affirmative. Then the mobile station notifies the base station of the transition of the mobile station itself into the sleep state and starts a timer for determining a transition of the mobile station itself into the idle state thereafter (hereinafter referred to as "second timer") (S4).

When receiving a notification of a state transition from the mobile station, the base station executes the process of Fig. 29 as an interrupt process. With the notification of the transition into the sleep state from the mobile station at above S4, the base station receives the notification and determines that the mobile station has moved into the sleep state (Yes at S11 in Fig. 29), and then it executes the control processing in the link layer described in Part 1, for the mobile station (S12). In this process, the control processing in the link layer is also executed in the case of a transition of the mobile station between cells.

The mobile station is subject to the control processing in the link layer as described above (S5 in Fig. 28). Thereafter, where packet transmission or reception occurs at the mobile station before a timeout of the second timer, it can be determined that the sleep state of the mobile station is released, and the mobile station restarts the first timer (back to S1). On the other hand, when a timeout of the second timer occurs with neither packet transmission nor reception, the determination at S7 becomes affirmative, and the mobile station notifies the location information managing server of a further transition of the mobile station itself into the idle state (S8).

When receiving the notification of the state transition from the mobile station, the location information managing server also executes the process of Fig. 29 as an interrupt process. With the notification of the transition into the idle state from the mobile station at above S8, the location information managing server receives the notification, determines that the mobile station has moved into the idle state (Yes at S13 in Fig. 29), and executes the control processing in the network layer described in Part 2, for the mobile station (S14). In this process, the control processing in the network layer is also executed in the case where the mobile station changes its location registration area.

The mobile station is subject to the control processing in the network layer as described above (S9 in Fig. 28). Thereafter, the control processing in the network layer (S9) is continuously executed before occurrence of packet transmission or reception. With occurrence of packet transmission or reception, it can be determined that the idle state of the mobile station is released, and the mobile station returns to S1 to restart the first timer.

In this manner, the state of the mobile station (the sleep state or the idle state) is accurately determined according to the duration where neither packet transmission nor reception is carried out at the mobile station, and the control processing in the link layer (the control processing described in Part 1) or the control processing in the network layer (the control processing described in Part 2) is executed. according to each state; therefore, it is feasible to smoothly perform management of location information of mobile stations, according to a plurality of states of the mobile station varying with time.

It is also possible to adopt a configuration in which the location information managing server is also provided with the control function in the link layer, which the base station had, and in which the location information managing server executes the entire control processing of Fig. 29.

It is also needless to mention that, as well as the above-mentioned part 3 of the combination of the control processing in the link layer with the control processing in the network layer, simply executing the aforementioned control processing in the link layer can also achieve the effect of avoiding the concentration of paging traffic on a specific reception timing and smoothing the paging traffics at the respective reception timings, the effect of implementing effective utilization of the channel and more effective battery saving than before, and the effect of avoiding concentration of mobile stations on a specific paging period and smoothing traffics among a plurality of paging periods. It is also needless to mention that simply executing the aforementioned control processing in the network layer can achieve the effect of implementing effective utilization of the channel and the effect of capability of reducing the load of paging control associated with the detection of the paging group.

### Industrial Applicability

According to the present invention, as described above, the server determines as a state of a mobile station, a state according to a duration in which neither packet transmission nor reception is carried out between the mobile station and the base station in the cell, out of a plurality of states including the sleep state or the idle state, and sets for the mobile station both or either of the paging period of the mobile station and the reception timing of intermittent reception by the mobile station, according to the state determined by the determination; therefore, it is feasible to smoothly perform management of location information of the mobile station, according to the plurality of states of the mobile station varying with time.

## Claims

1. A server, together with a plurality of mobile stations and with a plurality of base stations connected to a network, constituting a mobile communication system, being connected to the network, and being configured to manage a paging area formed by a collection of cells established by the base stations and location information of the mobile stations,
the server comprising:
determining means for determining as a state of a mobile station as mentioned, a state according to a duration in which neither packet transmission nor reception is conducted between said mobile station and a base station within the cell established thereby, out of a plurality of states including a sleep state or an idle state; and
setting means for setting for the mobile station both or either of a paging period of the mobile station and a reception timing of intermittent reception by the mobile station, according to the state acquired by the determination.

2. The server according to Claim 1, further comprising measuring-retaining means for measuring both or either of the number of mobile stations located in each paging area and having moved into said state, and paging traffics at respective reception timings of a paging channel in each paging area as mentioned, and for retaining measurement values thus measured,
wherein, where the determining means determines that a state of a mobile station is the sleep state, the setting means sets for the mobile station both or either of the paging period of the mobile station and the reception timing of intermittent reception by the mobile station, according to the retained measurement values.

3. The server according to Claim 1 or 2, further comprising:
area change detecting means for detecting a change of a location registration area on which a mobile station is under location registration; and
paging group assignment controlling means for, when the area change detecting means detects a change of the location registration area of the mobile station, selecting one paging group out of a plurality of paging groups categorized by respective timings of receiving a paging signal for the mobile stations, based on predetermined information, and for assigning the mobile station the selected paging group.

4. A mobile communication system comprising a plurality of mobile stations, a plurality of base stations connected to a network, and a server connected to the network and configured to manage a paging area formed by a collection of cells established by the base stations and location information of the mobile stations,
wherein the server comprises:
determining means for determining as a state of a mobile station as mentioned, a state according to a duration in which neither packet transmission nor reception is conducted between said mobile station and a base station within the cell established thereby, out of a plurality of states including a sleep state or an idle state; and
setting means for setting for the mobile station both or either of a paging period of the mobile station and a reception timing of intermittent reception by the mobile station, according to the state acquired by the determination.

5. A location information managing method in a server, together with a plurality of mobile stations and with a plurality of base stations connected to a network, constituting a mobile communication system, being connected to the network, and being configured to manage a paging area formed by a collection of cells established by the base stations and location information of the mobile stations,
the location information managing method comprising the steps of:
determining as a state of a mobile station as mentioned, a state according to a duration in which neither packet transmission nor reception is conducted between said mobile station and a base station within the cell established thereby, out of a plurality of states including a sleep state or an idle state; and
setting for the mobile station both or either of a paging period of the mobile station and a reception timing of intermittent reception by the mobile station, according to the state acquired by the determination.

6. A server, together with a plurality of mobile stations and with a plurality of base stations connected to a network, constituting a mobile communication system, being connected to the network, and being configured to manage a paging area formed by a collection of cells established by the base stations and location information of the mobile stations,
the server constituting the mobile communication system in which the mobile stations are configured so that a mobile station in a cell established by a base station transmits or receives a packet to or from the base station and so that, when neither packet transmission nor reception is conducted during a predetermined duration, the mobile station moves into a sleep mode of periodically receiving a signal from the base station and in which the base stations have a paging channel capable of specifying a mobile station and notifying the mobile station of arrival of a packet or capable of transmitting an incoming packet addressed to a mobile station having moved in the sleep mode and can intermittently transmit the paging channel in a predetermined period,
wherein the sleep mode comprises a plurality of sleep states according to durations in which neither packet transmission nor reception is conducted, a plurality of paging periods are prepared corresponding to the respective sleep states, and in the mobile communication system it is possible to set paging areas corresponding to the respective paging periods and reception timings of intermittent reception by the mobile stations,
the server comprising:
measuring-retaining means for measuring both or either of the number of mobile stations located in each paging area as mentioned and having moved into the sleep mode, and paging traffics at respective reception timings of the paging channel in each paging area as mentioned, and for retaining measurement values thus measured; and
change instructing means for instructing a mobile station to change both or either of a paging period and a reception timing, according to the retained measurement values, in a case where the mobile station newly moves into the sleep mode, or in a case where the mobile station previously having moved into the sleep mode changes the sleep state, or in a case where the mobile station previously having moved into the sleep mode moves into a new paging area, or in an arbitrary case determined by the server.

7. The server according to Claim 6, wherein the mobile communication system comprises servers in the respective paging areas and the servers are in a hierarchical relation based on a predetermined rule,
wherein the change instructing means of the server in each layer instructs a mobile station to change both or either of the paging period and the reception timing, according to both or either of the number of mobile stations located in the corresponding paging area and having moved into the sleep mode, and the paging traffics at the respective reception timings of the paging channel in the paging area.

8. The server according to Claim 6 or 7, further comprising recognizing-retaining means for recognizing a service class of a mobile station and for retaining the service class information,
wherein the change instructing means instructs the mobile station to change both or either of the paging period and the reception timing, further according to the service class recognized.

9. A base station, together with a plurality of mobile stations, constituting a mobile communication system,
the base station constituting the mobile communication system in which the mobile stations are configured so that a mobile station in a cell established by the base station transmits or receives a packet to or from the base station and so that, when neither packet transmission nor reception is conducted during a predetermined duration, the mobile station moves into a sleep mode of periodically receiving a signal from the base station and in which the base station has a paging channel capable of specifying a mobile station and notifying the mobile station of arrival of a packet or capable of transmitting an incoming packet addressed to a mobile station having moved in the sleep mode and can intermittently transmit the paging channel in a predetermined period,
wherein the sleep mode comprises a plurality of sleep states according to durations in which neither packet transmission nor reception is conducted, and in the mobile communication system it is possible to set paging periods corresponding to the respective sleep states and reception timings of intermittent reception by the mobile stations,
the base station comprising:
measuring-retaining means for measuring both or either of the number of mobile stations located in the cell and having moved into the sleep mode, and paging traffic of the paging channel, and for retaining measurement values thus measured; and
change instructing means for instructing a mobile station to change both or either of a paging period and a reception timing, according to the retained measurement values, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station.

10. The base station according to Claim 9, further comprising recognizing-retaining means for recognizing a service class of a mobile station and for retaining the service class information,
wherein the change instructing means instructs the mobile station to change both or either of the paging period and the reception timing, further according to the service class recognized.

11. A mobile station, together with a base station, constituting a mobile communication system, being capable of transmitting or receiving a packet to or from the base station in a cell established by the base station, and being configured to move into a sleep mode of periodically receiving a signal from the base station, in a case where neither packet transmission nor reception is conducted during a predetermined duration,
the mobile station constituting the mobile communication system in which the base station has a paging channel capable of specifying the mobile station and notifying the mobile station of arrival of a packet or capable of transmitting an incoming packet addressed to the mobile station having moved into the sleep mode, and can intermittently transmit the paging channel in a predetermined period,
wherein the sleep mode comprises a plurality of sleep states according to durations in which neither packet transmission nor reception is conducted, and in the mobile communication system it is possible to set paging periods corresponding to the respective sleep states and reception timings of intermittent reception by the mobile station,
the mobile station comprising:
change instruction receiving means for receiving from the base station, a change instruction for change of both or either of a paging period and a reception timing, according to measurement values of both or either of the number of mobile stations located in the cell and having moved into the sleep mode, and paging traffic of the paging channel, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station; and
intermittent reception controlling means for performing intermittent reception in the paging period and at the reception timing based on the change instruction.

12. A mobile station, together with a plurality of base stations connected to a network and with a server connected to the network and configured to manage a paging area formed by a collection of cells established by the base stations, and location information of mobile stations located therein, constituting a mobile communication system and being capable of transmitting or receiving a packet to or from a base station in the cell established by the base station, the mobile station being configured to move into a sleep mode of periodically receiving a signal from the base station, in a case where neither packet transmission nor reception is conducted during a predetermined duration,
the mobile station constituting the mobile communication system in which the base station has a paging channel capable of specifying the mobile station and notifying the mobile station of arrival of a packet or capable of transmitting an incoming packet addressed to the mobile station having moved into the sleep mode, and can intermittently transmit the paging channel in a predetermined period,
wherein the sleep mode comprises a plurality of sleep states according to durations in which neither packet transmission nor reception is conducted, a plurality of paging periods are prepared corresponding to the respective sleep states, and in the mobile communication system it is possible to set paging areas corresponding to the respective paging periods and reception timings of intermittent reception by the mobile station,
the mobile station comprising:
change instruction receiving means for receiving from the server, a change instruction for change of both or either of a paging period and a reception timing, according to measurement values of both or either of the number of mobile stations located in each paging area and having moved into the sleep mode, and paging traffics at respective reception timings of the paging channel in each paging area, in a case where the mobile station newly moves into the sleep mode, or in a case where the mobile station previously having moved into the sleep mode newly moves into the cell, or in a case where the mobile station previously having moved into the sleep mode changes the sleep state, or in an arbitrary case determined by the base station; and
intermittent reception controlling means for performing intermittent reception in the paging period and at the reception timing based on the change instruction.

13. A mobile communication system comprising a base station, and a plurality of mobile stations capable of transmitting or receiving a packet to or from the base station in a cell established by the base station,
in which the mobile station moves into a sleep mode of periodically receiving a signal from the base station, in a case where neither packet transmission nor reception is conducted during a predetermined duration, and
in which the base station has a paging channel capable of specifying a mobile station and notifying the mobile station of arrival of a packet or capable of transmitting an incoming packet addressed to a mobile station having moved into the sleep mode, and can intermittently transmit the paging channel in a predetermined period,
wherein the sleep mode comprises a plurality of sleep states according to durations in which neither packet transmission nor reception is conducted, and in the mobile communication system it is possible to set paging periods corresponding to the respective sleep states and reception timings of intermittent reception by the mobile stations,
wherein the base station comprises:
measuring-retaining means for measuring both or either of the number of mobile stations located in the cell and having moved into the sleep mode, and paging traffic of the paging channel, and for retaining measurement values thus measured; and
change instructing means for instructing a mobile station to change both or either of a paging period and a reception timing, according to the measurement values retained, in a predetermined case,
wherein the mobile stations comprise:
intermittent reception controlling means for performing intermittent reception in the paging period and at the reception timing based on the change instruction.

14. A mobile communication system comprising a plurality of mobile stations, a plurality of base stations connected to a network, and a server connected to the network and configured to manage a paging area formed by a collection of cells established by the base stations and location information of the mobile stations,
in which the mobile stations are configured to move into a sleep mode of periodically receiving a signal from the base station, in a case where neither packet transmission nor reception is conducted during a predetermined duration, and
in which the base stations have a paging channel capable of specifying a mobile station and notifying the mobile station of arrival of a packet or capable of transmitting an incoming packet addressed to a mobile station having moved into the sleep mode, and can intermittently transmit the paging channel in a predetermined period,
wherein the sleep mode comprises a plurality of sleep states according to durations in which neither packet transmission nor reception is conducted, a plurality of paging periods are prepared corresponding to the respective sleep states, and in the mobile communication system it is possible to set paging areas corresponding to the respective paging periods and reception timings of intermittent reception by the mobile stations,
wherein the server comprises:
measuring-retaining means for measuring both or either of the number of mobile stations located in each paging area and having moved into the sleep mode, and paging traffics at respective reception timings of the paging channel in each paging area, and for retaining measurement values thus measured; and
change instructing means for instructing a mobile station to change both or either of a paging period and a reception timing, according to the measurement values retained, in a predetermined case,
wherein the mobile stations comprise intermittent reception controlling means for performing intermittent reception in the paging period and at the reception timing based on the change instruction.

15. A paging method in a mobile communication system comprising a base station, and a plurality of mobile stations capable of transmitting or receiving a packet to or from the base station in a cell established by the base station,
in which the mobile stations are configured to move into a sleep mode of periodically receiving a signal from the base station, in a case where neither packet transmission nor reception is conducted during a predetermined duration, and
in which the base station has a paging channel capable of specifying a mobile station and notifying the mobile station of arrival of a packet or capable of transmitting an incoming packet addressed to a mobile station having moved into the sleep mode, and can intermittently transmit the paging channel in a predetermined period,
wherein the sleep mode comprises a plurality of sleep states according to durations in which neither packet transmission nor reception is conducted, and in the mobile communication system it is possible to set paging periods corresponding to the respective sleep states and reception timings of intermittent reception by the mobile stations,
wherein the base station instructs a mobile station to change both or either of a paging period and a reception timing, according to both or either of the number of mobile stations existing in the cell and having moved into the sleep mode, and paging traffic of the paging channel, in a predetermined case,
wherein the mobile station performs intermittent reception in the paging period and at the reception timing based on the change instruction.

16. A paging method in a mobile communication system comprising a plurality of mobile stations, a plurality of base stations connected to a network, and a server connected to the network and configured to manage a paging area formed by a collection of cells established by the base stations and location information of the mobile stations,
in which the mobile stations are configured to move into a sleep mode of periodically receiving a signal from the base station, in a case where neither packet transmission nor reception is conducted during a predetermined duration, and
in which the base stations have a paging channel capable of specifying a mobile station and notifying the mobile station of arrival of a packet or capable of transmitting an incoming packet addressed to a mobile station having moved into the sleep mode, and can intermittently transmit the paging channel in a predetermined period,
wherein the sleep mode comprises a plurality of sleep states according to durations in which neither packet transmission nor reception is conducted, a plurality of paging periods are prepared corresponding to the respective sleep states, and in the mobile communication system it is possible to set paging areas corresponding to the respective paging periods and reception timings of intermittent reception by the mobile stations,
wherein the server instructs a mobile station to change both or either of a paging period and a reception timing, according to both or either of the number of mobile stations located in each paging area and having moved into the sleep mode, and paging traffics at respective reception timings of the paging channel in each paging area, in a predetermined case,
wherein the mobile station performs intermittent reception in the paging period and at the reception timing based on the change instruction.

17. A server comprising:
paging group detecting means for detecting one paging group out of a plurality of paging groups categorized by respective timings of receiving a paging signal for a mobile station, based on predetermined information; and
area change detecting means for detecting a change of a location registration area on which the mobile station is under location registration,
wherein, where the area change detecting means detects a change of the location registration area of the mobile station, the paging group detecting means assigns the mobile station the paging group detected.

18. The server according to Claim 17, wherein the area change detecting means comprises paging group acquiring means for acquiring a previous paging group assigned to the mobile station, when detecting a change of the location registration area of the mobile station,
wherein the paging group detecting means determines whether the previous paging group acquired by the paging group acquiring means is identical to or different from the detected paging group, and assigns the mobile station the detected paging group only if they are different.

19. The server according to Claim 17 or 18, comprising traffic volume measuring means for measuring paging traffic volumes at timings of the respective paging groups in the location registration area,
wherein the paging group detecting means detects said paging group, based on a result of the measurement by the traffic volume measuring means.

20. The server according to Claim 17 or 18, comprising number-of-mobile-stations measuring means for measuring the numbers of mobile stations belonging to the respective paging groups in the location registration area,
wherein the paging group detecting means detects said paging group, based on a result of the measurement by the number-of-mobile-stations measuring means.

21. The server according to Claim 17 or 18, comprising data volume measuring means for measuring volumes of data to be transmitted at timings of the respective paging groups in the location registration area,
wherein the paging group detecting means detects said paging group, based on a result of the measurement by the data volume measuring means.

22. The server according to one of Claims 17 to 21, wherein the paging group detecting means comprises quality acquiring means for acquiring a service quality requested by the mobile station,
wherein the paging group detecting means detects said paging group, based on the service quality acquired by the quality acquiring means.

23. A mobile station comprising:
requesting means for, at a time of moving into a location registration area different from a location registration area on which the mobile station is under location registration, detecting the movement and requesting a change of the location registration area; and
setting changing means for changing setting of a paging group according to information notified of, when receiving an information signal from a base station,
wherein, where paging group information is included in information notified of by the base station when the requesting means requests the change of the location registration area, the setting changing means changes the setting of the paging group.

24. The mobile station according to Claim 23,
wherein, where the paging group information is not included, the setting changing means continuously uses a paging group to which the mobile station belonged before the change of the location registration area.

25. A mobile communication system comprising:
paging group detecting means for detecting one paging group out of a plurality of paging groups categorized by respective timings of receiving a paging signal for a mobile station, based on predetermined information; and
area change detecting means for detecting a change of a location registration area on which the mobile station is under location registration,
wherein when the area change detecting means detects a change of the location registration area of the mobile station, the paging group detecting means assigns the mobile station the paging group detected.

26. A mobile communication method comprising:
a step of detecting one paging group out of a plurality of paging groups categorized by respective timings of receiving a paging signal for a mobile station, based on predetermined information;
a step of detecting a change of a location registration area on which the mobile station is under location registration; and
a step of, when detecting a change of the location registration area of the mobile station, assigning the mobile station the paging group detected.
